# EUROPEAN PATENT APPLICATION

(11) **EP 2 000 969 A2**
(43) Date of publication of application: **10.12.2008**
(21) Application number: 07739042.5
(22) Date of filing: 20.03.2007
(51) Int. Cl.: G06Q 30/00

(54) **INFORMATION COMMUNICATION SYSTEM, FACILITY SIDE DEVICE, USER SIDE DEVICE, MANAGEMENT DEVICE, VEHICLE SIDE DEVICE, FACILITY SIDE PROGRAM, USER SIDE PROGRAM, MANAGEMENT PROGRAM, AND VEHICLE SIDE PROGRAM**

(30) Priority: 28.03.2006 JP 2006088665; 28.12.2006 JP 2006354760
(71) Applicant: Denso Corporation, Kariya City Aichi 448-8661 (JP)
(72) Inventor: IKEDA, Hirotane, Aichi 448-8661 (JP)
(74) Representative: Winter, Brandl, Fürniss, Hübner Röss, Kaiser, Polte Partnerschaft Patent- und Rechtsanwaltskanzlei
(86) International application number: PCT/JP2007/055599
(87) International publication number: WO 2007/111190

(57) **Abstract**

A user device notifies a facility apparatus of the user driving status in the vehicle (S320). The facility apparatus receives that notification and exchanges status information with a management apparatus to specify a service corresponding to the driving status indicated by the status information (S330 through S360). The facility apparatus notifies the user carrying the user device of candidate services for the specified service (S370). By notifying the facility apparatus via the user device with information such as the driving status (status information) in the vehicle, information on candidate services to provide to the user can be reported for efficient usage of information.

## Description

### FIELD OF THE INVENTION

The present invention relates to an information communication system.

### BACKGROUND OF THE INVENTION

A system disclosed in the prior art (see patent document 1: JP 2002-120670A) proposes providing a user-specified driving environment to a vehicle by utilizing a user device (IC card) that stores the user-specified driving environment and then loads that driving environment via a vehicle apparatus (onboard device) to provide the vehicle with the user's driving environment.

This system easily recreates a driving environment ideal for each user by configuring the user-specified driving environment within the vehicle. This communication system however was intended to recreate a predetermined driving environment and no consideration whatsoever was given to effective use outside the vehicle of user-related information provided by the user device

Another information communication system disclosed in the prior art (see patent document 2: JP-2006-4180A) proposes a system for allowing specified shops (dealers) to provide services to individual users. This information communication system includes a vehicle, a user terminal carried by the user, and a customer information computer provided at the dealer and capable of short-distance radio communication. This system would provide services when the user visits the dealer, according to information accumulated in the user vehicle acquired by radio and/or would transmit information of various types between the vehicle and user terminal.

However, these information communication systems utilize the user-related information only at a specified facility (dealer) and no consideration whatsoever is given to effective use of this information at multiple facilities.

### SUMMARY OF THE INVENTION

In view of the above problems, the present invention has an object of providing an information communication system capable of supplying information specially made for the combination of the user and the facilities being used, in situations where the user utilizes multiple facilities.

To achieve the above-mentioned object, an information communication system according to a first aspect of the present invention includes a user device possessed by a user and a facility apparatus provided at a facility the user may visit. The user device is capable of communicating with each facility apparatus provided at each of multiple facilities. The information communication system further includes an information output unit. The information output unit establishes the condition that the user device and any of the facility apparatus initiate or maintain a communication status. Under this condition, the information output unit outputs information appropriate to both a user having the communicating user device and a facility provided with the communicating facility apparatus as special information for the user. In a mode where a user carrying the user device uses multiple facilities, the information communication system can output special information for the combination of the user using a facility and the facility for use. Consequently, by utilizing this special information, the system promotes effective use of the facility.

The information appropriate to both the user and the facility as referred to here matches information relating to the user and information relating to the facility. Namely, the information corresponds to both the user and the facility. In other words, the information is identified by a combination of the user and the facility or is specific to the combination. This expression can also apply to the other aspects.

According to a second aspect, the special information output from the information output unit as referred to here, includes information about services to be provided to the user having the user device as the communication destination of the facility apparatus. This type of system outputs special information about services for the combination of the user using a facility and the facility for use. Each of facilities can provide the user with proper services.

According to a third aspect, the information output unit sends information bulletins. Information communication system users (e.g., a user owing the user device and personnel at the facility) can therefore understand the contents of the special information made appropriate to both the user and the facility.

The information communication system according to a fourth aspect is structured so that a facility apparatus establishes communication with a user device possessed by a nearby user who visits the facility possessing the facility apparatus. In other words, among combinations of the multiple users and facilities in this system, the information communication system outputs special information just for the combination of the user visiting a facility and that facility. The system therefore efficiently outputs just the necessary special information.

The information communication system according to a fifth aspect is structured so that the facility apparatus is capable of radio communication with the user device. Special information can therefore be output without the user being aware of it.

The information communication system according to a sixth aspect includes a special information storage unit that can store multiple pieces of special information. The information output unit acquires special information from this special information storage unit and outputs that information. The special information is appropriate to both a user having the communicable user device and a facility with the facility apparatus. This type of information communication system allows the special information storage unit to store detailed special information. Detailed special information can therefore be output for the particular combination of the user using a facility and the facility to be used.

According to a seventh aspect, the special information storage unit stores special information based on the user's facility usage history. Special information can therefore be output that reflects the user's usage history.

According to an eighth aspect, a history information registration unit of the facility apparatus allows the special information storage unit to store special information based on the user's facility usage history corresponding to the facility apparatus. Information can in this way be efficiently stored based on the history.

In the information communication system, the information output unit and the special information storage unit can be provided for the user device, the facility, or other apparatus. More specifically, the system can be structured according to ninth, 12th, 20th, 22nd, 26th, and 34th aspects.

The information communication system according to the ninth aspect includes a management apparatus that can communicate with at least one of the user device and the facility apparatus. The management apparatus includes a special information storage unit. The facility apparatus includes an information output unit. The information output unit acquires from the management apparatus, special information specified based on user information stored in the user device as a communication destination, and facility information stored in the facility information storage unit. In this type of information communication system, the facility apparatus can acquire and output special information specially made for the combination of the facility with the facility apparatus and the user using the facility. The information communication system allows the management apparatus to jointly manage special information about multiple users and facilities. The information can therefore be efficiently managed without needing to store a large amount of information in the user device and elsewhere.

The information communication system according to the ninth aspect can be structured in accordance for example with 10th and 11th aspects. In the information communication system according to the 10th aspect, a user information transmission unit of the user device transmits the user information stored in the user information storage unit to the facility apparatus as a communication destination. A special information reply unit in the management apparatus verifies user information and facility information received from the facility apparatus. Based on a verification result, the special information reply unit acquires special information as information appropriate to both a user corresponding to the received user information and a facility corresponding to the received facility information from a special information storage unit and transmits the special information to the facility apparatus. The information output unit of the facility apparatus can in this way acquire the special information from the management apparatus.

In the information communication system according to an 11th aspect, a special information transmission request unit of the user device receives facility information from the facility apparatus. In this case, the special information transmission request unit transmits the received facility information and user information stored in the user information storage unit to the management apparatus. The special information transmission request unit also allows the management apparatus to transmit specified special information to the facility apparatus as a communication destination of the user device. A special information transmission unit of the management apparatus verifies the user information and facility information received from the user device. Based on a verification result, the special information transmission unit acquires special information as information appropriate to both a user corresponding to the received user information and a facility corresponding to the received facility information from a special information storage unit and transmits the special information to the facility apparatus. The information output unit of the facility apparatus in this way acquires the special information from the management apparatus.

The information communication system according to a 12th aspect includes a management apparatus that communicates with at least one of the user device and the facility apparatus. The management apparatus includes a special information storage unit. The user device includes an information output unit. The information output unit acquires, from the management apparatus, special information specified based on user information stored in the user information storage unit and facility information stored in the facility apparatus as a communication destination. In this type of information communication system, the user device can acquire and output the special information specially made for the combination of the user owing the user device and the facility used by the user. The information communication system allows the management apparatus to jointly manage special information about the multiple users and facilities. This information can be efficiently managed without needing to store a large amount of information in the user device and elsewhere.

The information communication system according to the 12th aspect can be structured for example in accordance with 13th and 14th aspects. In the information communication system according to the 13th aspect, a facility information transmission unit of the facility apparatus transmits the facility information stored in the facility information storage unit to the user device as a communication destination. A special information reply unit of the management apparatus verifies the user information and facility information received from the user device. Based on a verification result, the special information reply unit acquires special information as information appropriate to both a user corresponding to the received user information and a facility corresponding to the received facility information from the special information storage unit and transmits the special information to the user device. As a result, the information output unit of the user device acquires the special information from the management apparatus.

In the information communication system according to the 14th aspect, a special information transmission request unit of the facility apparatus may receive user information from the user device. In this case, the special information transmission request unit transmits the received user information and the facility information stored in the facility information storage unit to the management apparatus. The special information transmission request unit further allows the management apparatus to transmit specified special information to the user device as a communication destination of the facility apparatus. A special information transmission unit of the management apparatus verifies the user information and facility information received from the facility apparatus. Based on a verification result, the special information transmission unit acquires special information as information appropriate to both a user corresponding to the received user information and a facility corresponding to the received facility information from the special information storage unit and transmits the special information to the user device. As a result, the information output unit of the user device acquires the special information from the management apparatus.

In the information communication system according to a 15th aspect, a bulletin information transmission unit of the facility apparatus, transmits bulletin information to the management apparatus, in other words, also to be transmitted to the user. Based on the special information stored in the special information storage unit, a selective transmission unit of the management apparatus selects a user to whom the bulletin information received from the facility apparatus is to be transmitted. The selective transmission unit transmits the bulletin information to a user device of the selected user. This type of information communication system can select a user device as a transmission destination based on the special information and efficiently transmit the bulletin information from the facility apparatus to the user device.

According to a 16th aspect, the user information stored in the user information storage unit includes identification information capable of identifying a user who owns the user device. This type of user information can be used to acquire the special information corresponding to individual users.

According to a 17th aspect, the user information stored in the user information storage unit includes registration information registered for the user who owns the user device. This type of user information can be used to acquire the special information corresponding to the registration information without being limited to information corresponding to individual users. In this case, according to an 18th aspect, information about the user can be easily registered by providing a registration information input unit capable of supplying information about a user; and a user information registration unit for allowing the user information storage unit to store registration information as information supplied by the registration information input unit.

According to a 19th aspect, the user information stored in the user information storage unit includes status information indicating the status of a user who owns the user device. This type of user information can be used to output the special information corresponding to the user's real-time status.

In the information communication system according to a 20th aspect, the user device includes a special information storage unit. The facility device contains an information output unit that acquires special information specified based on facility information stored in the facility information storage unit from the user device as a communication destination. In this type of information communication system, the facility apparatus can acquire and output the special information specially made for the combination of the facility with a facility apparatus and the user using the facility. The information communication system allows the user device to manage special information about multiple facilities. There is no need to separately provide an apparatus (management apparatus) for jointly managing the special information, so the structure of the information communication system can be simplified.

The information communication system according to the 20th aspect can be structured in accordance with a 21st aspect. In the information communication system according to the 21 st aspect, an information output unit of the facility apparatus transmits the facility information stored in the facility information storage unit to the user device as a communication destination. Based on the facility information received from the facility apparatus, a special information reply unit of the user device acquires special information as information appropriate to both a user having the user device and a facility corresponding to the received facility information from the special information storage unit, and transmits the special information to the facility apparatus. The information output unit of the facility apparatus can therefore acquire the special information from the user device.

In the information communication system according to the 22nd aspect, the user device includes a special information storage unit. The user device includes an information output unit that acquires special information specified based on facility information stored in the facility apparatus as the communication destination from the special information storage unit. In this type of information communication system, the user device can acquire and output the special information specially made for the combination of the user having the user device and the facility used by the user. The information communication system allows the user device to manage special information about the multiple facilities. There is no need to separately provide an apparatus (management apparatus) for jointly managing the special information, so the structure of the information communication system can be simplified.

The information communication system according to the 22nd aspect can be structured in accordance with a 23rd aspect. In the information communication system according to the 23rd aspect, a facility information transmission unit of the facility apparatus transmits the facility information stored in the facility information storage unit to a user device as the communication destination. Based on facility information received from the facility apparatus, an information output unit of the user device acquires special information as information appropriate to both a user having the user device and a facility corresponding to the received facility information from the special information storage unit.

In the information communication system according to a 24th aspect, the user device includes a user information storage unit that stores status information indicating the status of user having the user device as user information about the user. The information output unit acquires, from the special information storage unit, special information specified based on user information stored in the user device as the communication destination of the facility apparatus. This type of information communication system can output special information corresponding to the user's real-time status.

The information communication system according to a 25th aspect further includes a vehicle apparatus mounted on a vehicle communicable with the user device. In the vehicle apparatus, a status detection unit detects a status of at least one of the user in a vehicle and the vehicle status. A vehicle transmission unit transmits status information indicating a status detected by the status detection unit to the user device. The user information storage unit stores the status information received from the vehicle apparatus as the user information. This type of information communication system can in this way acquire special information corresponding to the status of at least one the user in a vehicle and the vehicle.

The information communication system according to a 26th aspect includes: a vehicle apparatus mounted on a vehicle communicable with a user device; and a management apparatus communicable with at least one of the user device, a facility apparatus, and the vehicle apparatus. The management apparatus includes a special information storage unit. The vehicle apparatus includes an information output unit that acquires from the management apparatus, verification results of user information and facility information made by the management apparatus. In this type of information communication system, the vehicle apparatus can acquire and output the special information specially made for the combination of the user using a facility and the facility used by the user. The information communication system allows the management apparatus to jointly manage special information about multiple users and facilities. Information can therefore be efficiently managed without needing to store a large amount of information in the user device and elsewhere.

The information communication system according to the 26th aspect can be structured according to 27th and 28th aspects. In the information communication system according to the 27th aspect, a user information transmission unit of the user device transmits the user information stored in the user information storage unit to a facility apparatus as the communication destination. A special information transmission request unit of the facility apparatus transmits the user information received from the user device and facility information stored in the facility information storage unit to the management apparatus and allows the management apparatus to transmit specified special information to the vehicle apparatus. The special information transmission unit of the management apparatus verifies the user information and facility information received from the facility apparatus. Based on verification results, the special information transmission unit acquires special information as information appropriate to both a user corresponding to the received user information and a facility corresponding to the received facility information from the special information storage unit and transmits the special information to the vehicle apparatus. The information output unit of the vehicle apparatus in this way acquires the special information from the management apparatus.

In the information communication system according to the 28th aspect, a facility information transmission unit of the facility apparatus transmits the facility information stored in the facility information storage unit to a user device as the communication destination. A special information transmission request unit of the user device transmits the facility information received from the facility apparatus and the user information stored in a user information storage unit to the management apparatus, and allows the management apparatus to transmit specified special information to the vehicle apparatus. A special information transmission unit of the management apparatus verifies the user information and facility information received from the user device. Based on verification results, the special information transmission unit acquires special information as information appropriate to both a user corresponding to the received user information and a facility corresponding to the received facility information from the special information storage unit and transmits the special information to the vehicle apparatus. The information output unit of the vehicle apparatus in this way acquires the special information from the management apparatus.

In the information communication system according to a 29th aspect, a bulletin information transmission unit of the facility apparatus transmits to the management apparatus, the bulletin information to be transmitted to a user. Based on special information stored in the special information storage unit, a selective transmission unit of the management apparatus selects a user to whom the bulletin information received from the facility apparatus is to be transmitted. The selective transmission unit transmits the bulletin information to a user device of the selected user. This type of information communication system can select a user device as a transmission destination based on the special information and efficiently transmit the bulletin information from the facility apparatus to the user device.

According to a 30th aspect, the user information stored in the user information storage unit includes identification information capable of identifying the user who owns the user device. This type of user information can be used to acquire the special information corresponding to individual users.

According to a 31st aspect, the user information stored in the user information storage unit includes registration information registered for the user who owns the user device. This type of user information can be used to acquire the special information corresponding to the registration information without being limited to information corresponding to individual users. In this case, according to a 32nd aspect, information about the user can be easily registered by providing a registration information input unit capable of supplying information about the user; and a user information registration unit for allowing the user information storage unit to store registration information as information supplied by the registration information input unit.

According to a 33rd aspect, the user information stored in the user information storage unit includes status information indicating a status of the user who owns the user device. This type of user information can be used to output the special information corresponding to the user's real-time status.

The information communication system according to a 34th aspect further includes a vehicle apparatus mounted on a vehicle communicable with the user device. The user device includes a special information storage unit. The vehicle apparatus contains an information output unit that acquires special information specified based on facility information stored in a facility apparatus as the communication destination of the user device from the user device. In this type of information communication system, the vehicle apparatus can acquire and output the special information specially made for the combination of the user using a facility and the facility used by the user. The information communication system allows the user device to manage special information about multiple facilities. There is no need to separately provide an apparatus (management apparatus) for jointly managing the special information so the structure of the information communication system can be simplified.

The information communication system according to the 34th aspect can be structured according to a 35th aspect. In the information communication system according to the 35th aspect, a special information transmission request unit of the facility apparatus transmits the facility information stored in the facility information storage unit to a user device as the communication destination, and allows the user device to transmit specified special information to the vehicle apparatus. Based on the facility information received from the facility apparatus, a special information transmission unit of the user device acquires special information as information appropriate to both a user having the user device and a facility corresponding to the received facility information from the special information storage unit and transmits the special information to the vehicle apparatus. The information output unit of the vehicle apparatus in this way acquires the special information from the user device.

In the information communication system according to a 36th aspect, the user device includes a user information storage unit that stores status information indicating the status of a user having the user device as user information about the user. The information output unit acquires, from the user device, special information specified based on the user information stored in the user device as the communication destination of the facility apparatus, and the facility information stored in the facility apparatus. This type of information communication system can output special information corresponding to the user's real-time status.

In the information communication system according to a 37th aspect, a status detection unit of the vehicle apparatus detects a status of at least one of the user in a vehicle and the vehicle. A vehicle transmission unit transmits the status information indicating a status detected by the status detection unit to the user device. The user information storage unit stores the status information received from the vehicle apparatus as user information. This type of information communication system can acquire special information corresponding to the status of at least one of a user in a vehicle and the vehicle.

According to a 38th aspect, the status detection unit can be structured to detect the status of a user driving a vehicle from among the vehicle occupants. According to a 39th aspect, the status detection unit is structured to detect the driving status as the status of the user driving the vehicle. Special information can therefore be acquired according the driving status.

According to a 40th aspect, the vehicle transmission unit can be structured to transmit status information detected by the status detection unit to the user device at a specified timing. In a preferred structure according to a 41st aspect, an unloading detection unit in the vehicle apparatus detects that the user has left the vehicle based on a vehicle operation status. When the unloading detection unit detects the user has left the vehicle, the vehicle transmitter unit transmits the status information to the user device. The vehicle apparatus can in this way efficiently transmit the status information to the user device.

According to a 42nd aspect, the status information stored in the user information storage unit includes biometric information about the user having the user device. Utilizing this biometric information makes it possible to accurately evaluate the user status. This aspect can therefore acquire special information appropriate to the user's status.

In the information communication system according to a 43rd aspect, the information output unit acquires the special information specified based on user information as special information associated with user information belonging to an approximate range of the user information. This type of information communication system can acquire effective special information even when the special information storage unit does not store special information strictly corresponding to the user information. According to a 44th aspect, it may be preferable to acquire special information so that user information associated with the special information approximates the user information stored in the user information storage unit at a level of a specified threshold value or larger.

In the information communication system according to a 45th aspect, the special information storage unit is structured to be capable of storing special information about multiple facilities belonging to different facility types. Even when a user visits various facilities belonging to different facility types, the information communication system can output special information specially made for the combination of the user and the facility. In other words, the special information can be output independently of the type of business.

According to a 46th aspect, the facility information storage unit may store the facility information as information about the type of facility possessing the facility apparatus. The information output unit can in this way acquire special information corresponding to the facility type. Accordingly, effective special information can be acquired even when the special information storage unit does not store the special information corresponding to the same facility. Special information specially made for the combination of the user and facility can therefore be output even when the user visits the facility for the first time.

An information communication system according to a 47th aspect includes a user device, a facility apparatus, and a management apparatus. The information communication system transmits to the management apparatus, the user information stored in the user device and the facility information stored in the facility apparatus under the condition that the user device and any facility apparatus initiate or maintain communication. The management apparatus verifies the received user information and facility information. Based on the verification results, the management apparatus specifies information appropriate to both a user having a communicating user device and a facility possessing the facility apparatus as special information for the user from the special information storage unit. The facility apparatus outputs the result specified by the management apparatus. This type of information communication system can provide an effect equivalent to the information communication system according to the ninth aspect.

An information communication system according to a 48th aspect includes a user device, a facility apparatus, and a management apparatus. The information communication system transmits the user information stored in the user device and the facility information stored in the facility apparatus to the management apparatus under the condition that the user device and any facility apparatus initiate or maintain communication. The management apparatus verifies the received user information and facility information and, based on the verification results, specifies information appropriate to both a user having the communicating user device and the facility possessing the communicating facility apparatus as special information for the user from the special information storage unit. The user device outputs the result specified by the management apparatus. This type of information communication system can provide an effect equivalent to the information communication system according to the 12th aspect.

An information communication system according to a 49th aspect includes a user device, a facility apparatus, a management apparatus, and a vehicle apparatus. The information communication system transmits the user information (status information detected in a vehicle) stored in the user device and the facility information stored in the facility apparatus to the management apparatus under the condition that the user device and any facility apparatus initiate or maintain communication. The management apparatus verifies the received user information and facility information and, based on verification results, specifies information appropriate to both a user having the communicating user device and a facility possessing the communicating facility apparatus as special information for the user from the special information storage unit. The facility apparatus outputs the result specified by the management apparatus. This type of information communication system can acquire special information corresponding to the status of at least one of the user in a vehicle and the vehicle.

A facility apparatus according to a 50th aspect is used for an information communication system including a user device, a facility apparatus, and a management apparatus. In the information communication system, a user information transmission unit of the user device transmits the user information stored in a user information storage unit to the facility apparatus as the communication destination. A special information reply unit of the management apparatus verifies the user information and facility information received from the facility apparatus. Based on the verification results, the special information reply unit acquires special information as information appropriate to both a user corresponding to the received user information and a facility corresponding to the received facility information from a special information storage unit and transmits the special information to the facility apparatus. In the information communication system, an information output unit of the facility apparatus transmits the user information received from the user device and facility information stored in the facility information storage unit to the management apparatus, acquires the special information from the management apparatus, and outputs it. This type of facility apparatus can establish the above-described information communication system according to the tenth aspect, and provide the above-described effect.

A facility apparatus according to a 51 st aspect is used for an information communication system including a user device, a facility apparatus, and a management apparatus. In the information communication system, a special information transmission unit of the management apparatus verifies the user information and facility information received from the user device. Based on verification results, the special information transmission unit acquires special information as information appropriate to both a user corresponding to the received information and a facility corresponding to the received facility information from a special information storage unit and transmits the special information to the facility apparatus. A special information transmission request unit of the user device transmits the facility information received from the facility apparatus and the user information stored in the user information storage unit to the management apparatus and allows the management apparatus to transmit special information to the facility apparatus from which the facility information was received. In the information communication system, an information output unit in the facility apparatus transmits the facility information stored in the facility information storage unit to the user device as the communication destination, acquires the special information from the management apparatus, and outputs it. This type of facility apparatus can establish the above-described information communication system according to the 11th aspect, and provide the above-described effect.

A facility apparatus according to a 52nd aspect is used for an information communication system including a user device, a facility apparatus, and a management apparatus. In the information communication system, a special information reply unit of the management apparatus verifies the user information and facility information received from the user device. Based on the verification results, the special information reply unit acquires special information as information appropriate to both a user corresponding to the received user information and a facility corresponding to the received facility information from a special information storage unit and transmits the special information to the user device. An information output unit of the user device transmits the facility information received from the facility apparatus and the user information stored in the user information storage unit to the management apparatus, acquires special information from the management apparatus, and outputs it. In the information communication system, a facility information transmission unit of the facility apparatus transmits the facility information stored in the facility information storage unit to the user device as the communication destination. This type of facility apparatus can establish the above-described information communication system according to the 13th aspect and provide the above-described effect.

A facility apparatus according to a 53rd aspect is used for an information communication system including a user device, a facility apparatus, and a management apparatus. In the information communication system, a special information transmission unit of the management apparatus verifies the user information and facility information received from the facility apparatus. Based on the verification results, the special information transmission unit acquires special information as information appropriate to both a user corresponding to the received user information and a facility corresponding to the received facility information from a special information storage unit and transmits the special information to the user device. An information output unit of the user device transmits the user information stored in the user information storage unit to a facility apparatus as the communication destination, acquires special information from a management apparatus, and outputs it. In the information communication system, a special information transmission request unit of the facility apparatus transmits the user information received from the user device and facility information stored in the facility information storage unit to the management apparatus and allows the management apparatus to transmit the special information to the user device. This type of facility apparatus can establish the above-described information communication system according to the 14th aspect and provide the above-described effect.

A facility apparatus according to a 54th aspect is used for an information communication system including a user device and a facility apparatus. In the information communication system, a special information reply unit of the user device, based on facility information received from the facility apparatus, acquires special information as information appropriate to both a user having the user device and a facility corresponding to the received facility information from a special information storage unit and transmits the special information to the facility apparatus. In the information communication system, an information output unit of the facility apparatus transmits the facility information stored in the facility information storage unit to the user device as the communication destination, acquires the special information from the user device, and outputs it. This type of facility apparatus can establish the above-described information communication system according to the 21st aspect and provide the above-described effect.

According to a 55th aspect, the user device includes a user information storage unit that stores status information indicating a status of a user having the user device as user information about the user. The information output unit of the facility apparatus may acquire and output special information specified based on user information stored in the user device as the communication destination. This aspect can output special information corresponding to the user's real-time status.

A facility apparatus according to a 56th aspect is used for an information communication system including a user device and a facility apparatus. In the information communication system, an information output unit of the user device is based on facility information received from the facility apparatus, acquires special information as information appropriate to both a user having the user device and a facility corresponding to the received facility information from a special information storage unit, and outputs the special information. In the information communication system, a facility information transmission unit of the facility apparatus transmits the facility information stored in the facility information storage unit to the user device as the communication destination. This type of facility apparatus can establish the above-described information communication system according to the 23rd aspect and provide the above-described effect.

A facility apparatus according to a 57th aspect is used for an information communication system including a user device, a facility apparatus, a vehicle apparatus, and a management apparatus. In this information communication system, a user information transmission unit of the user device transmits the user information stored in the user information storage unit to a facility apparatus as the communication destination. A special information transmission unit of the management apparatus verifies the user information and facility information received from the facility apparatus. Based on the verification results, the special information transmission unit acquires special information as information appropriate to both a user corresponding to the received user information and a facility corresponding to the received facility information from a special information storage unit and transmits the special information to the vehicle apparatus. An information output unit of the vehicle apparatus acquires special information from a management apparatus and outputs it. In the information communication system, a special information transmission request unit of the facility apparatus transmits the user information received from the user device and facility information stored in the facility information storage unit to the management apparatus and allows the management apparatus to transmit the special information to the vehicle apparatus. This type of facility apparatus can establish the above-described information communication system according to the 27th aspect and provide the above-described effect.

A facility apparatus according to a 58th aspect is used for an information communication system including a user device, a facility apparatus, a vehicle apparatus, and a management apparatus. In this information communication system, a special information transmission unit of the management apparatus verifies the user information and facility information received from the user device. Based on verification results, the special information transmission unit acquires special information as information appropriate to both a user corresponding to the received user information and a facility corresponding to the received facility information from a special information storage unit and transmits the special information to the vehicle apparatus. A special information transmission request unit of the user device transmits the facility information received from the facility apparatus and the user information stored in the user information storage unit to the management apparatus and allows the management apparatus to transmit special information to the vehicle apparatus. An information output unit of the vehicle apparatus acquires the special information from the management apparatus and outputs it. In the information communication system, a facility information transmission unit of the facility apparatus transmits the facility information stored in the facility information storage unit to a user device as the communication destination. This type of facility apparatus can establish the above-described information communication system according to the 28th aspect and provide the above-described effect.

A facility apparatus according to a 59th aspect is used for an information communication system including a user device, a facility apparatus, and a vehicle apparatus. In the information communication system, a special information transmission unit of the user device is based on facility information received from the facility apparatus, acquires special information as information appropriate to both a user having the user device and a facility corresponding to the received facility information from a special information storage unit, and transmits the special information to the vehicle apparatus. An information output unit of the vehicle apparatus acquires special information from the user device and outputs it. In the information communication system, a special information transmission request unit of the facility apparatus transmits the facility information stored in the facility information storage unit to a user device as the communication destination and allows the user device to transmit special information to the vehicle apparatus. This type of facility apparatus can establish the above-described information communication system according to the 35th aspect and provide the above-described effect.

According to a 60th aspect, the special information storage unit stores special information as information based on the user's history of using a facility in the past. Special information can in this way be output that takes the usage history into account. According to a 61st aspect, a history information registration unit allows the special information storage unit to store the special information as information based on a user facility usage history provided with the facility apparatus. Information can in this way be efficiently stored based on the history.

According to a 62nd aspect, the special information storage unit is capable of storing special information about multiple facilities belonging to different facility types. Even when a user visits various facilities belonging to different facility types, special information specially made for the combination of the user and the facility can be output. In other words, the special information can be output independently of the type of business.

According to a 63rd aspect, the facility information storage unit may store the facility information as information about a type of facility possessing the facility apparatus. The information output unit can in this way acquire special information corresponding to the type of facility. Effective special information can therefore be output even when the special information storage unit does not store the special information corresponding to the same facility. Special information specially made for the combination of the user and the facility can therefore be output even when the user visits the facility for the first time.

A user device according to a 64th aspect is used for an information communication system including a user device, a facility apparatus, and a management apparatus. In this information communication system, a special information reply unit of the management apparatus verifies the user information and facility information received from the facility apparatus. Based on the verification results, the special information reply unit acquires special information as information appropriate to both a user corresponding to the received user information and a facility corresponding to the received facility information from a special information storage unit and transmits the special information to the facility apparatus. An information output unit of the facility apparatus transmits the user information received from the user device and facility information stored in the facility information storage unit to the management apparatus, acquires special information from the management apparatus, and outputs it. In the information communication system, a user information transmission unit of the user device transmits the user information stored in the user information storage unit to a facility apparatus as the communication destination. This type of user device can establish the above-described information communication system according to the tenth aspect and provide the above-described effect.

A facility apparatus according to a 65th aspect is used for an information communication system including a user device, a facility apparatus, and a management apparatus. In this information communication system, a special information transmission unit of the management apparatus verifies the user information and facility information received from the user device. Based on verification results, the special information transmission unit acquires special information as information appropriate to both a user corresponding to the received user information and a facility corresponding to the received facility information from a special information storage unit and transmits the special information to the facility apparatus. An information output unit of the facility apparatus transmits the facility information stored in the facility information storage unit to a user device as communication destination, acquires special information from the management apparatus, and outputs it. In this information communication system, a special information transmission request unit of the user device transmits the facility information received from the facility apparatus and the user information stored in the user information storage unit to the management apparatus and allows the management apparatus to transmit special information to the facility apparatus from which the facility information was received. This type of user device can establish the above information communication system according to the 11th aspect and provide the above-described effect.

A user device according to a 66th aspect is used for an information communication system including a user device, a facility apparatus, and a management apparatus. In the information communication system, a facility information transmission unit of the facility apparatus transmits the facility information stored in the facility information storage unit to the user device as the communication destination. A special information reply unit of the management apparatus verifies the user information and facility information received from the user device. Based on verification results, the special information reply unit acquires special information as information appropriate to both a user corresponding to the received user information and a facility corresponding to the received facility information from a special information storage unit and transmits the special information to the user device. In the information communication system, an information output unit of the user device transmits the facility information received from the facility apparatus and the user information stored in the user information storage unit to the management apparatus, acquires the special information from the management apparatus, and outputs it. This type of user device can establish the above-described information communication system according to the 13th aspect and provide the above-described effect.

A user device according to a 67th aspect is used for an information communication system including a user device, a facility apparatus, and a management apparatus. In the information communication system, a special information transmission unit of the management apparatus verifies the user information and facility information received from the facility apparatus. Based on verification results, the special information transmission unit acquires special information as information appropriate to both a user corresponding to the received user information and a facility corresponding to the received facility information from a special information storage unit and transmits the special information to the user device. A special information transmission request unit of the facility apparatus transmits the user information received from the user device and facility information stored in the facility information storage unit to the management apparatus and allows the management apparatus to transmit special information to the user device. In the information communication system, an information output unit of the user device transmits the user information stored in the user information storage unit to a facility apparatus as the communication destination, acquires the special information from the management apparatus, and outputs it. This type of user device can establish the above-described information communication system according to the 14th aspect and provide the above-described effect.

A user device according to a 68th aspect is used for an information communication system including a user device, a facility apparatus, a vehicle apparatus, and a management apparatus. In the information communication system, a special information transmission unit of the management apparatus verifies the user information and facility information received from the facility apparatus. Based on verification results, the special information transmission unit acquires special information as information appropriate to both a user corresponding to the received user information and a facility corresponding to the received facility information from a special information storage unit and transmits the special information to the vehicle apparatus. A special information transmission request unit of the facility apparatus transmits the user information received from the user device and facility information stored in the facility information storage unit to the management apparatus and allows the management apparatus to transmit special information to the vehicle apparatus. An information output unit of the vehicle apparatus acquires special information from a management apparatus and outputs it. In the information communication system, a user information transmission unit of the user device transmits the user information stored in the user information storage unit to a facility apparatus as the communication destination. This type of user device can establish the above-described information communication system according to the 27th aspect and provide the above effect.

A user device according to a 69th aspect is used for an information communication system including a user device, a facility apparatus, a vehicle apparatus, and a management apparatus. In the information communication system, a facility information transmission unit of the facility apparatus transmits the facility information stored in the facility information storage unit to a user device as the communication destination. A special information transmission unit of the management apparatus verifies the user information and the facility information received from the user device. Based on verification results, the special information transmission unit acquires special information as information appropriate to both a user corresponding to the received user information and a facility corresponding to the received facility information from a special information storage unit, and transmits the special information to the vehicle apparatus. An information output unit of the vehicle apparatus acquires special information from a management apparatus and outputs it. In the information communication system, a special information transmission request unit of the user device transmits the facility information received from the facility apparatus and the user information stored in the user information storage unit to the management apparatus and allows the management apparatus to transmit the special information to the vehicle apparatus. This type of user device can establish the above-described information communication system according to the 28th aspect and provide the above effect.

According to a 70th aspect, for example, the user information stored in the user information storage unit includes identification information capable of identifying a user who owns the user device. This type of user information can be used to output the special information corresponding to individual users.

According to a 71 st aspect, for example, the user information stored in the user information storage unit includes registration information registered for the user who owns the user device. This type of user information can be used to output the special information corresponding to the registration information without being limited to information corresponding to individual users. In this case, according to a 72nd aspect, the information communication system includes: a registration information input unit that can input information about a user; and a user information registration unit that allows the user information storage unit to store registration information as information supplied by the registration information input unit. This aspect makes it possible to easily register information about the user.

According to a 73rd aspect, for example, the user information stored in the user information storage unit includes status information indicating the status of the user who owns the user device. This type of user information can be used to output special information corresponding to the user's real-time status.

A user device according to a 74th aspect is used for an information communication system including a user device and a facility apparatus. In the information communication system, an information output unit of the facility apparatus transmits the facility information stored in the facility information storage unit to the user device as the communication destination, acquires specified special information from the user device, and outputs it. In the information communication system, a special information reply unit of the user device is based on the facility information received from the facility apparatus, acquires special information as information appropriate to both a user having the user device and a facility corresponding to the received facility information from a special information storage unit, and transmits the special information to the facility apparatus. This type of user device can establish the above-described information communication system according to the 21st aspect and provide the above-described effect.

A user device according to a 75th aspect is used for an information communication system including a user device and a facility apparatus. In the information communication system, a facility information transmission unit of the facility apparatus transmits the facility information stored in the facility information storage unit to the user device as the communication destination. In the information communication system, an information output unit of the user device is based on facility information received from the facility apparatus, acquires special information as information appropriate to both a user having the user device and a facility corresponding to the received facility information from a special information storage unit, and outputs the special information. This type of user device can establish the above-described information communication system according to the 23rd aspect and provide the above-described effect.

A user device according to a 76th aspect is used for an information communication system including a user device, a facility apparatus, and a vehicle apparatus. In the information communication system, a special information transmission request unit of the facility apparatus transmits the facility information stored in the facility information storage unit to the user device as the communication destination and allows the user device to transmit the specified special information to the vehicle apparatus. An information output unit of the vehicle apparatus acquires the special information from the user device and outputs it. In the information communication system, a special information transmission unit of the user device is based on facility information received from the facility apparatus, acquires special information as information appropriate to both a user having the user device and a facility corresponding to the received facility information from a special information storage unit, and transmits the special information to the vehicle apparatus. This type of user device can establish the above-described information communication system according to the 35th aspect and provide the above-described effect.

The user device according to a 77th aspect includes a user information storage unit that stores status information indicating a status of a user having the user device as user information about the user. The information output unit acquires special information specified based on user information stored in the user information storage unit from a special information storage unit and outputs the special information. This type of structure can output the special information corresponding to the user's real-time status.

According to a 78th aspect, for example, the status information stored in the user information storage unit includes biometric information about the user having the user device. Utilizing the biometric information makes it possible to evaluate the user's status with comparatively high accuracy. This aspect makes it possible to output the special information appropriate to the user's status.

According to a 79th aspect, the special information storage unit stores special information as information based on a user's history of using a facility in the past. The special information can therefore be output while taking into account the usage history. According to an 80th aspect, a history information registration unit of the facility apparatus allows the special information storage unit to store the special information as information based on a user facility usage history corresponding to the facility apparatus. Information can therefore be efficiently stored based on the history.

According to an 81st aspect, the special information storage unit is capable of storing special information about multiple facilities belonging to different types of facilities. Even when a user visits various facilities belonging to different types of facilities, special information can be output, specially made for the combination of the user and the facility. In other words, the special information can be output independently of the type of business.

According to an 82nd aspect, the facility information storage unit may store the facility information as information about the type of facility possessing the facility apparatus. The information output unit can in this way acquire special information corresponding to the type of facility. Effective special information can therefore be output even when the special information storage unit does not store special information corresponding to the same facility. This aspect therefore makes it possible to output special information, specially made for the combination of the user and the facility even when the user visits the facility for the first time.

A management apparatus according to an 83rd aspect is used for an information communication system including a user device, a facility apparatus, and a management apparatus. In the information communication system, a user information transmission unit of the user device transmits the user information stored in the user information storage unit to a facility apparatus as the communication destination. An information output unit of the facility apparatus transmits the user information received from the user device and facility information stored in the facility information storage unit to the management apparatus and acquires specified special information from the management apparatus and outputs it. In the information communication system, a special information reply unit of the management apparatus verifies the user information and facility information received from the facility apparatus. Based on the verification results, the special information reply unit acquires special information as information appropriate to both a user corresponding to the received user information and a facility corresponding to the received facility information from a special information storage unit and transmits that special information to the facility apparatus. This type of management apparatus can establish the above-described information communication system according to the tenth aspect and provide the above effect.

A management apparatus according to an 84th aspect is used for an information communication system including a user device, a facility apparatus, and a management apparatus. In the information communication system, a special information transmission request unit of the user device transmits the facility information received from the facility apparatus and the user information stored in a user information storage unit to the management apparatus and allows the management apparatus to transmit specified special information to the facility apparatus from which the facility information was received. An information output unit of the facility apparatus transmits the facility information stored in a facility information storage unit to the user device as the communication destination and acquires special information from the management apparatus and outputs it. In the information communication system, a special information transmission unit of the management apparatus verifies the received user information and facility information. Based on verification results, the special information transmission unit acquires special information as information appropriate to both a user corresponding to the received user information and a facility corresponding to the received facility information from a special information storage unit and transmits the special information to the facility apparatus. This type of management apparatus establishes the above-described information communication system according to the 11th aspect and provides the above-described effect.

A management apparatus according to an 85th aspect is used for an information communication system including a user device, a facility apparatus, and a management apparatus. In the information communication system, a facility information transmission unit of the facility apparatus transmits the facility information stored in a facility information storage unit to the user device as the communication destination. An information output unit of the user device transmits the facility information received from the facility apparatus and the user information stored in a user information storage unit to the management apparatus, acquires specified special information from the management apparatus, and outputs it. In the information communication system, a special information reply unit of the management apparatus verifies the user information and facility information received from the user device. Based on verification results, the special information reply unit acquires special information as information appropriate to both a user corresponding to the received user information and a facility corresponding to the received facility information from a special information storage unit and transmits the special information to the user device. This type of management apparatus can establish the above-described information communication system according to the 13th aspect and provide the above-described effect.

A management apparatus according to an 86th aspect is used for an information communication system including a user device, a facility apparatus, and a management apparatus. In the information communication system, a special information transmission request unit of the facility apparatus transmits the user information received from the user device and the facility information stored in a facility information storage unit to the management apparatus and allows the management apparatus to transmit specified special information to the user device. An information output unit of the user device transmits the user information stored in a user information storage unit to the facility apparatus as the communication destination, acquires the special information from the management apparatus, and outputs it. In the information communication system, a special information transmission unit of the management apparatus verifies the received user information and facility information. Based on the verification results, the special information transmission unit acquires special information as information appropriate to both a user corresponding to the received user information and a facility corresponding to the received facility information from a special information storage unit and transmits the special information to the user device. This type of management apparatus can establish the above-described information communication system according to the 14th aspect and provide the above-described effect.

A management apparatus according to an 87th aspect is used for an information communication system including a user device, a facility apparatus, a vehicle apparatus, and a management apparatus. In the information communication system, a user information transmission unit of the user device transmits the facility information stored in a user information storage unit to the user device as the communication destination. A special information transmission request unit of the facility apparatus transmits the user information received from the user device and facility information stored in a facility information storage unit to the management apparatus and allows the management apparatus to transmit the specified special information to the vehicle apparatus. An information output unit of the vehicle apparatus acquires the special information from the management apparatus and outputs it. In the information communication system, a special information transmission unit of the management apparatus verifies the received user information and the facility information. Based on verification results, the special information transmission unit acquires special information as information appropriate to both a user corresponding to the received user information and a facility corresponding to the received facility information from a special information storage unit and transmits the special information to the vehicle apparatus. This type of management apparatus can establish the above-described information communication system according to the 27th aspect and provide the above-described effect.

A management apparatus according to an 88th aspect is used for an information communication system including a user device, a facility apparatus, a vehicle apparatus, and a management apparatus. In the information communication system, a facility information transmission unit of the facility apparatus transmits the facility information stored in a facility information storage unit to the user device as the communication destination. A special information transmission request unit of the user device transmits the facility information received from the facility apparatus and the user information stored in a user information storage unit to the management apparatus and allows the management apparatus to transmit specified special information to the vehicle apparatus. An information output unit of the vehicle apparatus acquires the special information from the management apparatus and outputs it. In the information communication system, a special information transmission unit of the management apparatus verifies the received user information and the facility information. Based on verification results, the special information transmission unit acquires special information as information appropriate to both a user corresponding to the received user information and a facility corresponding to the received facility information from a special information storage unit and transmits the special information to the vehicle apparatus. This type of management apparatus can establish the above-described information communication system according to the 28th aspect and provide the above-described effect.

According to an 89th aspect, the special information storage unit stores special information as information based on a user's history of using a facility in the past. In this manner, it is possible to output the special information in consideration for a usage history. According to a 90th aspect, a history information registration unit of the facility apparatus allows the special information storage unit to store the special information as information based on a user facility usage history provided with the facility apparatus. Information can therefore be efficiently stored based on the history.

According to a 91st aspect, the special information storage unit is capable of storing special information about multiple facilities belonging to different types of facilities. Even when a user visits various facilities with different types of facilities, special information specially made for the combination of the user and the facility can be output. In other words, the special information can be output independently of the type of business.

According to a 92nd aspect, the facility information storage unit may store the facility information as information about the type of facility possessing the facility apparatus. The information output unit can in this way acquire special information corresponding to the type of facility. Effective special information can therefore be output even when the special information storage unit does not store the special information corresponding to the same facility. Special information specially made for the combination of the user and the facility can therefore be output even when the user visits the facility for the first time.

A vehicle apparatus according to a 93rd aspect is used for an information communication system including a user device, a facility apparatus, and a vehicle apparatus. The information communication system includes an information output unit for outputting special information, namely information specified based on user information stored in the user device and appropriate to the facility possessing the facility apparatus under the condition that the user device and any facility apparatus initiate or maintain communication. In the information communication system, the user device includes a user information storage unit that stores status information received from the vehicle apparatus as user information about a user. In the information communication system, a status detection unit of the vehicle apparatus detects the status of at least one of a user in a vehicle and the vehicle. A vehicle transmission unit transmits status information indicating a status detected by the status detection unit to the user device. The information communication system structured using this type of vehicle apparatus can output special information corresponding to the user status in the vehicle as special information specially made for the combination of the user using a facility and the facility to be used.

According to a 94th aspect, for example, the status detection unit can detect the status of the user driving a vehicle among the vehicle occupants. According to a 95th aspect, the status detection unit can detect the status of the user driving the vehicle as the driving status, then the special information can be output according to the driving status.

According to a 96th aspect, the vehicle status includes the onboard device status. In a preferred structure according to a 97th aspect, an unloading detection unit can detect that the user has left the vehicle based on a vehicle operation status. When the unloading detection unit detects the user has left the vehicle, a vehicle transmission unit can transmit status information to the user device. In this aspect, the vehicle apparatus can efficiently transmit the status information to the user device.

According to a 98th aspect, the status information stored in the user information storage unit includes biometric information about a user. Utilizing this biometric information makes it possible to evaluate the user's status with relatively high accuracy, and to output the special information appropriate to the user's status.

A vehicle apparatus according to a 99th aspect is used for an information communication system including a user device, a facility apparatus, a vehicle apparatus, and a management apparatus. In the information communication system, a user information transmission unit of the user device transmits the user information stored in a user information storage unit to the facility apparatus as the communication destination. A special information transmission unit of the management apparatus verifies the user information and the facility information received from the facility apparatus. Based on verification results, the special information transmission unit acquires special information as information appropriate to both a user corresponding to the received user information and a facility corresponding to the received facility information from a special information storage unit and transmits the special information to the vehicle apparatus. A special information transmission request unit of the facility apparatus transmits the user information received from the user device and the facility information stored in a facility information storage unit to the management apparatus and allows the management apparatus to transmit special information to the vehicle apparatus. In the information communication system, an information output unit of the vehicle apparatus acquires special information from the management apparatus and outputs it. This type of vehicle apparatus can establish the above-described information communication system according to the 27th aspect and provide the above-described effect.

A vehicle apparatus according to a 100th aspect is used for an information communication system including a user device, a facility apparatus, a vehicle apparatus, and a management apparatus. In the information communication system, a facility information transmission unit of the facility apparatus transmits the facility information stored in a facility information storage unit to the user device as the communication destination. A special information transmission unit of the management apparatus verifies the user information and facility information received from the user device. Based on verification results, the special information transmission unit acquires special information as information appropriate to both a user corresponding to the received user information and a facility corresponding to the received facility information from a special information storage unit and transmits the special information to the vehicle apparatus. A special information transmission request unit of the user device transmits the facility information received from the facility apparatus and the user information stored in a user information storage unit to the management apparatus and allows the management apparatus to transmit special information to the vehicle apparatus. In the information communication system, an information output unit of the vehicle apparatus acquires special information from the management apparatus and outputs it. This type of vehicle apparatus can establish the above-described information communication system according to the 28th aspect and provide the above-described effect.

A vehicle apparatus according to a 101 st aspect is used for an information communication system including a user device, a facility apparatus, and a vehicle apparatus. In the information communication system, a special information transmission unit of the user device is based on the facility information received from the facility apparatus, acquires special information as information appropriate to both a user having the user device and a facility corresponding to the received facility information from a special information storage unit, and transmits the special information to the vehicle apparatus. A special information transmission request unit of the facility apparatus transmits the facility information stored in a facility information storage unit to the user device as the communication destination and allows the user device to transmit the special information to the vehicle apparatus. In the information communication system, an information output unit of the vehicle apparatus acquires the special information from the user device and outputs it. This type of vehicle apparatus can establish the above-described information communication system according to the 35th aspect and provide the above-described effect.

According to a 102nd aspect, for example, the special information storage unit stores the special information as information based on a user's past history of facility use. The special information in this way can be output by taking the usage history into account. According to a 103rd aspect for example, the history information registration unit of the facility apparatus allows the special information storage unit to store the special information as information based on a user facility usage history provided with the facility apparatus. Information can therefore be efficiently stored based on this history.

According to a 104th aspect, the special information storage unit is capable of storing special information about multiple facilities belonging to different types of facilities. Even when a user visits various facilities of different types, special information specially made for the combination of the user and the facility can be output. In other words, the special information can be output independently of the type of business.

According to a 105th aspect, the facility information storage unit may store the facility information as information about the type of facility possessing the facility apparatus. The information output unit can in this way acquire special information corresponding to the type of facility. Effective special information can therefore be output even when the special information storage unit does not store the special information corresponding to the same facility. Consequently, special information specially made for the combination of the user and the facility can be output even when the user visits the facility for the first time.

A facility program according to a 106th aspect allows a computer to function as a facility apparatus used for an information communication system including a user device, a facility apparatus, and a management apparatus. Specifically, the facility program allows the computer to function as a facility information storage unit and an information output unit. In the information communication system, a user information transmission unit of the user device transmits the user information stored in a user information storage unit to the facility apparatus as the communication destination. A special information reply unit of the management apparatus verifies the user information and the facility information received from the facility apparatus. Based on verification results, the special information reply unit acquires special information as information appropriate to both a user corresponding to the received user information and a facility corresponding to the received facility information from a special information storage unit, and transmits that special information to the facility apparatus. An information output unit of the facility apparatus transmits the user information received from the user device and the facility information stored in a facility information storage unit to the management apparatus, acquires special information from the management apparatus, and outputs it. This type of facility program can allow a computer to function as the facility apparatus according to the 50th aspect and provide the above-described effect.

A facility program according to a 107th aspect allows a computer to function as a facility apparatus used for an information communication system including a user device, a facility apparatus, and a management apparatus. Specifically, the facility program allows the computer to function as a facility information storage unit and as an information output unit. In the information communication system, a special information transmission unit of the management apparatus verifies the user information and the facility information received from the user device. Based on verification results, the special information transmission unit acquires the special information as information appropriate to both a user corresponding to the received user information and a facility corresponding to the received facility information from a special information storage unit, and transmits the special information to the facility apparatus. A special information transmission request unit of the user device transmits the facility information received from the facility apparatus and the user information stored in the user information storage unit to the management apparatus and allows the management apparatus to transmit the special information to the facility apparatus from which the facility information was received. An information output unit of the facility apparatus transmits the facility information stored in a facility information storage unit to the user device as the communication destination, acquires special information from the management apparatus, and outputs it. This type of facility program can allow a computer to function as the facility apparatus according to the 51 st aspect and provide the above-described effect.

A facility program according to a 108th aspect allows a computer to function as a facility apparatus used for an information communication system including a user device and a facility apparatus. Specifically, the facility program allows the computer to function as a facility information storage unit and an information output unit. In the information communication system, a special information reply unit of the user device is based on the facility information received from the facility apparatus, acquires special information as information appropriate to both a user having the user device and a facility corresponding to the received facility information from a special information storage unit, and transmits the special information to the facility apparatus. An information output unit of the facility apparatus transmits the facility information stored in a facility information storage unit to the user device as the communication destination, acquires special information from the user device, and outputs it. This type of facility program can allow a computer to function as the facility apparatus according to the 54th aspect and provide the above-described effect.

A user program according to a 109th aspect allows a computer to function as a user device used for an information communication system including a user device, a facility apparatus, and a management apparatus. Specifically, the user program allows the computer to function as a user information storage unit and a user information transmission unit. In the information communication system, a user information transmission unit of the user device transmits the user information stored in a user information storage unit to the facility apparatus as the communication destination. A special information reply unit of the management apparatus verifies the user information and the facility information received from the facility apparatus. Based on verification results, the special information reply unit acquires special information as information appropriate to both a user corresponding to the received user information and a facility corresponding to the received facility information from a special information storage unit and transmits the special information to the facility apparatus. An information output unit of the facility apparatus transmits the user information received from the user device and facility information stored in a facility information storage unit to the management apparatus, acquires special information from the management apparatus, and outputs it. This type of user program can allow a computer to function as the user device according to the 64th aspect and provide the above-described effect.

A user program according to a 110th aspect allows a computer to function as a user device used for an information communication system including a user device, a facility apparatus, and a management apparatus. Specifically, the user program allows the computer to function as a user information storage unit and a special information transmission request unit. In the information communication system, a special information transmission request unit in the user device transmits the facility information received from the facility apparatus and the user information stored in the user information storage unit to the management apparatus and allows the management apparatus to transmit the special information to the facility apparatus from which the facility information was received. A special information transmission unit of the management apparatus verifies the user information and the facility information received from the user device. Based on verification results, the special information transmission unit acquires special information as information appropriate to both a user corresponding to the received user information and a facility corresponding to the received facility information from a special information storage unit and transmits the special information to the facility apparatus. An information output unit of the facility apparatus transmits the facility information stored in a facility information storage unit to the user device as the communication destination, acquires special information from the management apparatus, and outputs it. This type of user program can allow a computer to function as the user device according to the 65th aspect and provide the above-described effect.

A user program according to a 111th aspect allows a computer to function as a user device used for an information communication system including a user device and a facility apparatus. Specifically, the user program allows the computer to function as a special information storage unit and a special information reply unit. In the information communication system, an information output unit of the facility apparatus transmits the facility information stored in a facility information storage unit to the user device as the communication destination, acquires specified special information from the user device, and outputs it. A special information reply unit of the user device is based on facility information received from the facility apparatus, acquires special information as information appropriate to both a user having the user device and a facility corresponding to the received facility information from a special information storage unit, and transmits the special information to the facility apparatus. This type of user program can allow a computer to function as the user device according to the 74th aspect and provide the above-described effect.

A management program according to a 112th aspect allows a computer to function as a management apparatus used for an information communication system including a user device, a facility apparatus, and a management apparatus. Specifically, the management program allows the computer to function as a special information storage unit and a special information reply unit. In the information communication system, a user information transmission unit of the user device transmits the user information stored in a user information storage unit to the facility apparatus as the communication destination. An information output unit of the facility apparatus transmits the user information received from the user device and the facility information stored in a facility information storage unit to the management apparatus, acquires specified special information from the management apparatus, and outputs it. A special information reply unit of the management apparatus verifies the user information and the facility information received from the facility apparatus. Based on verification results, the special information reply unit acquires the special information as information appropriate to both a user corresponding to the received user information and a facility corresponding to the received facility information from a special information storage unit and transmits the special information to the facility apparatus. This type of management program can allow a computer to function as the management apparatus according to the 83rd aspect and provide the above-described effect.

A management program according to a 113th aspect allows a computer to function as a management apparatus used for an information communication system including a user device, a facility apparatus, and a management apparatus. Specifically, the management program allows the computer to function as a special information storage unit and a special information transmission unit. In the information communication system, a special information transmission request unit of the user device transmits the facility information received from the facility apparatus and the user information stored in a user information storage unit to the management apparatus and allows the management apparatus to transmit the specified special information to the facility apparatus from which the facility information was received. An information output unit of the facility apparatus transmits the facility information stored in a facility information storage unit to the user device as the communication destination, acquires special information from the management apparatus, and outputs it. A special information transmission unit of the management apparatus verifies the user information and facility information received from the user device. Based on verification results, the special information transmission unit acquires special information as information appropriate to both a user corresponding to the received user information and a facility corresponding to the received facility information from a special information storage unit and transmits the special information to the facility apparatus. This type of management program can allow a computer to function as the user device according to the 84th aspect and provide the above-described effect.

A vehicle program according to a 114th aspect allows a computer to function as a vehicle apparatus used for an information communication system including a user device, a facility apparatus, and a vehicle apparatus. Specifically, the vehicle program allows the computer to function as a status detection unit and a vehicle transmission unit. The information communication system includes an information output unit for outputting special information. In other words, the special information is specified based on user information stored in the user device under the condition that the user device and any facility apparatus initiate or maintain communication. The special information is appropriate to the facility possessing the facility apparatus. In the information communication system, the user device includes a user information storage unit that stores status information received from the vehicle apparatus as user information about a user. In the vehicle apparatus, the status detection unit detects the status of at least one of the user in a vehicle and the vehicle. The vehicle transmission unit transmits status information indicating the status detected by the status detection unit to the user device. This type of vehicle program can allow a computer to function as the vehicle apparatus according to the 93rd aspect and provide the above-described effect.

### BRIEF DESCRIPTION OF THE DRAWINGS

The foregoing and other objects, structures, and advantages of the invention will become apparent from the detailed description of the preferred embodiments of the present invention given below while referring to the accompanying drawings in which:
FIG. 1 is a block diagram showing the overall structure of an information communication system according to a first embodiment;
FIG. 2 shows a procedure to provide information;
FIG. 3 is a flowchart showing a status bulletin process according to the first embodiment;
FIG. 4 is a flowchart showing a user process according to the first embodiment;
FIG. 5 is a flowchart showing an information bulletin process according to the first embodiment;
FIG. 6 shows data structures of a service request and service information;
FIG. 7 shows displayed bulletin images;
FIG. 8 is a flowchart showing an information collection process according to the first embodiment;
FIG. 9 is a flowchart showing a service management process according to the first embodiment;
FIG. 10 shows a data structure of a service table;
FIG. 11 is a block diagram showing the overall structure of an information communication system according to a second embodiment;
FIG. 12 is a flowchart showing a user process according to the second embodiment;
FIG. 13 is a flowchart showing an information bulletin process according to the second embodiment;

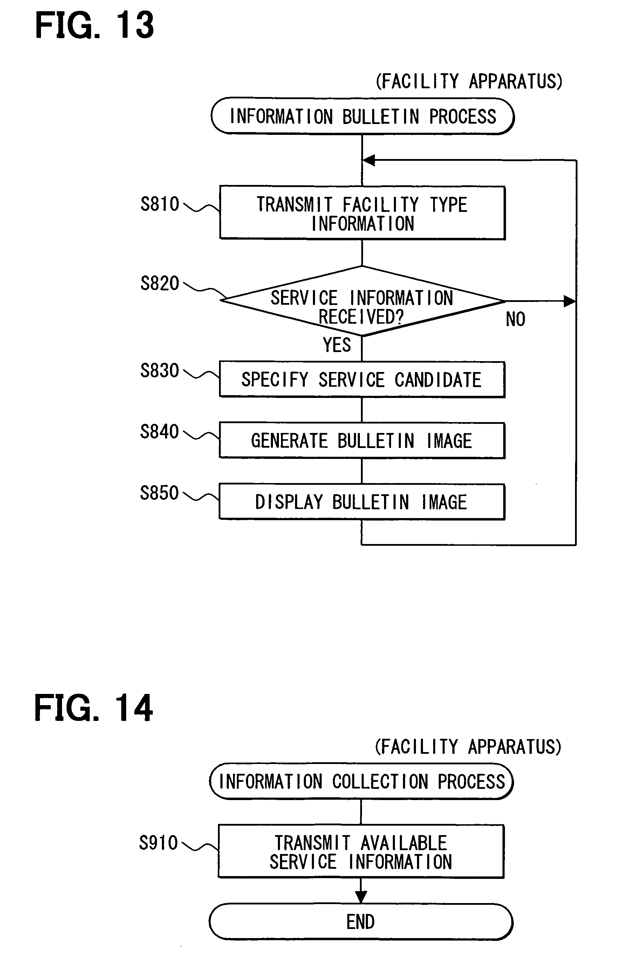

FIG. 13 is a flowchart showing an information collection process according to the second embodiment;

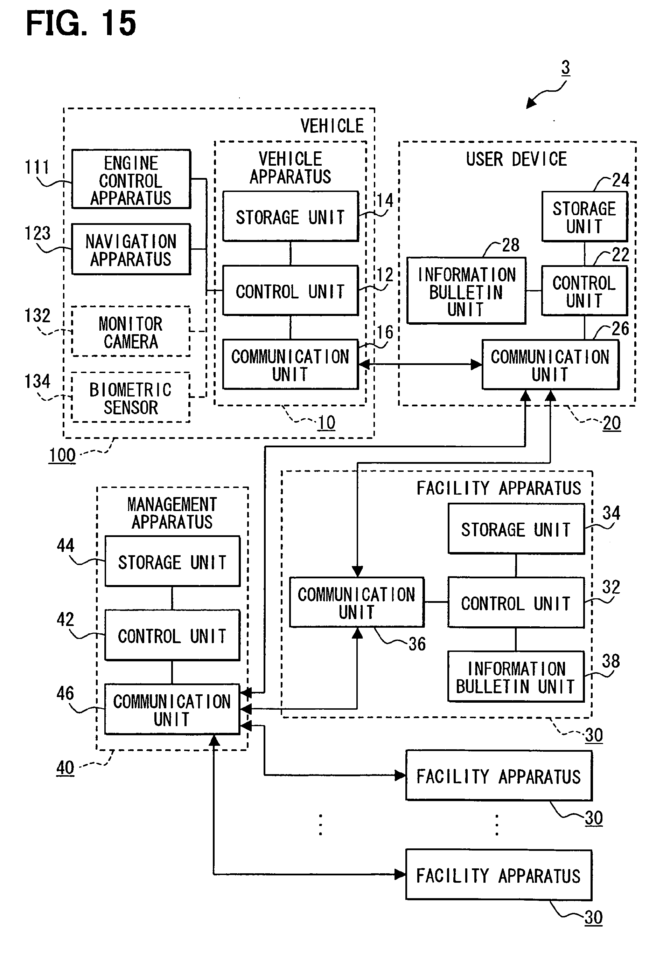

FIG. 15 is a block diagram showing the overall structure of an information communication system according to a third embodiment;

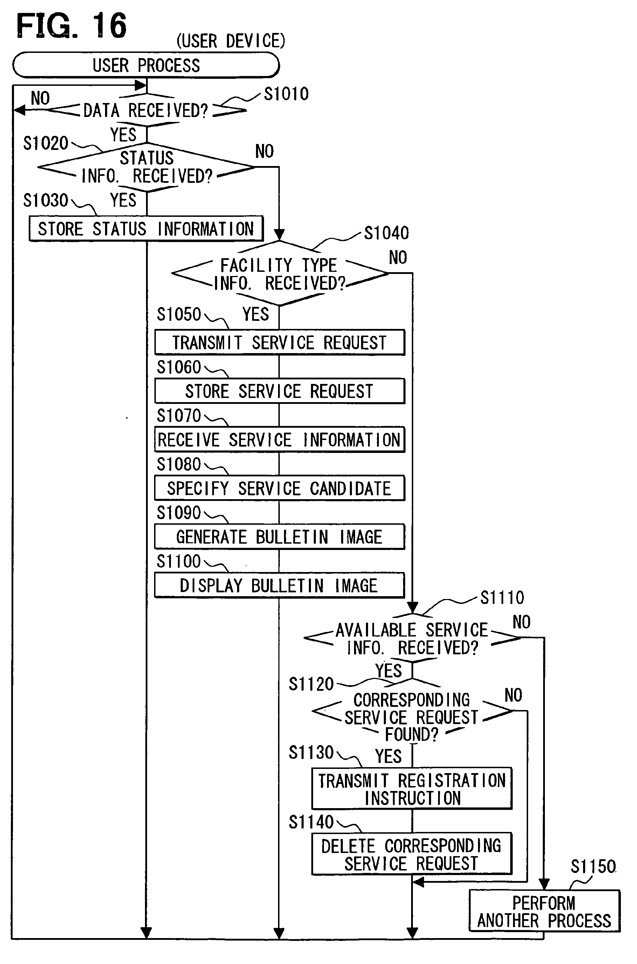

FIG. 16 is a flowchart showing a user process according to the third embodiment;

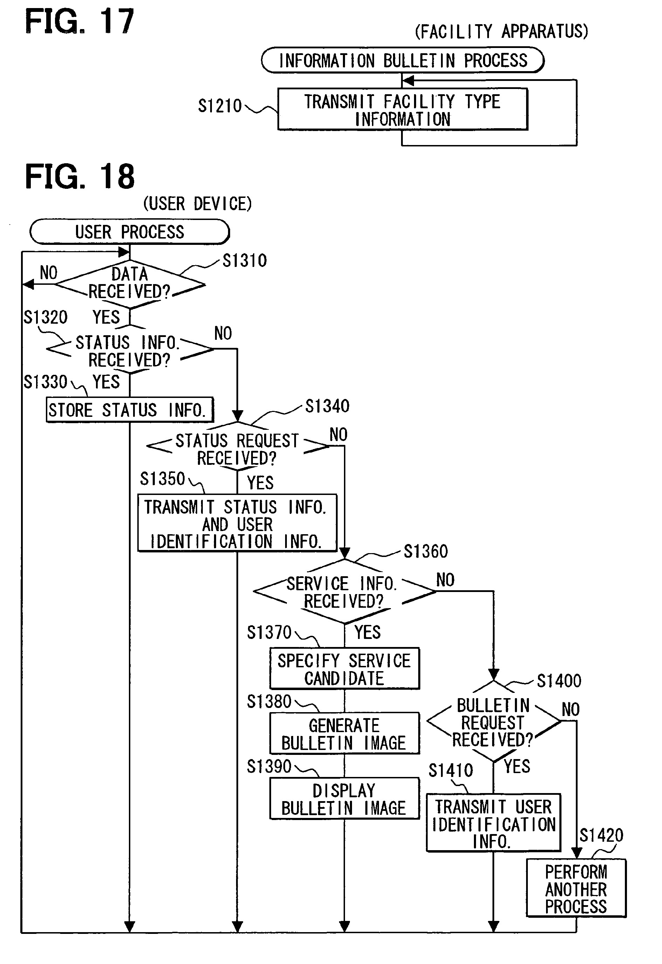

FIG. 17 is a flowchart showing an information bulletin process according to the third embodiment;
FIG. 18 is a flowchart showing a user process according to a fourth embodiment;

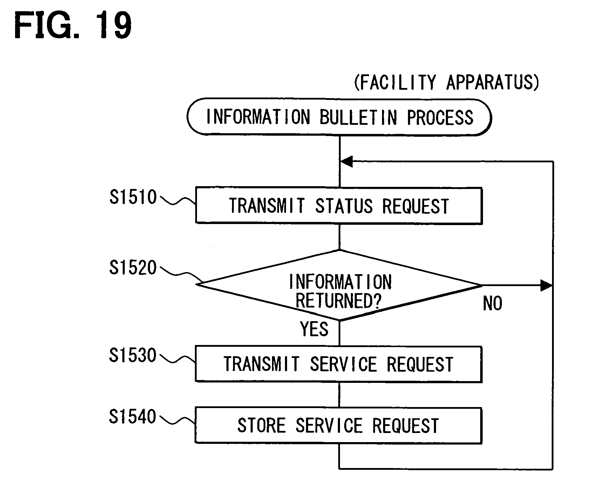

FIG. 19 is a flowchart showing an information bulletin process according to the fourth embodiment;

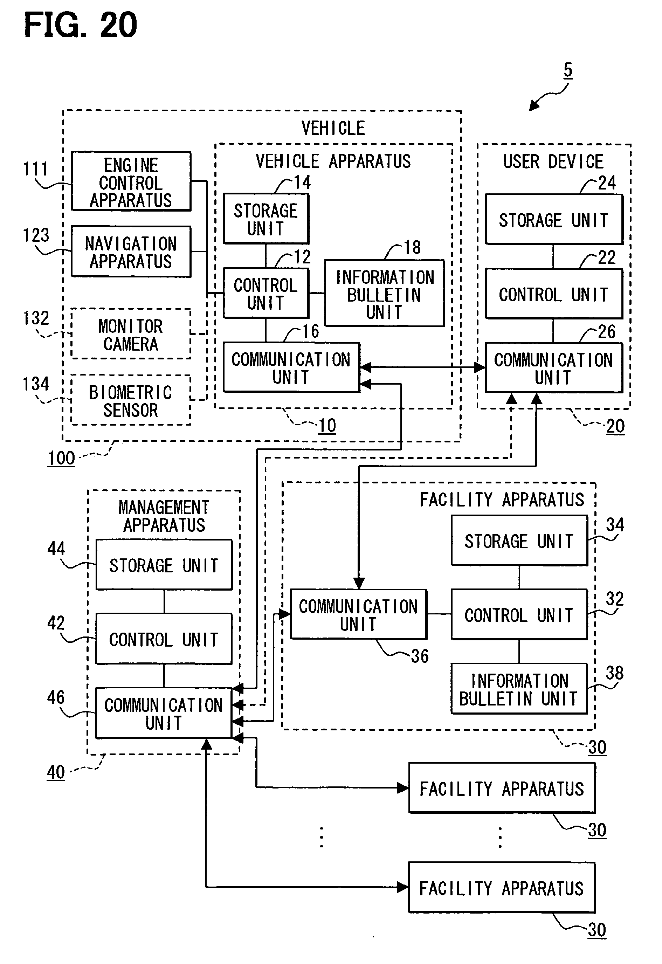

FIG. 20 is a block diagram showing the overall structure of an information communication system according to a fifth embodiment;

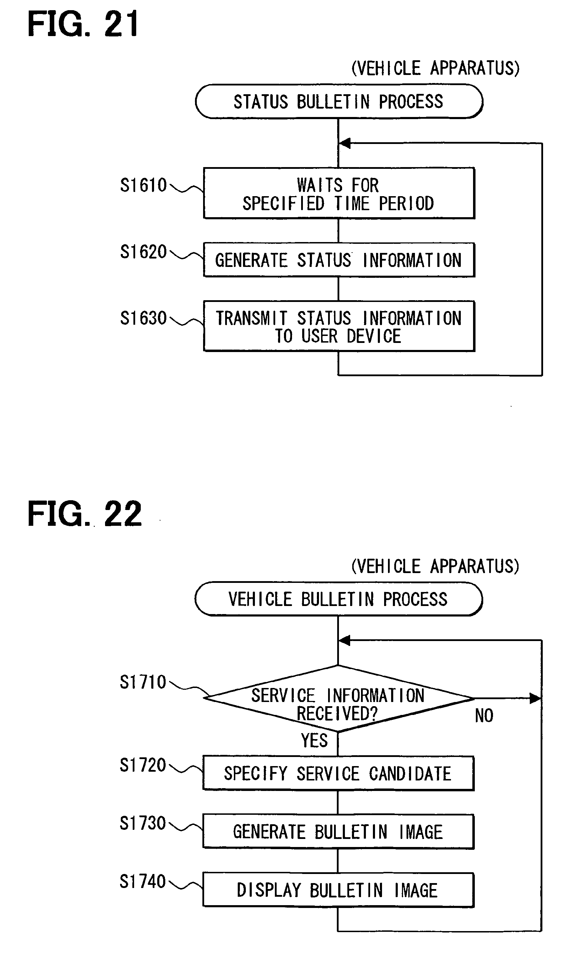

FIG. 21 is a flowchart showing a status bulletin process according to the fifth embodiment;
FIG. 22 is a flowchart showing a vehicle bulletin process according to the fifth embodiment;

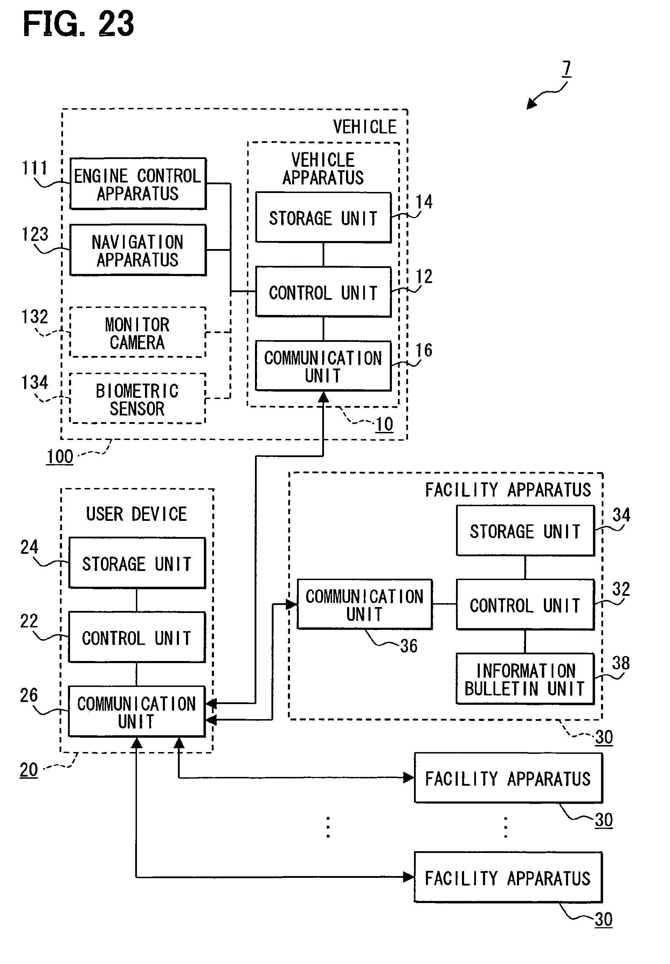

FIG. 23 is a block diagram showing the overall structure of an information communication system according to a seventh embodiment;

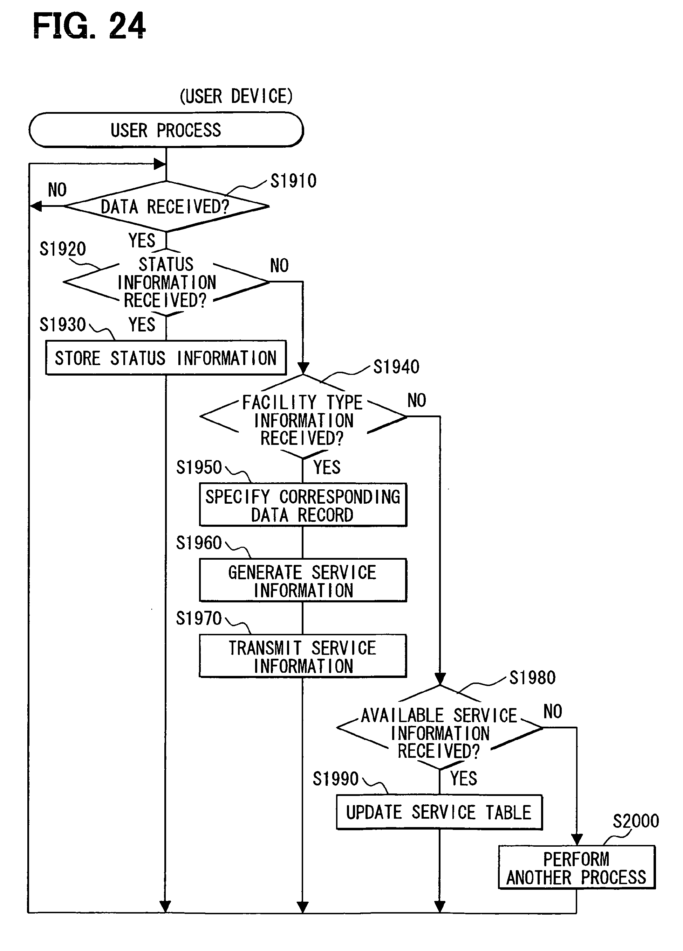

FIG. 24 is a flowchart showing a user process according to the seventh embodiment;

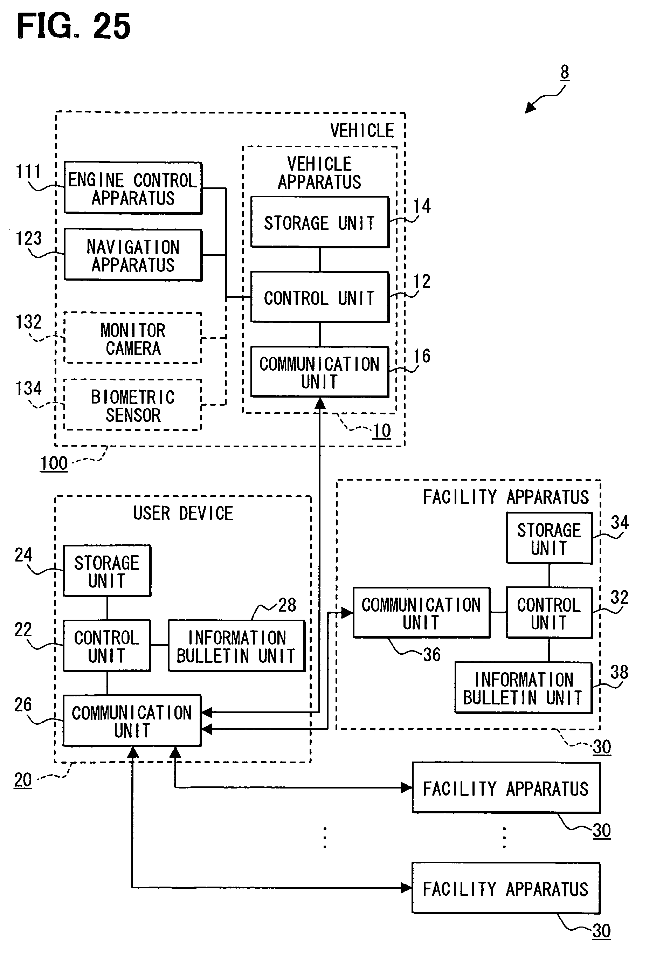

FIG. 25 is a block diagram showing the overall structure of an information communication system according to an eighth embodiment;

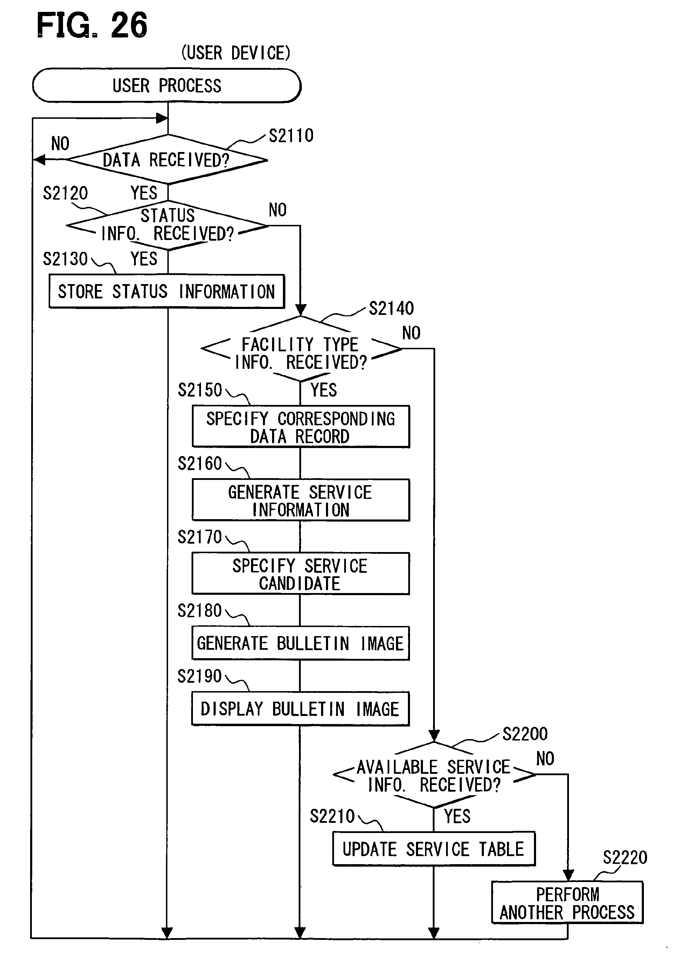

FIG. 26 is a flowchart showing a user process according to the eighth embodiment;

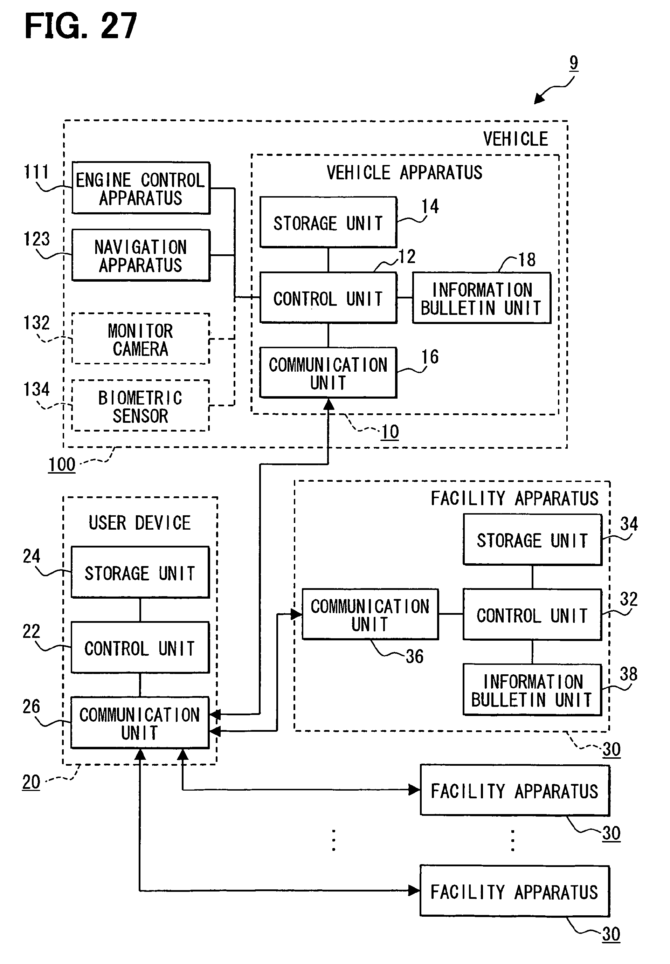

FIG. 27 is a block diagram showing the overall structure of an information communication system according to a ninth embodiment;

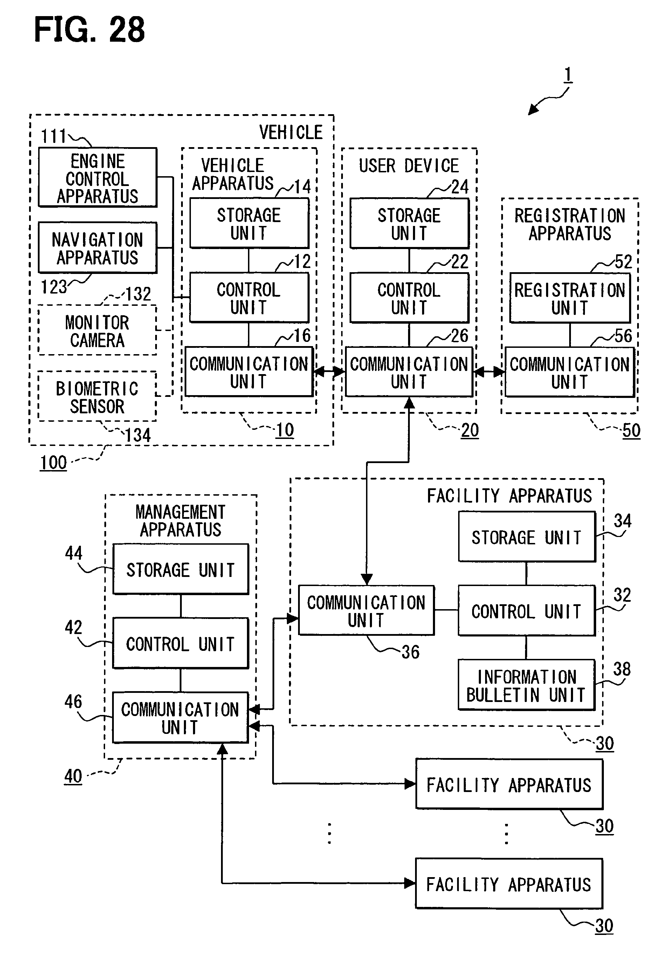

FIG. 28 is a block diagram showing the overall structure of the information communication system having a registration apparatus;

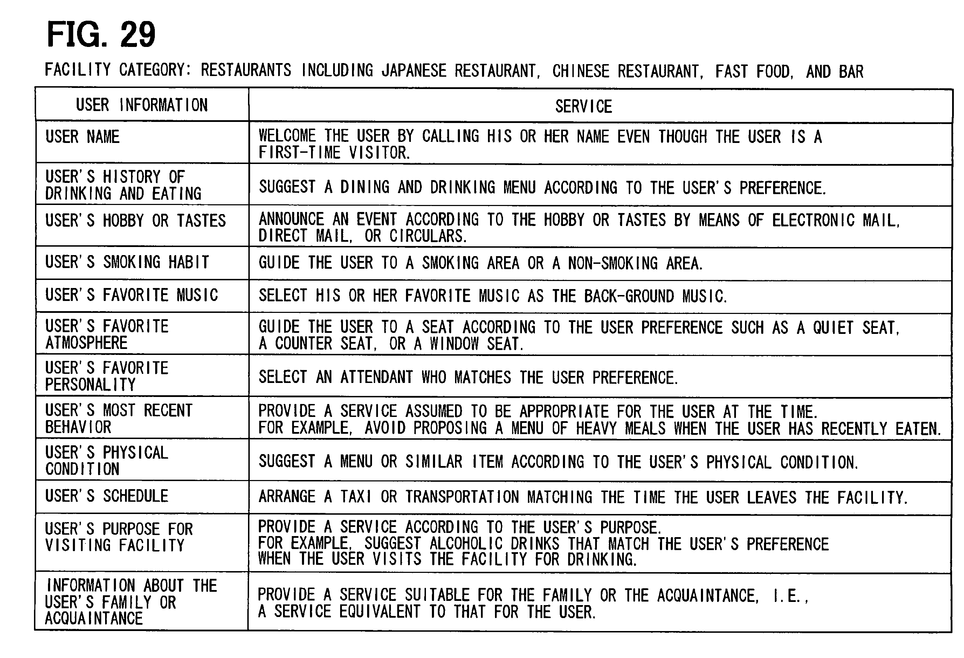

FIG. 29 shows a specific example of a service according to the user information;

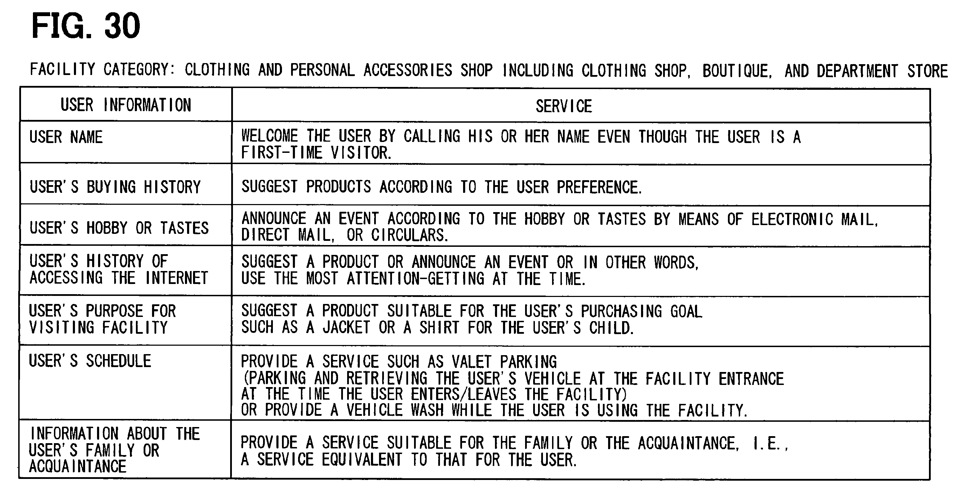

FIG. 30 shows a specific example of a service according to the user information;

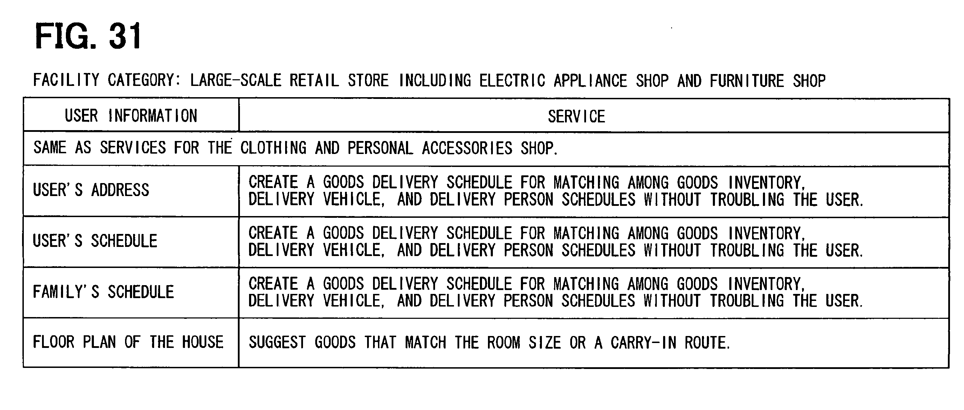

FIG. 31 shows a specific example of a service according to the user information;

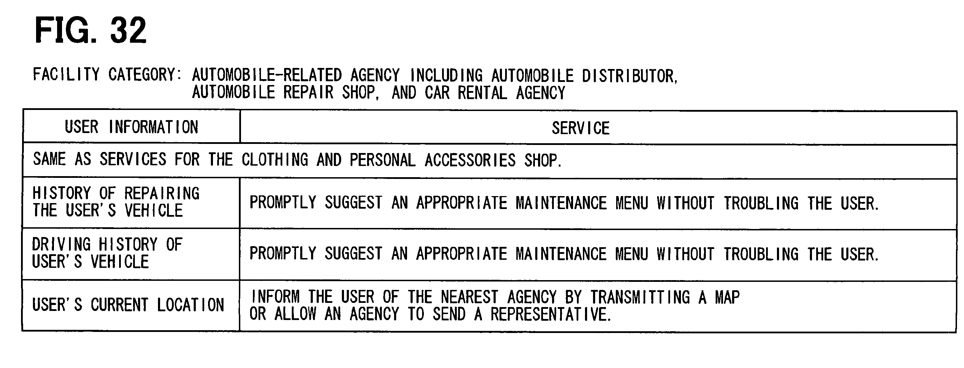

FIG. 32 shows a specific example of a service according to the user information;

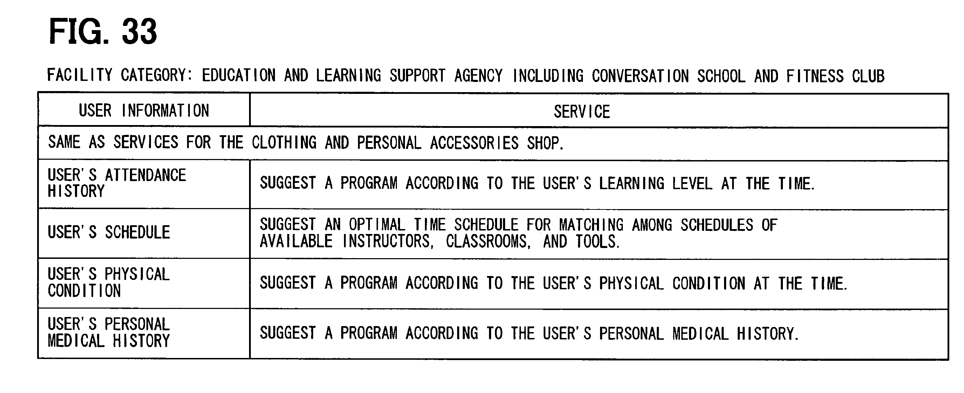

FIG. 33 shows a specific example of a service according to the user information;

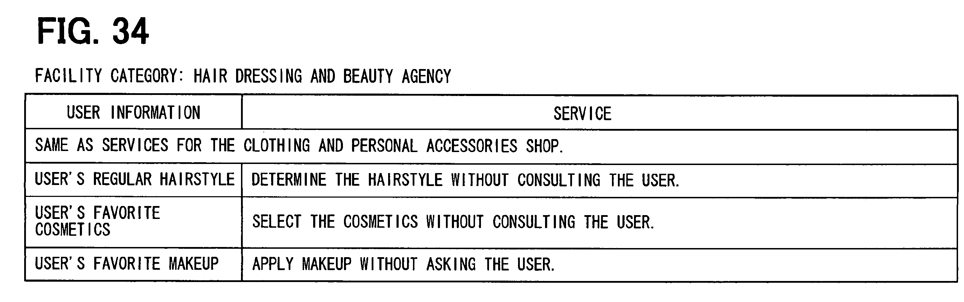

FIG. 34 shows a specific example of a service according to the user information;

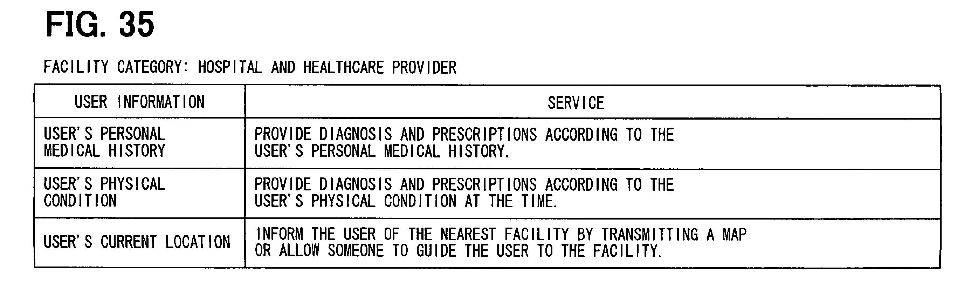

FIG. 35 shows a specific example of a service according to the user information;

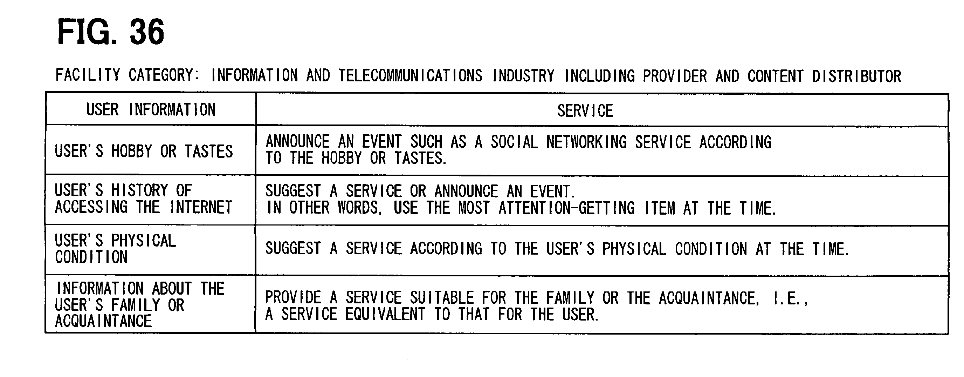

FIG. 36 shows a specific example of a service according to the user information;

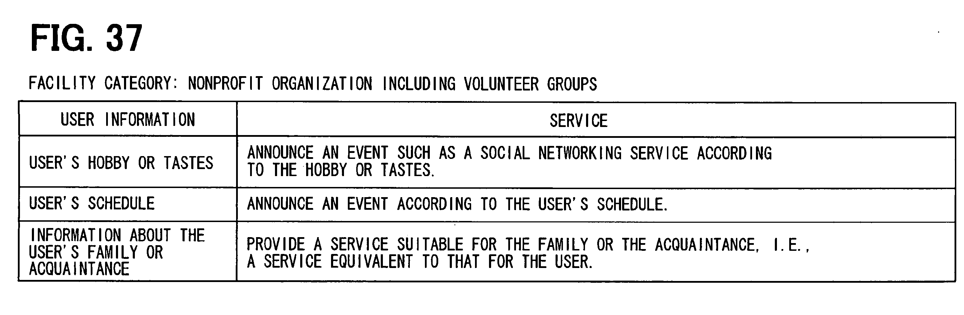

FIG. 37 shows a specific example of a service according to the user information;

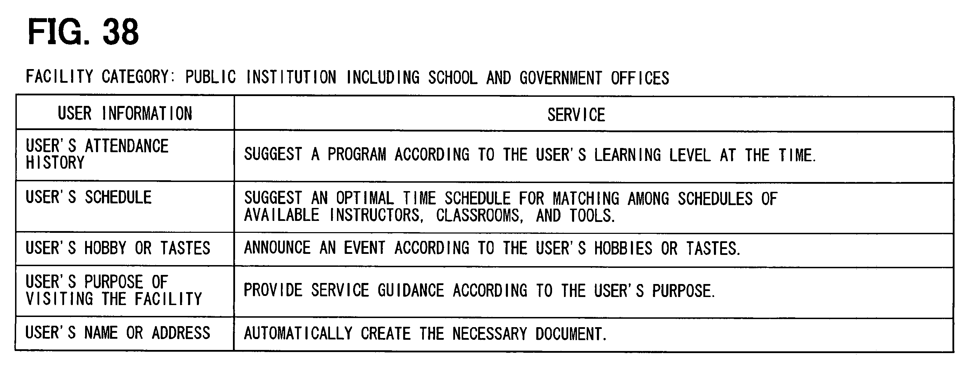

FIG. 38 shows a specific example of a service according to the user information;

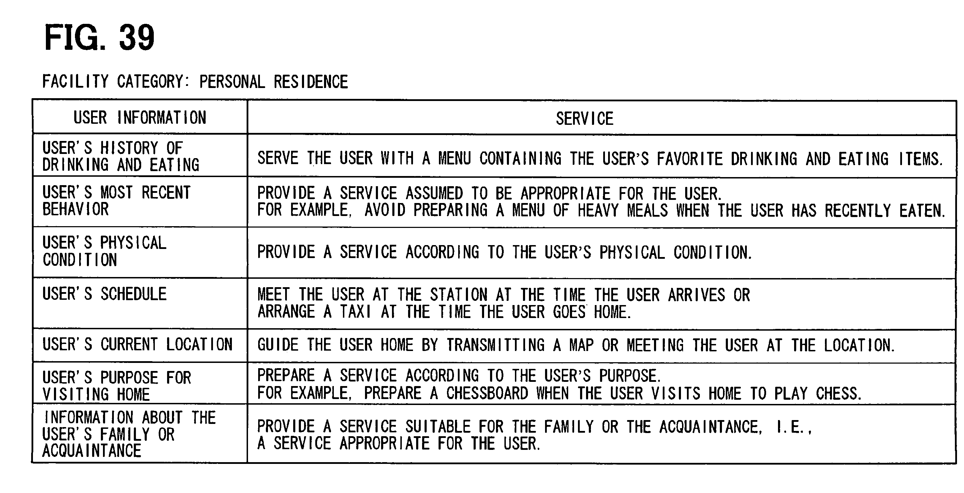

FIG. 39 shows a specific example of a service according to the user information;

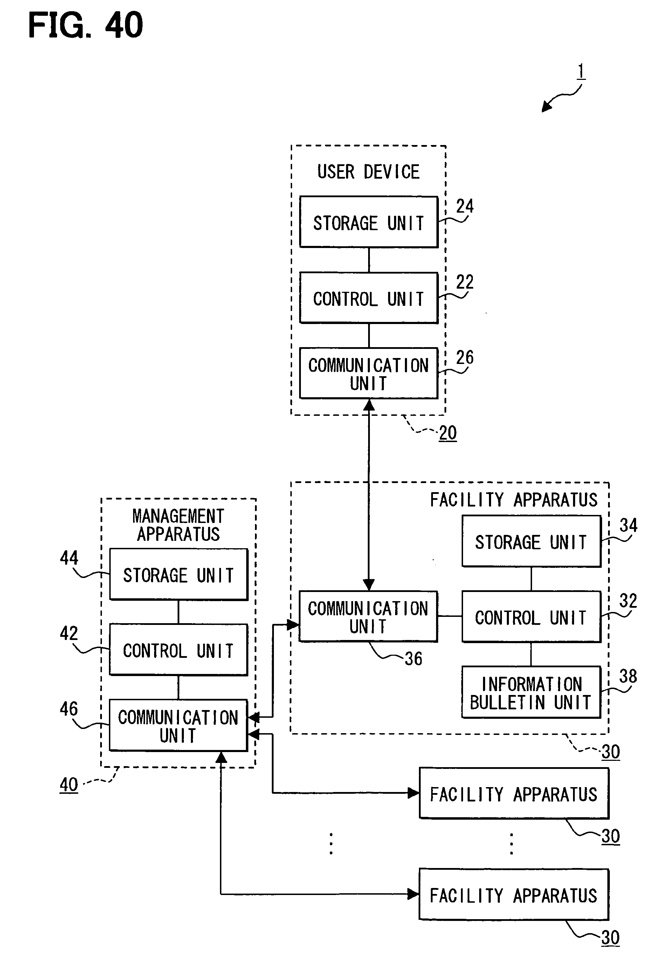

FIG. 40 is a block diagram showing the overall structure of an information communication system having no vehicle apparatus;

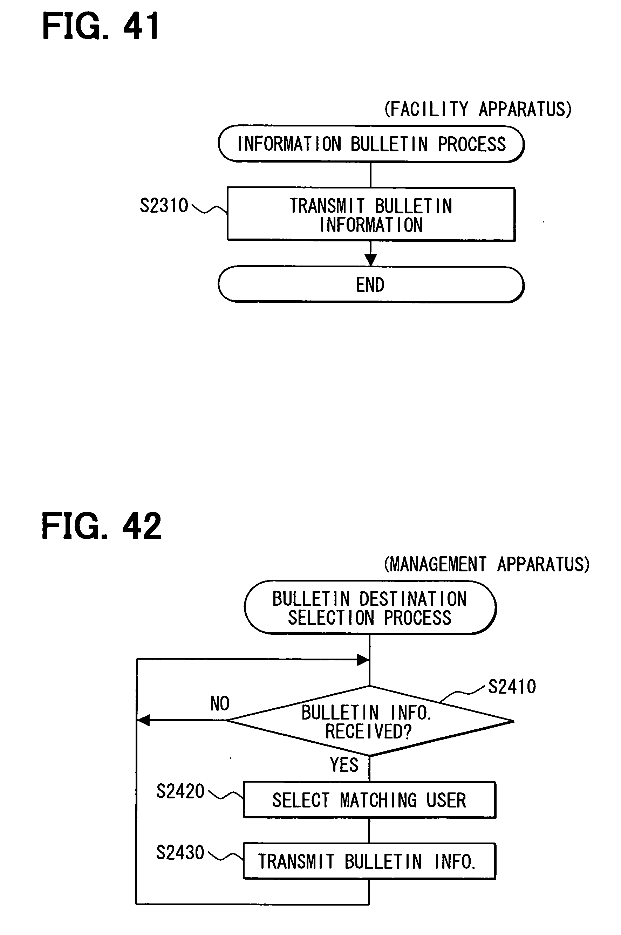

FIG. 41 is a flowchart showing an information bulletin process; and
FIG. 42 is a flowchart showing a communication destination process.

### DETAILED DESCRIPTION OF THE PREFERRED EMBODIMENTS

Embodiments of the present invention are described next while referring to the accompanying drawings.

### 1. First embodiment

The following describes an information communication system 1 according to the first embodiment.

### 1-1. Overall structure

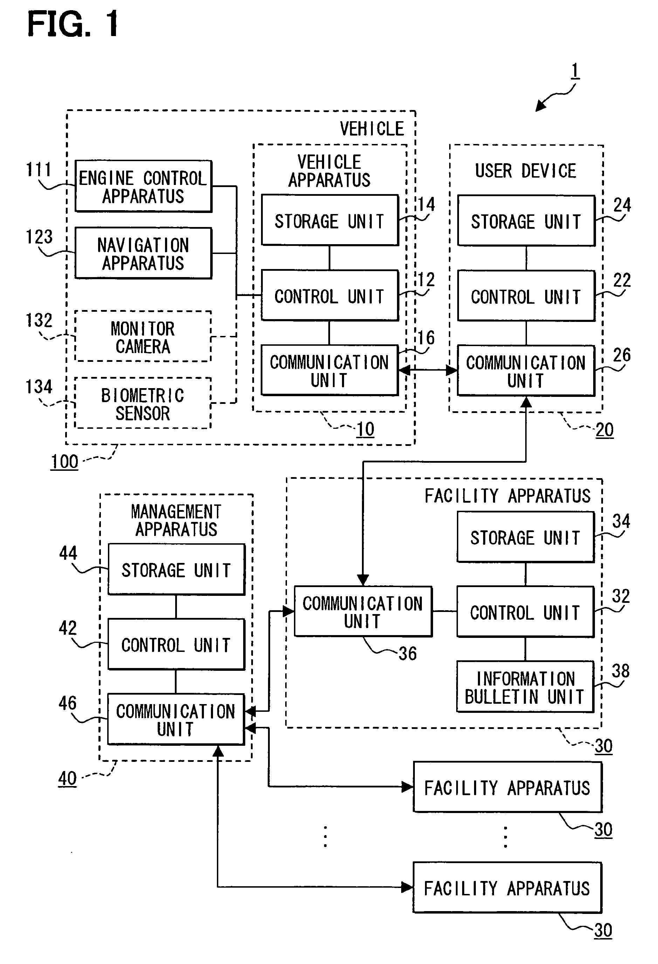

The information communication system 1 functions as an information provision system. As shown in FIG. 1, the information communication system 1 includes: a vehicle apparatus 10 mounted on a vehicle 100; a user device 20 carried by a user driving a vehicle 100; multiple facility apparatus 30 provided at facilities that can be visited by the user; and a management apparatus 40 capable of communicating with each of the facility apparatus 30.

The vehicle apparatus 10 includes: a control unit 12 for controlling operation of the entire vehicle apparatus 10; a storage unit 14 for storing various information; and a communication unit 16 for transmitting data to the user device 20 by radio communication.

The control unit 12 is connected to allow communication with an engine control apparatus 111 for controlling an engine in the vehicle 100, and a navigation apparatus 123 for providing route guidance from the current location to the destination.

The engine control apparatus 111 not only controls engine operation but also detects operational status such as starting or stopping the engine and periodically notifies the vehicle apparatus 10 of the operation status. The navigation apparatus 123 not only provides route guidance but also monitors the continuous driving time of the vehicle 100, the route traveled by the vehicle 100, and the facilities visited and reports this information when requested by the vehicle apparatus 10.

The user device 20 includes a control unit 22 for controlling operation of the entire user device 20; a storage unit 24 for storing various types of information such as user information (status information or user identification information described later) of the user carrying the user device 20; and a communication unit 26 for providing radio communication between the vehicle apparatus 10 and the facility apparatus 30. The storage unit 24 stores user identification information in advance for identifying the user carrying the user device 20. According to the first embodiment, the user device 20 is integrated with the engine key for the vehicle 100.

The facility apparatus 30 includes a control unit 32 for controlling operation of the entire facility apparatus 30; a storage unit 34 for storing various types of information; a communication unit 36 for providing radio communication with the user device 20; and an information bulletin unit 38 for reporting various types of information according to processes described later on. The information bulletin unit 38 uses a display apparatus that displays various types of information according to instructions from the control unit 32. The storage unit 34 stores information on the type of facility where the facility apparatus 30 is provided. A facility type is equivalent to a type of business (genre) as a hierarchy subordinate to a facility category. A restaurant category for example contains types such as a Chinese restaurant, a Japanese restaurant, a fast food restaurant, and a bar. The first embodiment shows typical types for a Chinese restaurant (belonging to the restaurant category), a department store (belonging to the clothing and personal accessories shop category), a dealer (belonging to an automobile-related agency category), and a motel (belonging to an accommodation facility category). The facility apparatus 30 are provided at facilities according to various business types. The storage unit 34 of each facility apparatus 30 stores a type (type of business) of the facility where the facility apparatus 30 is provided.

The management apparatus 40 includes a control unit 42 for controlling operation of the entire management apparatus 40; a storage unit 44 for storing various types of information; and a communication unit 46 for providing radio communication with the facility apparatus 30.

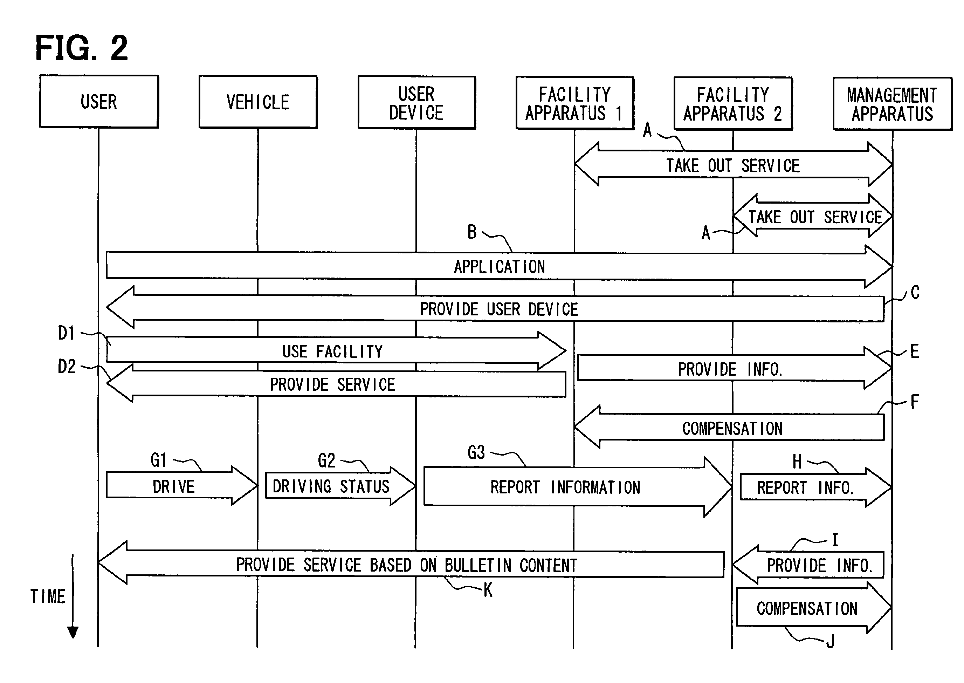

The information communication system 1 according to the above-described structure provides information according to the following procedure. An administrator managing the management apparatus 40 cooperates with each of the facilities in carrying out an information provision service (see arrow A in FIG. 2). A user applies to the administrator of the management apparatus 40 for use of the user device 20 (see arrow B in FIG. 2). The administrator then provides services to the user device 20 (see arrow C in FIG. 2).

The user from then onwards carries the user device 20 and drives the vehicle 100. The user then receives a service at a facility where the facility apparatus 30 is provided (see arrows D1 and D2 in FIG. 2). The facility apparatus 30 notifies the management apparatus 40 of information about the driving status and the service at that time (see arrow E in FIG. 2). The facility apparatus 30 reporting that information is compensated (e.g., a point) for the information (see arrow F in FIG. 2).

When the user drives the vehicle 100 and visits the facility, the facility apparatus 30 is notified of a driving status of the vehicle 100 at that point in time via the user device 20 (see arrows G1 through G3 in FIG. 2).

The driving status is further notified to the management apparatus 40 (see arrow H in FIG. 2). The management apparatus 40 specifies an optimal service corresponding to the driving status or a history of services provided at the facility for the same user in the past. This information is reported to the facility apparatus 30 (see arrow I in FIG. 2). The facility apparatus 30 that was notified with this information is then obligated to make an equivalent payment such as by deducting points (see arrow J in FIG. 2).

After receiving this bulletin, the facility apparatus 30 assumes the information to be valid for providing optimal service to the user and reports the information to an attendant at the facility where the facility apparatus 30 is provided. The facility can then provide the user with a service based on the bulletin content (see arrow K in FIG. 2).

The facility apparatus 30 thereafter provides information according to the above procedure each time a user carrying the user device 20 visits the facility.

### 1-2. Process on the vehicle apparatus 10

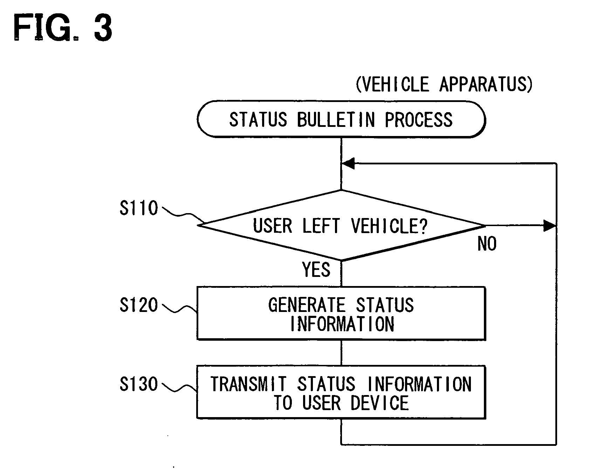

The status bulletin process performed by the control unit 12 of the vehicle apparatus 10 is described using FIG. 3. The status bulletin process is repeatedly performed after the ignition key is turned on to start the vehicle 100 and the vehicle apparatus 10.

When the status bulletin process starts, it waits until detecting the user has left the vehicle (no at S110). The process determines the user has left the vehicle when the engine control apparatus 111 reports an engine stop but does not report an engine start within a specified time period (e.g., ten seconds).

When determined in S110 that the user was detected leaving the vehicle (yes at S110), the process generates status information indicating the user's driving status at this time point (S120). Specifically, the vehicle apparatus 10 requests the navigation apparatus 123 to provide information (driving time, driving route, and visited facility). The navigation apparatus 123 is requested to report this information. The vehicle apparatus 10 detects the information and then generates status information indicating the detected information.

The status information generated at S120 is transmitted to the user device 20 via the communication unit 16 (S130). The user device 20 receives the transmitted status information and stores it in the storage unit 24 by overwriting.

After S130, the process returns to S110.

### 1-3. Process on the user device 20

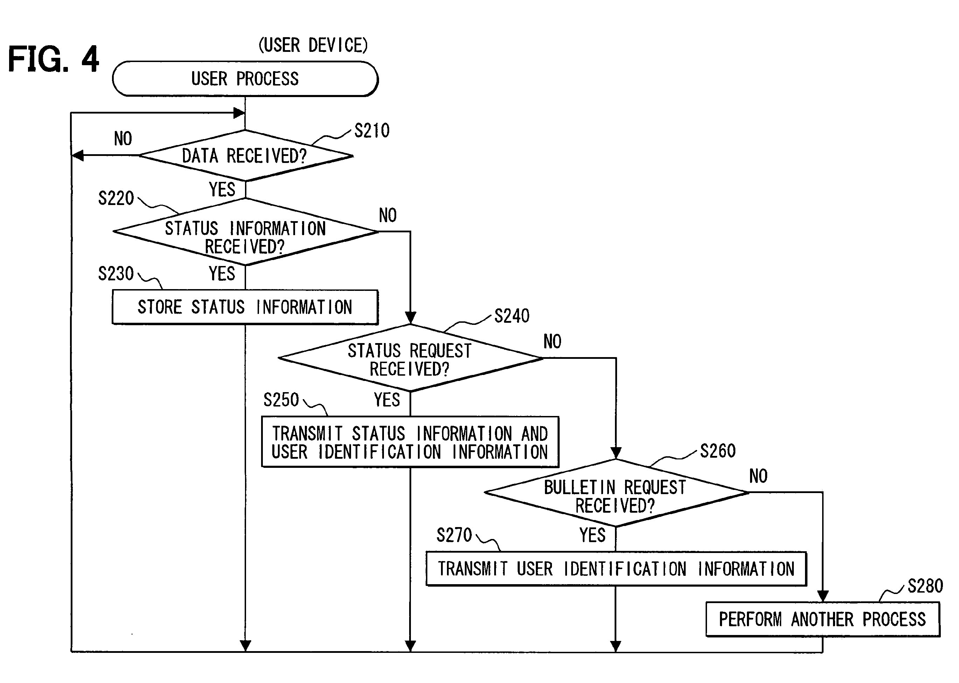

The user process performed by the control unit 22 of the user device 20 is described next using FIG. 4. The user process is repeatedly performed after the user device 20 starts.

When the user process starts, it waits until outside data is received (no at S210). When receiving data (yes at S210), the process determines whether or not the data is status information (S220). The status information is data transmitted from the vehicle apparatus 10 at S130 in the status bulletin process (FIG. 3).

When it is determined at S220 that the received data is the status information (yes at S220), the storage unit 24 stores the status information by overwriting (S230). After S230, the process returns to S210.

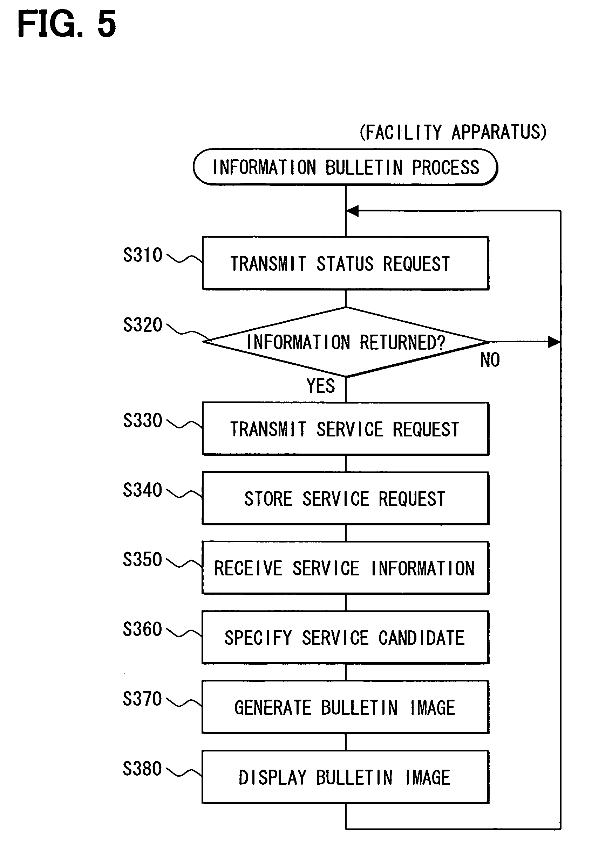

The process determines whether or not the data received at S210 is a status request (S240). The status request is data transmitted from the facility apparatus 30 at S310 of an information bulletin process (FIG. 5) to be described later. Specifically, the user device 20 is structured to perform a short-distance radio communication (e.g. Bluetooth (registered trademark), DSRC (Dedicated Short Range Communication), wireless LAN, or ZIGBEE (registered trademark)) with the facility apparatus 30. The user device 20 establishes communication (communicable status) with the facility apparatus 30 only in a communication area near the facility apparatus 30. In other words, when a user visits the facility, communication is established between the user device 20 carried by the user and the facility apparatus 30 provided at the facility. The user device 20 receives a status request from the facility apparatus 30.

When determined in S240 that the received data is the status request (yes at S240), the status information and the user identification information stored in the storage unit 24 are transmitted to the facility apparatus 30 as a transmission origin of the status request (S250). After S250, the process returns to S210.

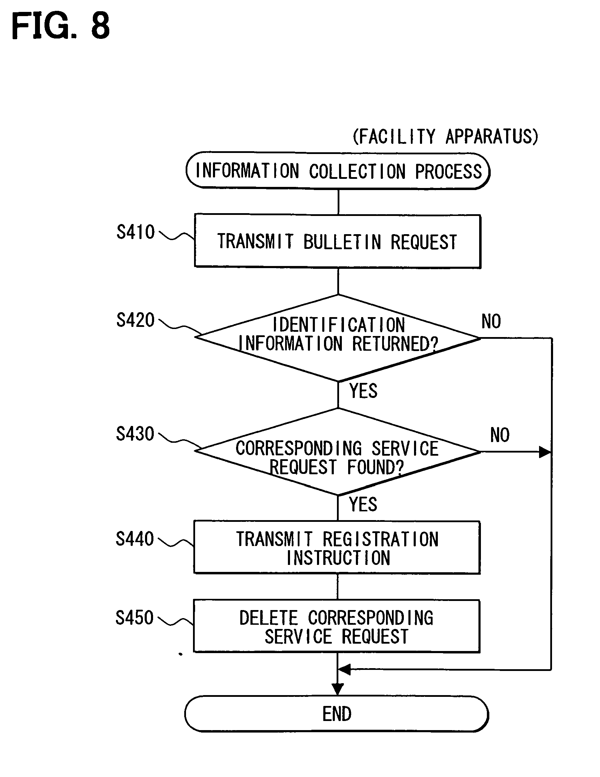

The process further determines whether or not the data received at S210 is a bulletin request (S260). The bulletin request is data transmitted from the facility apparatus 30 at S410 in the information collection process (FIG. 8) to be described later.

When determined at S260 that the received data is the bulletin request (yes at S260), the user identification information stored in the storage unit 24 is transmitted to the facility apparatus 30 serving as the transmission origin of the bulletin request (S270). After S270, the process returns to S210.

When determined at S260 that the received data is not the bulletin request (no at S260), the process performs a process (another process) corresponding to the data (S280), and then returns to S210.

### 1-4. Processes on the facility apparatus 30

### 1-4-1. Information bulletin process

The information bulletin process performed by the control unit 32 of the facility apparatus 30 is described next while referring to FIG. 5. This information bulletin process is performed repeatedly after the facility apparatus 30 starts.

After the information bulletin process starts, it waits a specified time period (e.g., one second) and then transmits a status request to the user device 20 requesting the status information (S310). The user device 20 receives the status request and returns the status information stored in the storage unit 24. When returning the status information, the user device 20 appends the user identification information stored in the storage unit 24 to the status information.

After the status request is returned at S31 0, the process determines whether or not the status information and the user identification information were returned within a specified time period, e.g., 500 ms (S320). When determined at S320 that the status information is not returned within the specified time period (no at S320), the process returns to S310.

When determined at S320 that the status information and the user identification information are returned within the specified time period (yes at S320), the process transmits a service request to the management apparatus 40 (S330). The service request asks for service information indicating a service corresponding to the status information. The already transmitted service request is prevented from being repeatedly transmitted as follows. After the service request is transmitted, the process turns on a transmission completion flag corresponding to the user identification information. The process inhibits transmission of a service request for the user identification information while the transmission completion flag turned on. The transmission completion flag is turned off when the service request is deleted at S450 of an information collection process (FIG. 8) described later on (e.g., when facility use is finished). The timing to turn off the transmission completion flag is not limited by this. For example, the transmission completion flag may be turned off when a specified time period elapses after turning on the transmission completion flag, when the facility opening hour expires, or when the communication with the user device 20 becomes unavailable.

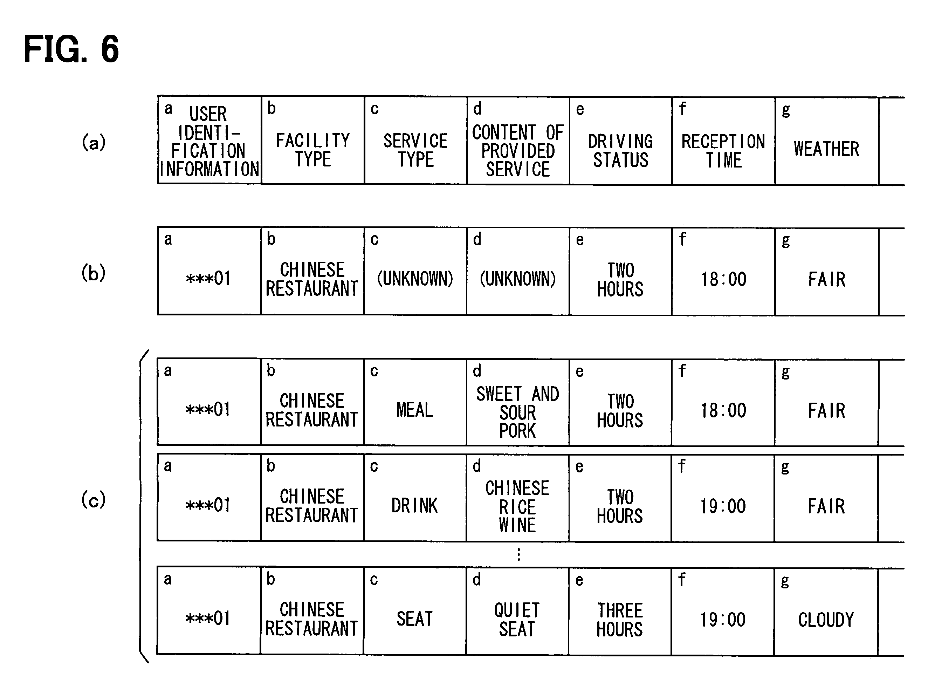

As shown in FIG. 6(a), the service request is capable of containing such parameters as user identification information (a), facility type (b), type of service provided by the facility (c), content of provided service (d), driving status indicated in the status information (e), time to receive the status information (f), and daily weather (g). At S330, the process transmits the service request provided with only information corresponding to the parameters (a), (b), and (e) through (g) except (c) and (d). When the facility apparatus 30 is provided in a facility such as a Chinese restaurant as the facility, for example, the service request contains "Chinese restaurant" as the type of facility (see FIG. 6(b)). The following description assumes that only the driving time is used as the driving status.

The management apparatus 40 receives the service request and returns service information. The service information contains one or more data records each of which has the same data structure as the above-described request. In each data record, the same parameters as used for the request are assigned to areas for the user identification information and the type of facility. As described later on, the other areas are assigned with specified parameters (see FIG. 6(c)).

The storage unit 34 stores the service request transmitted at S330 (340). The service request is data deleted after finished using the facility, namely in the process described later on where the user is charged for the service. Since the service request has been stored, the facility apparatus 30 can recognize that the user carrying the user device 20 is presently using the facility. The device for storing the service request is not limited to the storage unit 34 and it may be replaced for example by an external storage apparatus.

The process receives the service information from the management apparatus 40 that receives the service request transmitted at S330 (S350). The process specifies a service candidate to be provided to the user based on the service information (S360). The process groups data records that make up the service information, into records having the same content in the "service type." The process specifies service candidates to be provided for the user in the group (service type), the top one or more (e.g., three) major "contents of the provided service" in each group of data records.

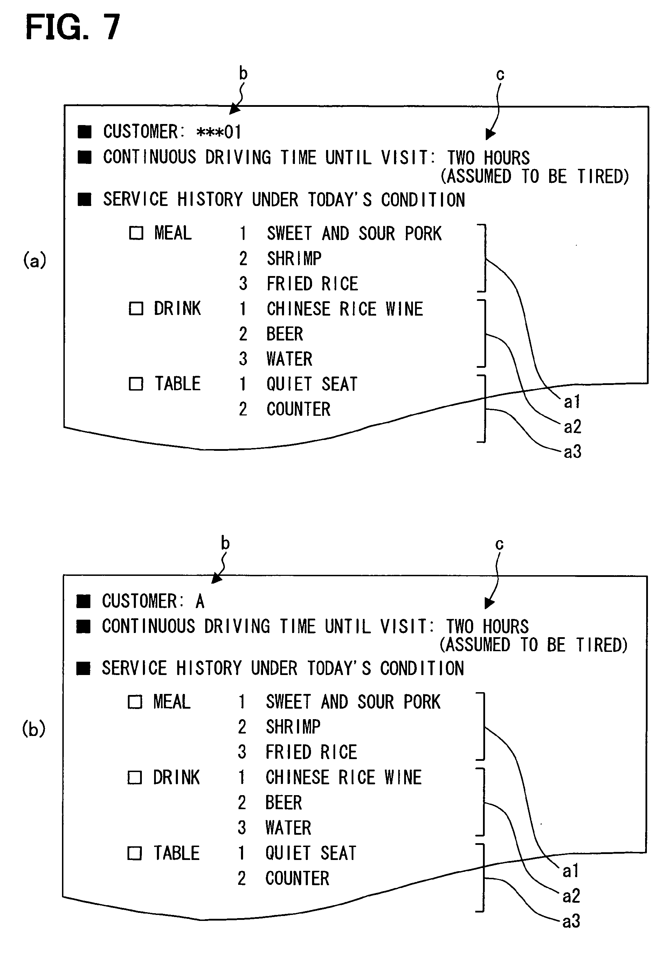

The process generates a bulletin image based on the service candidate specified at S360 (S370). FIG. 7(a) shows a generated bulletin image. The bulletin image contains service candidates (contents of provided service) a1 through a3 specified at S360 corresponding to the "service type." The user identification information b and a driving status c are provided above the service candidates. The user identification information b used here is contained in the data records making up the service information received from the management apparatus 40. The driving status c used here is contained in the data record for the service request stored at S340 (the driving status indicated by the status information received from the user device 20).

The information bulletin unit 38 displays the bulletin image generated at S370 (S380). The process thereafter returns to S310. The information bulletin process specifies information appropriate to both the user visiting the facility and the facility itself, i.e., information about services to be provided for the user from the facility in this embodiment. The facility apparatus 30 displays the contents of the specified information.

### 1-4-2. Information collection process

The information collection process performed by the control unit 32 of the facility apparatus 30 is described next while referring to FIG. 8. The information collection process is performed each time an attendant of the facility possessing the facility apparatus 30 performs an operation for charging a user serviced in the facility. The "operation for charging" here signifies an operation on a cash register (not shown). According to the first embodiment, the facility apparatus 30 is connected with the adjacent cash register. The facility apparatus 30 is structured to perform the information collection process when the attendant performs a specified operation on the cash register during charging. The cash register is structured so as to notify the facility apparatus 30 of each of the service contents provided to the user along with the corresponding service type in response to the above-described specified operation.

The information collection process starts to transmit a bulletin request to the user device 20 for requesting a user identification information bulletin (S410). The information collection process starts when the facility attendant operates the cash register. Since the facility attendant bills the customer near the cash register, the user is supposed to be near the cash register adjacent to the facility apparatus 30. At S410, the process transmits the bulletin request to the user device 20 carried by the user present near the facility apparatus 30 (specifically in a communication area capable of a short-distance radio communication with the facility apparatus 30). The bulletin request is used for requesting the user identification information capable of identifying the user. According to the first embodiment, the storage unit 24 of the user device 20 stores in advance the user identification information for identifying the user carrying the user device 20. The user device 20 receives the bulletin request from the facility apparatus 30 and returns the user identification information stored in the storage unit 24.

After transmitting the bulletin request at S41 0, the process determines whether or not the user identification information is returned within a specified time period, e.g., five seconds (S420). When determined that no user identification information is returned (no at S420), the information collection process terminates immediately.

When it is determined that the user identification information is returned (yes at S420), the process determines whether or not the storage unit 34 stores a service request containing the same user identification information as the returned one (S430). The storage unit 34 stores the service request stored at S340 of the above-described information bulletin process.

When determined at S430 that the storage unit 34 does not store the corresponding service request (no at S430), the information collection process terminates immediately. When determined at S430 that the storage unit 34 stores the corresponding service request (yes at S430), the process transmits a registration instruction to the management apparatus 40 (S440). The registration instruction is used to register the service type and various types of information (user identification information, facility type, driving status, time, and weather) specified by the service request corresponding to "contents of the provided service" notified by the cash register prior to the information collection process. The registration instruction is data that can specify various types of information including the content of the provided service. When receiving the registration instruction, the management apparatus 40 performs a process for updating the service table to be described later.

The information collection process deletes the service request determined to be stored in the storage unit 34 at S430 (S450) and then terminates.

### 1-5. Service management process on the management apparatus 40

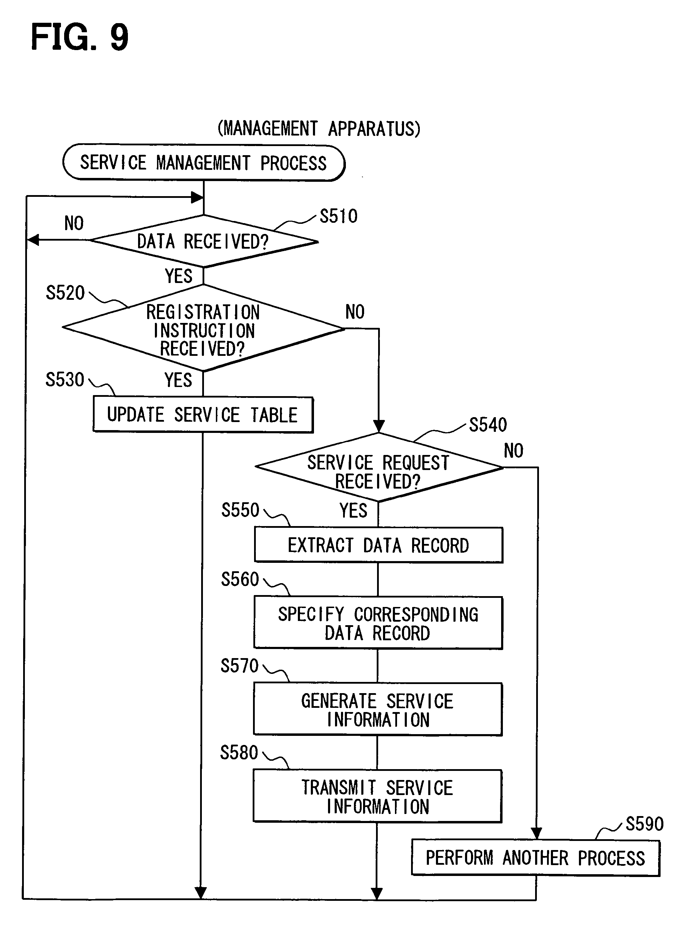

The service management process performed by the control unit 42 of the management apparatus 40 is described next while referring to FIG. 9. The service management process is performed repeatedly after the management apparatus 40 starts.

The service management process starts to wait until data is received data from the facility apparatus 30 (no at S510). When receiving data from the facility apparatus 30 (yes at S510), the process determines whether or not the data is a registration instruction (S520). The registration instruction is data transmitted from the facility apparatus 30 at S440 of the information collection process.

When determined at S520 that the received data is the registration instruction (yes at S520), the process updates a service table based on the registration instruction (S530). The service table contains one or more data records each having the same data structure as the above-described service information. Each data record indicates information (usage history in the past) about services provided for the user at the facility in the past.

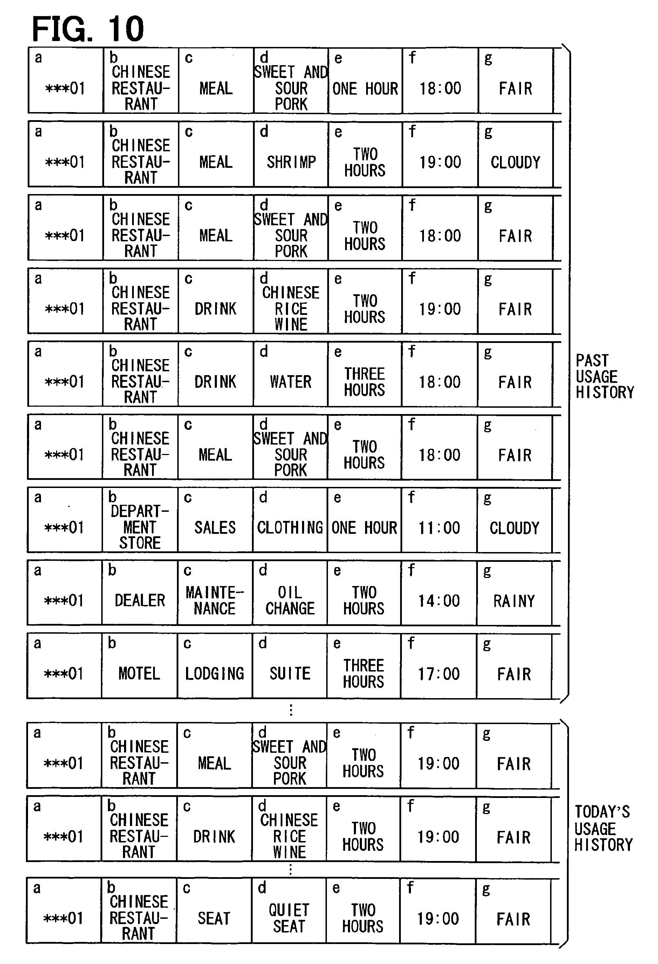

At S530, the process generates data records in the service table corresponding to the number of "contents of the provided service" whose registration was commanded by the registration instruction. Each "contents of the provided service" and its "service type" is assigned to the "content of the provided service" and "service type" in each data record. Further, the registration instruction is issued to register other pieces of information. These are assigned to "user identification information," "type of facility," "driving status," "time," and "weather" in each data record (see "usage history of the day" in FIG. 10).

After Step S530, the process returns to Step S510. The process determines whether or not the data received at S510 is a service request (S540). The service request is transmitted as data from the facility apparatus 30 at S330 of the information bulletin process.

When determined at S540 that the received data is the service request (yes at S540), the process extracts a data record containing the same user identification information as that specified by the service request from the data records registered in the service table (S550).

The process specifies one or more appropriate data records corresponding to the service request out of the data records extracted at S550 (S560). In this example, the targeted data records contain the "type of facility" matching that in the service request. Among these data records, the process specifies one or more data records (up to five data records according to the first embodiment) in a group characterized by the same "service type." The data records are specified in the order of similarities to the service request with respect to "driving status," "time," and "weather."

Assuming for example that the service request specifies "Chinese restaurant" as the "type of facility", the process extracts a data record containing "Chinese restaurant" as the "type of facility" from the data records extracted at S550. The extracted data records are grouped according to parameters contained in "service type." The process specifies up to five data records in order, among the group of data records based on similarities to "driving status," "time," and "weather" specified in the service request.

The process first specifies a data record containing "driving status," "time," and "weather" all matching those specified in the service request. The process specifies the other data records having different parameters according to the following preferences. The process first specifies a data record having fewer different parameters than the others. When the data records have the same number of parameters differ from those specified in the service request, the process preferentially specifies a data record having a small difference degree as the different parameters. The "difference degree" signifies a time period or a time difference as "driving status" or "time." The "difference degree" for example signifies a quantitative difference between quantified weather conditions (e.g., fair = 1, cloudy = 2, and rainy 3) as "weather."

The above-described service request is transmitted from the facility apparatus 30 when it receives the status information and the user identification information from the user device 20. The service request contains the parameter of the driving status indicated by the status information, i.e., the driving status immediately before the user visits the facility. As described above, the data record containing a "driving status" similar to that in the service request registers a parameter concerning the service provided in a status similar to the one valid immediately before the user visits the facility. At that time point, it is highly probable that the user is including an appropriate service indicated by the parameters registered in the data record. At S560 above, the process specifies an optimal service corresponding to the user's driving status by specifying a data record whose "driving status" or a similar item, approximates that in the service request.

The process generates information, i.e., service information, containing the data record specified at S560, and then transmits the service information to the facility apparatus 30 (S580). The facility apparatus 30 receives the service information at S350 of the information bulletin process.

After Step S580, the process returns to Step S510. When determined at S540 that the received data is not the service request (no at S540), the process performs a process (another process) corresponding to the data (S590), and then returns to S510.

### 1-6. Effects

The information communication system 1 according to this structure allows the user device 20 to notify the facility apparatus 30 of the user's driving status in the vehicle 100 (S320 in FIG. 5). Upon receiving this bulletin, the facility apparatus 30 exchanges the status information with the management apparatus 40 and specifies a service corresponding to the driving status indicated in the status information (S330 through S360 in FIG. 5). The facility apparatus 30 notifies the service as a service candidate to be provided for the user carrying the user device 20 (S370 in FIG. 5).

The user device 20 is in this way used to notify the facility apparatus 30 of information such as a user's driving status (status information) in the vehicle 100. This information can be effectively used for notifying the user of service candidates that should be provided.

The structure reports service candidates (potential services) that match the driving status of the user visiting the facility. This structure is preferable since it allows the facility to specify and provide an optimal service appropriate for the driving status without making inquiries to the user and obtaining responses.

The facility apparatus 30 can report service candidates to be provided for the user, i.e., services that match not only the driving status valid immediately before the visit from the user carrying the user device 20, but also match the past facility usage history.

The facility apparatus 30 provides a bulletin using the bulletin screen (S380 in FIG. 5) that displays not only the content of the service specified in the service information but also the user identification information specified by the service information. The user or another person (e.g., a facility attendant) can therefore view the display content to discern which user is to be provided with the service among the service candidates displayed in the bulletin screen.

According to the structure of the above-described information communication system 1, the management apparatus 40 is connected for communication with each of the multiple facility apparatus 30. The management apparatus 40 collects and manages information about services provided to the user from the facility apparatus 30 and supplies the service information to the facility apparatus 30.

When a structure allows the facility apparatus 30 to store a user history, a service candidate can be notified based on the user history in that facility only. On the other hand, the above-described structure provides service information from the management apparatus 40 that provides integrated information management. This management allows reporting service candidates appropriate to the user's driving status and other items based on user histories in more than one facility. Therefore, even better service candidates appropriate to the user's driving status and other items can be reported.

The system jointly manages various facility information containing different types of facilities. The user can be provided with appropriate services at the facilities visited. In other words, the system can specify an optimal service regardless of which type of business the facility belongs to. Moreover the user can be serviced like a regular customer even when visiting the facility for the first time.

### 1-7. Functions

In the vehicle apparatus 10, the control unit 12 that performs S110 of the status bulletin process, (FIG. 3) functions as an unloading detection unit. The control unit 12 that performs S120, functions as a status detection unit. The control unit 12 that performs S130, functions as a vehicle transmission unit.

In the user device 20, the storage unit 24 and the control unit 22 that performs S230 of the user process (FIG. 4) function as a user information storage unit. The control unit 22 that performs S250, functions as a user information transmission unit.

In the facility apparatus 30, the storage unit 34 functions as a facility information storage unit. The control unit 32 that performs S330 and S350 through S380 of the information bulletin process, (FIG. 5) functions as an information output unit. The control unit 32 that performs S440 of the information collection process, (FIG. 8) functions as a history information registration unit.

In the management apparatus 40, the storage unit 44 functions as a special information storage unit. The control unit 42 that performs S550 through S580 of the service management process (FIG. 9) functions as a special information reply unit.

### 2. Second embodiment

The following describes an information communication system 2 according to the second embodiment.

### 2-1. Overall structure

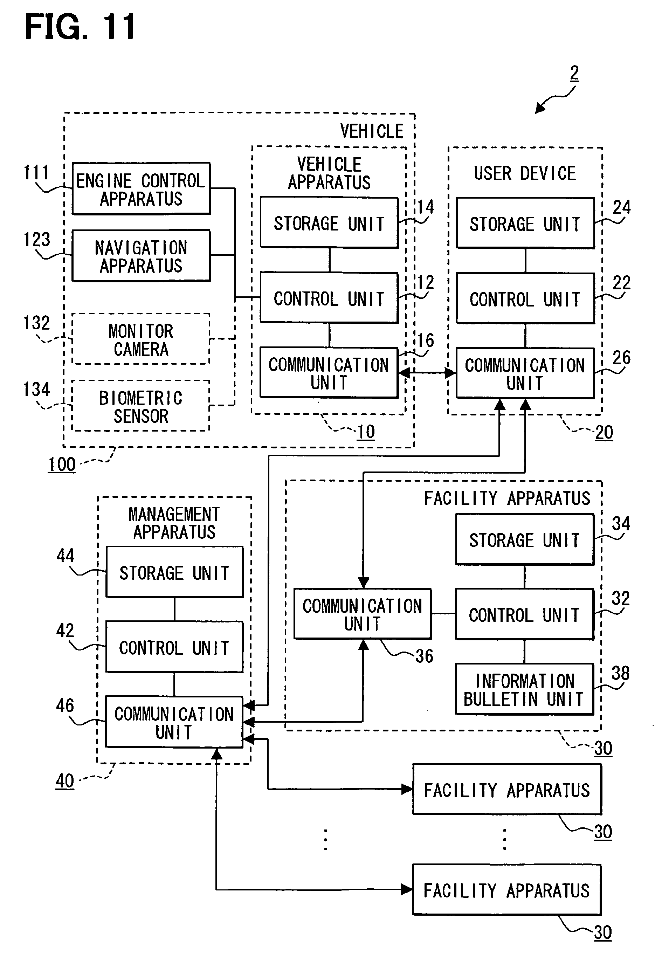

As shown in FIG. 11, the information communication system 2 according to the second embodiment is basically the same structure as the information communication system 1 (FIG. 1) according to the first embodiment. A difference is that the user device 20 is capable of radio communication not only with the vehicle apparatus 10 and the facility apparatus 30 but also with the management apparatus 40.

In the information communication system 2 according to the second embodiment, the facility apparatus 30 acquires service information from the management apparatus 40 and outputs it using a communication procedure different from that used for the information communication system 1 according to the first embodiment.

In the above-described information communication system 1 according to the first embodiment, the vehicle apparatus 10 transmits the status information to the user device 20 (S130). The user device 20 transmits the status information and the user identification information to the facility apparatus 30 (S250). The facility apparatus 30 transmits a service request to the management apparatus 40 (S330). The management apparatus 40 returns the service information to the facility apparatus 30 (S580). The facility apparatus 30 provides a bulletin based on the service information (S380).

However, in the information communication system 2 of the second embodiment, the vehicle apparatus 10 transmits the status information to the user device 20. In response, the facility apparatus 30 transmits information indicating the types of facility to the user device 20. The user device 20 transmits a service request to the management apparatus 40. The management apparatus 40 transmits the service information to the facility apparatus 30. The facility apparatus 30 provides a bulletin based on the service information.

The following describes the structure of the information communication system 2 of the second embodiment more specifically. The vehicle apparatus 10, the facility apparatus 30, and the management apparatus 40 are the same as those of the first embodiment and their description is omitted. As described later on, the contents of the information bulletin process (FIG. 13) and the information collection process (FIG. 14) performed by the control unit 32 of the facility apparatus 30 differ from the contents of the information bulletin process (FIG. 5) and the information collection process (FIG. 8) of the first embodiment. Furthermore, as described later on, the contents of the service management process performed by the control unit 42 of the management apparatus 40 differ from the contents of the service management process (FIG. 9) of the first embodiment.

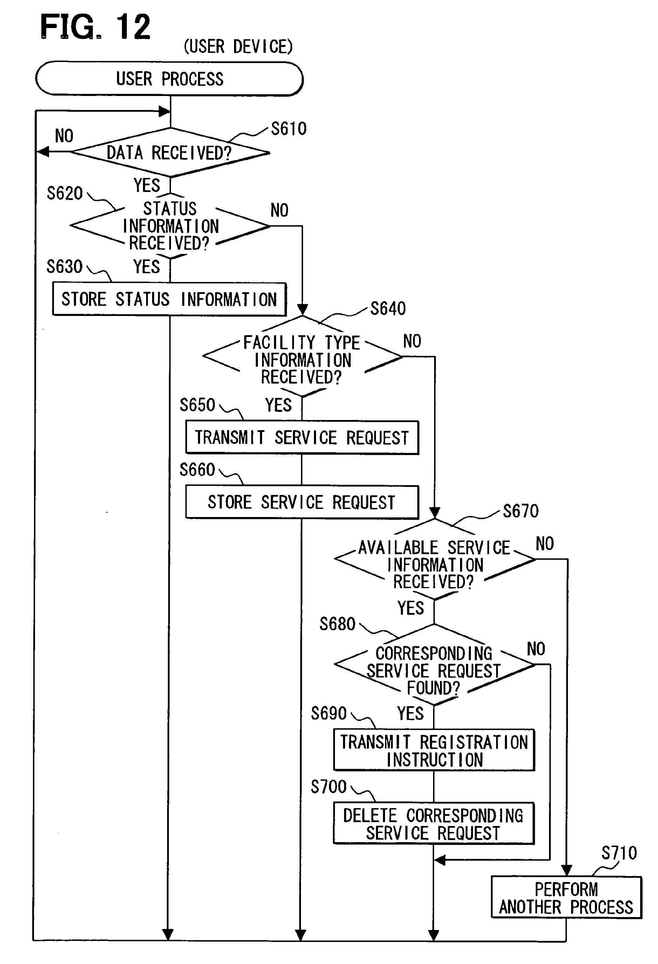

The structure of the user device 20 is basically the same as that of the first embodiment. A difference is that the communication unit 26 performs radio communication with the vehicle apparatus 10, the facility apparatus 30, and the management apparatus 40. As described later on, the contents of the user process (FIG. 12) performed by the control unit 22 of the user device 20 differ from the contents of the user process (FIG. 4) of the first embodiment.

### 2-2. Process on the vehicle apparatus 10

The status bulletin process performed by the control unit 12 of the vehicle apparatus 10 is the same as the status bulletin process (FIG. 3) of the first embodiment so a description is omitted.

### 2-3. Process on the user device 20

The user process performed by the control unit 22 of the user device 20 is described next while referring to FIG. 12. The user process is repeatedly performed after the user device 20 starts. The contents of S610 through S630 in the user process are the same as those of S21 0 through S230 in the user process (FIG. 4) of the first embodiment and a description of the specific process contents is omitted.

When determined at S620 that the received data is not the status information (no at S620), the process determines whether or not the data received at S610 is the facility type information (S640). The facility apparatus 30 transmits the facility type information along with facility identification information, i.e., identification information unique to each facility, at S81 0 of an information bulletin process (FIG. 13) to be described later on.

When determined at S640 that the received data is the facility type information (yes at S640), the process transmits a service request to the management apparatus 40 along with the facility identification information received from the facility apparatus 30 (S650). The service request requests transmission of the service information indicating the service corresponding to the status information stored in the storage unit 24 to the facility apparatus 30 as the transmission source of the facility type information. The service request transmitted in this process has the same format as that of the service request transmitted at S330 of the information bulletin process (FIG. 5) according to the first embodiment from the facility apparatus 30 to the management apparatus 40 (FIG. 6(a)). Similar to the information bulletin process according to the first embodiment, previously transmitted service requests can be prevented from being repeatedly transmitted as follows. After the service request is transmitted, the process turns on the transmission completion flag corresponding to the facility identification information. The process inhibits transmission of a service request for the facility identification information with the transmission completion flag turned on.

The storage unit 24 stores the service request transmitted at S650 (S660). After Step S660, the process returns to Step S610. When determined at S640 that the received data is not the facility type information (no at S640), the process determines whether or not the data received at S610 above is the available service information (S670). The facility apparatus 30 transmits the available service information along with the facility identification information at S91 0 in an information collection process (FIG. 14) to be described later.

When determined at S670 that the received data is the available service information (yes at S670), the process determines whether or not the storage unit 24 stored the service request containing the same facility identification information as that received along with the available service information (S680). The storage unit 24 stores the service request stored at S660.

When determined at S680 that the storage unit 24 does not store the corresponding service request (no at S680), the process immediately returns to S610. When determined at S680 that the storage unit 24 stores the corresponding service request (yes at S680), the process transmits a registration instruction to the management apparatus (S690). The registration instruction transmitted in this process has the same format as that transmitted from the facility apparatus 30 to the management apparatus 40 at S440 of the information collection process (FIG. 8) according to the first embodiment. The management apparatus 40 receives the registration instruction and performs a process for updating the service table.

At S700, the process deletes the service request determined to be stored in the storage unit 24 at S680 and returns to S610. When determined at S670 that the received data is not the available service information (no at S670), the process performs a process (another process) corresponding to the data (S710) and returns to S610.

### 2-4. Processes on the facility apparatus 30

### 2-4-1. Information bulletin process

The information bulletin process performed by the control unit 32 of the facility apparatus 30 is described next while referring to FIG. 13. The information bulletin process is repeatedly performed after the facility apparatus 30 starts. The contents of S830 through S850 in the information bulletin process are the same as those in S360 through S380 in the information bulletin process (FIG. 5) according to the first embodiment and a description of the specific process contents is omitted.

When the information bulletin process starts, it waits for a specified time period (e.g., one second) and then transmits the facility type information stored in the storage unit 24 along with the facility identification information to the user device 20 (S810). The user device 20 (the user device 20 in a communication area) receives the facility type information and transmits a service request to the management apparatus 40 (S650). The management apparatus 40 transmits service information to the facility apparatus 30 (S580). The storage unit 24 stores the facility identification information along with the facility type information.

When receiving the service information (yes at S820), the process performs S830 through S850 and returns to S810. The information bulletin process specifies information appropriate to both the user visiting the facility and the facility itself, i.e., information about services to be provided for the user from the facility according to the embodiment. The facility apparatus 30 displays the contents of the specified information.

### 2-4-2. Information collection process

The information collection process performed by the control unit 32 of the facility apparatus 30 is described next while referring to FIG. 14. The information collection process, similar to the information collection process (FIG. 8) according to the first embodiment, is performed each time an attendant of the facility possessing the facility apparatus 30 performs an operation (cash register operation) for charging a user serviced in the facility. Similar to the first embodiment, the cash register is structured so as to notify the facility apparatus 30 of each of the service contents provided for the user along with the corresponding service type in response to the attendant's specified operation during charging.

The information collection process starts to transmit available service information along with the facility identification information to the user device 20 and then terminates. The available service information indicates the service content and type entered from the cash register. Similar to the bulletin request transmitted at S410 in the information collection process (FIG. 8) according to the first embodiment, the available service information is transmitted to the user device 20 carried by a user near the facility apparatus 30 within the communication area, i.e., by the user receiving the service. The user device 20 receives the available service information and transmits a registration instruction to the management apparatus 40 (S690). The management apparatus 40 receives the registration instruction and performs a process for updating the service table (S530).

### 2-5. Service management process on the management apparatus 40

The service management process is performed by the control unit 42 of the management apparatus 40 and is basically the same as the service management process (FIG. 9) according to the first embodiment. The process differs in the following points (2a) and (2b).

(2a) A registration instruction and a service request are received from the user device 20, not the facility apparatus 30. (2b) At S580, the process transmits the service information generated at S570 to the facility apparatus 30 corresponding to the facility identification information received along with the service request. Specifically, the management apparatus 40 stores the facility identification information linked with a transmission destination address for the facility apparatus 30. The management apparatus 40 transmits the service information to a transmission destination address corresponding to the facility identification information.

Other sections of the structure are the same as the first embodiment so a description is omitted.

### 2-6. Effects

The information communication system 2 according to the second embodiment is structured as described above. When a user gets out of the vehicle 100, the vehicle apparatus 10 transmits the status information indicating the user's driving status to the user device 20. The user device 20 stores the status information. When the user visits the facility, the facility apparatus 30 provided in the facility transmits the facility type information indicating the facility type to the user device 20 carried by the user. The user device 20 transmits a service request requesting transmission of the service information to the management apparatus 40. The management apparatus 40 transmits the service information corresponding to the service request to the facility apparatus 30. The facility apparatus 30 can therefore report service candidates to be provided for the user from the facility.

The information communication system 2 of the second embodiment can therefore also provide an effect similar to that of the information communication system 1 of the first embodiment.

### 2-7. Functions

In the vehicle apparatus 10, the control unit 12 that performs S110 of the status bulletin process, (FIG. 3) functions as an unloading detection unit. The control unit 12 that performs S120, functions as a status detection unit. The control unit 12 that performs S130, functions as a vehicle transmission unit.

In the user device 20, the storage unit 24 and the control unit 22 that performs S630 of the user process (FIG. 12) function as a user information storage unit. The control unit 12 that performs S650 functions as a special information transmission request unit.

In the facility apparatus 30, the storage unit 34 functions as a facility information storage unit. The control unit 32 that performs S810 through S850 in the information bulletin process, (FIG. 13) functions as an information output unit. The control unit 32 that performs S910 of the information collection process (FIG. 14), functions as a history information registration unit.

In the management apparatus 40, the storage unit 44 functions as a special information storage unit. The control unit 42 that performs S550 through S580 in the service management process (FIG. 9), functions as a special information transmission unit.

### 3. Third embodiment

An information communication system 3 according to the third embodiment is described next.

### 3-1. Overall structure

As shown in FIG. 15, the information communication system 3 of the third embodiment is basically the same as the information communication system 2 (FIG. 11) according to the second embodiment. A difference is that the user device 20 includes an information bulletin unit 28 for reporting various types of information.

In the information communication system 3 according to the third embodiment, the user device 20 provides a bulletin based on the service information. In the information communication system 2 according to the second embodiment, the vehicle apparatus 10 transmits the status information to the user device 20 (S130). The facility apparatus 30 transmits the facility type information indicating the facility type to the user device 20 (S810). The user device 20 transmits a service request to the management apparatus 40 (S650). The management apparatus 40 transmits the service information to the facility apparatus 30 (S580). The facility apparatus 30 provides a bulletin based on the service information (S850).

However in the information communication system 3 according to the third embodiment, the vehicle apparatus 10 transmits the status information to the user device 20. The facility apparatus 30 transmits the facility type information to the user device 20. The user device 20 transmits a service request to the management apparatus 40. The management apparatus 40 returns the service information to the user device 20. The user device 20 provides a bulletin based on the service information.

The structure of the information communication system 3 according to the third embodiment is next described in detail. The structures of the vehicle apparatus 10, the facility apparatus 30, and the management apparatus 40 are the same as those for the second embodiment so a description is omitted. As described later on, the contents of the information bulletin process (FIG. 17) differ from the contents of the information bulletin process (FIG. 13) according to the second embodiment. Furthermore, as described later on, the contents of the service management process performed by the control unit 42 of the management apparatus 40 differ from the contents of the service management process according to the second embodiment.

The structure of the user device 20 is basically the same as that of the second embodiment. A difference is that the user device 20 includes an information bulletin unit 28 for reporting various types of information. The information bulletin unit 28 includes a display apparatus that displays various types of information according to an instruction from the control unit 22. According to the third embodiment, the user device 20 is structured to use a mobile phone.

As described later on, the contents of the user process (FIG. 16) performed by the control unit 22 of the user device 20 differ from the contents of the user process (FIG. 12) of the second embodiment.

### 3-2. Process on the vehicle apparatus 10

The status bulletin process performed by the control unit 12 of the vehicle apparatus 10 is the same as the status bulletin process (FIG. 3) according to the second embodiment so a description is omitted.

### 3-3. Process on the user device 20

The user process performed by the control unit 22 of the user device 20 is described next while referring to FIG. 16. The user process is repeatedly performed after the user device 20 starts. The contents of S1010 through S1060 and S1110 through S1150 in the user process are the same as those in S610 through S710 in the user process (FIG. 12) of the second embodiment and a description of specific process contents is omitted.

The process receives the service information from the management apparatus 40 that receives the service request transmitted at S1050 (S1070). The process specifies a service candidate to be provided for the user based on the service information (S1080). The service candidate is specified in the same manner as S360 in the information bulletin process (FIG. 5) of the first embodiment.

The process generates a bulletin image based on the service candidate specified at S1080 (S1090). The bulletin image is generated in the same manner as S370 in the information bulletin process (FIG. 5) of the first embodiment.

The process allows the information bulletin unit 28 to display the bulletin image generated at S1090 (S1100) and then returns to S1010. The user process specifies information appropriate to both the user visiting the facility and the facility itself, i.e., information about services to be provided to the user from the facility according to the embodiment. The user device 20 displays the contents of the specified information.

### 3-4. Processes on the facility apparatus 30

### 3-4-1. Information bulletin process

The information bulletin process performed by the control unit 32 of the facility apparatus 30 is described next while referring to FIG. 17. The information bulletin process is repeatedly performed after the facility apparatus 30 starts. The contents of S1210 in the information bulletin process are the same as those of S810 in the information bulletin process (FIG. 13) of the second embodiment.

When the information bulletin process starts, it waits for a specified time period (e.g., one second) and then transmits the facility type information stored in the storage unit 24 along with the facility identification information to the user device 20 (S1210). The user device 20 (the user device 20 in a communication area) receives the facility type information and transmits a service request to the management apparatus 40 (S1050). The management apparatus 40 returns the service information to the user device 20 (S580).

### 3-4-2. Information collection process

The information collection process performed by the control unit 32 of the facility apparatus 30 is the same as the information collection process (FIG. 14) according to the second embodiment, so a description is omitted.

### 3-5. Service management process on the management apparatus 40

The service management process performed by the control unit 42 of the management apparatus 40 is basically the same as the service management process according to the second embodiment. A difference is S580 where the service information generated at S570 is returned to the user device 20 as a transmission source of the service request. Other sections are the same as the second embodiment, so a description is omitted.

### 3-6. Effects

The information communication system 3 according to the third embodiment is structured as describe above. When a user gets out of the vehicle 100, the vehicle apparatus 10 transmits the status information indicating the user's driving status to the user device 20. The user device 20 stores the status information. When the user visits the facility, the facility apparatus 30 provided in the facility transmits the facility type information indicating the facility type to the user device 20 carried by the user. The user device 20 transmits a service request to the management apparatus 40 requesting transmission of the service information. The management apparatus 40 returns the service information corresponding to the service request to the user device 20. The user device 20 can in this way report service candidates that can be provided to the user from the facility.

Similarly to the above-described embodiments, the information communication system 3 of the third embodiment can also report service candidates that are special for the combination of a user using a facility and the facility to be used.

The information communication system 3 of the third embodiment in particular can report service candidates on the user device 20. The user carrying the user device 20 can be informed of the service content before the facility provides the service. The user can therefore prepare for the service to be provided or change to another facility.

Similarly to the bulletin image (FIG. 7) of the first embodiment, the information communication system 3 of the third embodiment has described an example of a structure displaying an image based on service candidates to be provided to the user from the facility. According to this structure, the user can in advance be informed about a service (recommended service) provided from the facility before actually using the facility. The contents of the bulletin image are not limited to this information and the user device 20 may for example display a bulletin image providing information such as a menu of services available from the facility, a map in the facility, and the hour the facility opens. In this case, the character size, language, color, and similar items for the bulletin image can be changed according to information such as the age, nationality, and preferences of the user having the user device 20.

### 3-7. Functions

In the vehicle apparatus 10, the control unit 12 that performs S110 of the status bulletin process, (FIG. 3) functions as an unloading detection unit. The control unit 12 that performs S120, functions as a status detection unit. The control unit 12 that performs S130, functions as a vehicle transmission unit.

In the user device 20, the storage unit 24 and the control unit 22 that performs S1030 of the user process (FIG. 16) function as a user information storage unit. The control unit 22 that performs S1050 and S1070 through S1100 functions as an information output unit.

In the facility apparatus 30, the storage unit 34 functions as a facility information storage unit. The control unit 32 that performs S1210 of information bulletin process (FIG. 17), functions as a facility information transmission unit. The control unit 32 that performs S91 0 of the information collection process (FIG. 14), functions as a history information registration unit.

In the management apparatus 40, the storage unit 44 functions as a special information storage unit. The control unit 42 that performs S550 through S580 in the service management process (FIG. 9) functions as a special information reply unit.

### 4. Fourth embodiment

The information communication system 3 according to the fourth embodiment is described next. The fourth embodiment uses the overall structure diagram (FIG. 15) for the information communication system 3 of the third embodiment.

### 4-1. Overall structure

In the information communication system 3 according to the fourth embodiment, the user device 20 acquires service information from the management apparatus 40 and outputs it using a communication procedure different from that used for the information communication system 3 of the third embodiment.

In the above-described information communication system 3 of the third embodiment, the vehicle apparatus 10 transmits the status information to the user device 20 (S130). The facility apparatus 30 transmits the facility type information to the user device 20 (S1210). The user device 20 transmits a service request to the management apparatus 40 (S1050). The management apparatus 40 returns the service information to the user device 20 (S580). The user device 20 provides a bulletin based on the service information (S1100).

However, in the information communication system 3 of the fourth embodiment, the vehicle apparatus 10 transmits the status information to the user device 20. The user device 20 transmits the status information and the user identification information to the facility apparatus 30. The facility apparatus 30 transmits a service request to the management apparatus 40. The management apparatus 40 transmits the service information to the user device 20. The user device 20 provides a bulletin based on the service information.

The following more specifically describes the structure of the information communication system 3 of the fourth embodiment. The structures of the vehicle apparatus 10, the user device 20, the facility apparatus 30, and the management apparatus 40 are the same as those for the third embodiment, so a description is omitted. As described later on, the contents of the user process (FIG. 18) performed by the control unit 22 of the user device 20 differ from the contents of the user process (FIG. 16) of the third embodiment. Further, as described later on, the contents of the information bulletin process (FIG. 19) and the information collection process (FIG. 8) performed by the control unit 32 of the facility apparatus 30 differ from the contents of the information bulletin process (FIG. 17) and the information collection process (FIG. 14) according to the third embodiment. Moreover, the contents of the service management process (described later on) performed by the control unit 42 of the management apparatus 40 differ from the contents of the service management process according to the third embodiment.

### 4-2. Process on the vehicle apparatus 10

The status bulletin process performed by the control unit 12 of the vehicle apparatus 10 is the same as the status bulletin process (FIG. 3) according to the third embodiment and so a description is omitted.

### 4-3. Process on the user device 20

FIG. 18 is a flowchart showing a user process performed by the control unit 22 of the user device 20. The user process is repeatedly performed after the user device 20 starts. The contents of S1310 through S1350 and S1400 through S1420 in the user process are the same as those of S21 0 through S280 in the user process (FIG. 4) of the first embodiment. The contents of S1360 through S1390 are the same as those of S1070 through S1100 in the user process (FIG. 16) of the third embodiment. A description of specific process contents is therefore omitted.

The user process specifies information appropriate to both the user visiting the facility and the facility itself, i.e., information about services to be provided for the user from the facility according to the embodiment. The user device 20 displays the contents of the specified information.

### 4-4. Processes on the facility apparatus 30

### 4-4-1. Information bulletin process

FIG. 19 is a flowchart showing an information bulletin process performed by the control unit 32 of the facility apparatus 30. The information bulletin process is repeatedly performed after the facility apparatus 30 starts. The contents of S1510 through S1540 in the information bulletin process are the same as those of S310 through S340 in the information bulletin process (FIG. 5) according to the first embodiment. A description of the specific process contents is therefore omitted.

### 4-4-2. Information collection process

The information collection process performed by the control unit 32 of the facility apparatus 30 is the same as the information collection process (FIG. 8) of the first embodiment, so a description is omitted.

### 4-5. Service management process on the management apparatus 40

The service management process performed by the control unit 42 of the management apparatus 40 is basically the same as the service management process (FIG. 9) of the first embodiment. A difference in the service management process is that in S580 the service information generated at S570 is transmitted to the user device 20 matching the user identification information contained in the service request. Specifically, the management apparatus 40 stores the user identification information linked with the transmission destination address of the user device 20. The management apparatus 40 transmits the service information to the transmission destination address matching the user identification information. Other sections are the same as the first embodiment, so a description is omitted.

### 4-6. Effects

The information communication system 3 according to the fourth embodiment is structured as described above. When a user gets out of the vehicle 100, the vehicle apparatus 10 transmits status information indicating the user's driving status to the user device 20. The user device 20 stores the status information. When the user visits the facility, the status information stored in the user device 20 carried by the user is transmitted to the facility apparatus 30 provided in the facility. The facility apparatus 30 transmits a service request requesting transmission of the service information to the management apparatus 40. The management apparatus 40 returns the service information corresponding to the service request to the user device 20. The user device 20 can therefore report a service candidate to provide to the user from the facility.

The information communication system 3 of the fourth embodiment can also provide an effect similar to that of the information communication system 3 of the third embodiment.

### 4-7. Functions

In the vehicle apparatus 10, the control unit 12 that performs S110 of the status bulletin process, (FIG. 3) functions as an unloading detection unit. The control unit 12 that performs S120, functions as a status detection unit. The control unit 12 that performs S130, functions as a vehicle transmission unit.

In the user device 20, the storage unit 24 and the control unit 22 that performs S1330 of the user process (FIG. 18) function as a user information storage unit. The control unit 22 that performs S1350 and S1370 through S1390, functions as an information output unit.

In the facility apparatus 30, the storage unit 34 functions as a facility information storage unit. The control unit 32 that performs S1530 of the information bulletin process (FIG. 19), functions as a special information transmission request unit. The control unit 32 that performs S440 of the information collection process (FIG. 8), functions as a history information registration unit.

In the management apparatus 40, the storage unit 44 functions as a special information storage unit. The control unit 42 that performs S550 through S580 in the service management process (FIG. 9), functions as a special information transmission unit.

### 5. Fifth embodiment

An information communication system 5 according to the fifth embodiment is described next.

### 5-1. Overall structure

As shown in FIG. 20, the information communication system 5 according to the fifth embodiment is basically the same as that for the information communication system 1 (FIG. 1) according to the first embodiment. The differing point is that the vehicle apparatus 10 includes an information bulletin unit 18 for reporting various types of information. Another differing point is that the vehicle apparatus 10 is capable of radio communication not only with the user device 20 but also with the management apparatus 40.

In the information communication system 5 of the fifth embodiment, the vehicle apparatus 10 provides a bulletin based on the service information. In the information communication system 1 according to the first embodiment, the vehicle apparatus 10 transmits the status information to the user device 20 (S130). The user device 20 transmits the status information and the user identification information to the facility apparatus 30 (S250). The facility apparatus 30 transmits a service request to the management apparatus 40 (S330). The management apparatus 40 returns the service information to the facility apparatus 30 (S580). The facility apparatus provides a bulletin based on the service information (S380).

However, in the information communication system 5 according to the fifth embodiment, the vehicle apparatus 10 transmits the status information to the user device 20. The user device 20 transmits the status information and the user identification information to the facility apparatus 30. The facility apparatus 30 transmits a service request to the management apparatus 40. The management apparatus 40 transmits the service information to the vehicle apparatus 10. The vehicle apparatus 10 provides a bulletin based on the service information.

The following more specifically describes the structure of the information communication system 5 of the fifth embodiment. The structure of the vehicle apparatus 10 is basically the same as that for the first embodiment. A differing point is that the vehicle apparatus 10 includes an information bulletin unit 18 for reporting various types of information. The information bulletin unit 18 includes a display apparatus that displays various types of information according to an instruction from the control unit 12. As described later on, the contents of the status bulletin process (FIG. 21) performed by the control unit 12 of the vehicle apparatus 10 differ from the contents of the status bulletin process (FIG. 3) according to the first embodiment. The control unit 12 of the vehicle apparatus 10 performs a vehicle bulletin process (FIG. 22) described later on.

The structures of the user device 20, the facility apparatus 30, and the management apparatus 40 are the same as those for the first embodiment, so a description is omitted. As described later on, the contents of the user process performed by the control unit 22 of the user device 20 differ from the contents of the user process (FIG. 4) of the first embodiment. Further, as described later on, the contents of the information bulletin process performed by the control unit 32 of the facility apparatus 30 differ from the contents of the information bulletin process (FIG. 5) of the first embodiment. Moreover, as described later on, the contents of the service management process performed by the control unit 42 of the management apparatus 40 differ from the contents of the service management process (FIG. 9) of the first embodiment.

According to the fifth embodiment, the facility apparatus 30 is capable of radio communication with the user device 20 carried by the user, before the user gets out of the vehicle 100. Specifically, the facility apparatus 30 is structured to form a communication area that includes the facility parking area. When the user enters the facility parking area, a communication status is established between the facility apparatus 30 and the user device 20 carried by the user.

### 5-2. Processes on the vehicle apparatus 10

### 5-2-1. Status bulletin process

The status bulletin process performed by the control unit 12 of the vehicle apparatus 10 is described next while referring to FIG. 21. The status bulletin process is repeatedly performed after the ignition key is turned on to start the vehicle 100 and also start the vehicle apparatus 10.

When the status bulletin process starts, it waits for a specified time period, e.g., one minute (S1610). After waiting at S1610, the process generates status information indicating a user's driving status at this time point (S1620). The status information is generated in the same manner as S120 in the status bulletin process (FIG. 3) according to the first embodiment.

The status information generated at S1620 is transmitted along with vehicle identification information to the user device 20 (S1630). The vehicle identification information is identification information unique to the vehicle 100 where the vehicle apparatus 10 is mounted. The vehicle identification information is stored in the storage unit 14.

After S1630, the process returns to S1610. The status bulletin process allows the vehicle apparatus 10 to transmit the status information to the user device 20 at a specified time interval. Each time the user device 20 receives the status information, the storage unit 24 stores the received status information by overwriting.

### 5-2-2. Vehicle bulletin process

The vehicle bulletin process performed by the control unit 12 of the vehicle apparatus 10 is described next while referring to FIG. 22. The vehicle bulletin process is repeatedly performed after an ignition key is turned on to start the vehicle 100 and also start the vehicle apparatus 10.

When the vehicle bulletin process starts, it waits until the service information is received from the management apparatus 40 (no at S1710). When the service information is received (yes at S1710), the process specifies a service candidate to be provided to the user based on the service information (S1720). The service candidate is specified in the same manner as S360 in the information bulletin process (FIG. 5) of the first embodiment.

The process generates a bulletin image based on the service candidate specified at S1720 (S1730). The bulletin image is generated in the same manner as S370 in the information bulletin process (FIG. 5) of the first embodiment.

The process allows the information bulletin unit 18 to display the bulletin image generated at S1730 (S1740) and then returns to S1710. The vehicle bulletin process specifies information appropriate to both the user visiting the facility and the facility itself, i.e., information about services to provide to the user from the facility according to the embodiment. The vehicle apparatus 10 displays the contents of the specified information.

### 5-3. Process on the user device 20

The user process performed by the control unit 22 of the user device 20 is basically the same as the user process (FIG. 4) of the first embodiment. The control process differs in the following points (5a) and (5b).

(5a) At S230, the process allows the storage unit 24 to store the vehicle identification information transmitted along with the status information from the vehicle apparatus 10. The vehicle identification information is stored while linked with the status information. (5b) At S250, the process transmits the status information and the user identification information along with the vehicle identification information to the facility apparatus 30. The vehicle identification information is stored in the storage unit 24 while linked with the status information.

Other sections are the same as the first embodiment, so a description is omitted.

### 5-4. Processes on the facility apparatus 30

### 5-4-1. Information bulletin process

The information bulletin process performed by the control unit 32 of the facility apparatus 30 is basically the same as the information bulletin process (FIG. 19) according to the fourth embodiment. A differing point is S1530 where a service request is transmitted to the management apparatus along with the vehicle identification information received from the user device 20. Other sections are the same as the fourth embodiment so a description of the specific process contents is omitted.

### 5-4-2. Information collection process

The information collection process performed by the control unit 32 of the facility apparatus 30 is the same as the information collection process (FIG. 8) of the first embodiment so description is omitted.

### 5-5. Service management process on the management apparatus 40

The service management process performed by the control unit 42 of the management apparatus 40 is basically the same as the service management process (FIG. 9) of the first embodiment. A differing point is S580 where the service information generated at S570 is transmitted to the vehicle apparatus 10 corresponding to the vehicle identification information received along with the service request. Specifically, the management apparatus 40 stores the vehicle identification information while linked with a transmission destination address of the vehicle apparatus 10. The management apparatus 40 transmits the service information to the transmission destination address corresponding to the vehicle identification information. Other sections are the same as the first embodiment, so a description is omitted.

### 5-6. Effects

The information communication system 5 of the fifth embodiment is structured as described above. When a user gets into the vehicle 100, the vehicle apparatus 10 periodically transmits the status information indicating the user's driving status to the user device 20. The user device 20 stores the status information. When the user drives the vehicle 100 to visit the facility, the status information stored in the user device 20 carried by the user is transmitted to the facility apparatus 30 provided in the facility. The facility apparatus 30 transmits a service request to the management apparatus 40 requesting transmission of the service information. The management apparatus 40 transmits the service information corresponding to the service request to the vehicle apparatus 10. The vehicle apparatus 10 can therefore report a service candidate to provide to the user from the facility.

Similar to the above-described embodiments, the information communication system 5 according to the fifth embodiment can also report service candidates specifically for the combination of a user using a facility and the facility to be used.

The information communication system 5 of the fifth embodiment in particular allows the vehicle apparatus 10 to report service candidates. The user getting into the vehicle 100 mounted with the vehicle apparatus 10 can be informed of the service content before getting out of the vehicle 100. The user can therefore prepare for the service to be provided or change the facility.

Similar to the bulletin image (FIG. 7) in the first embodiment, the information communication system 5 according to the fifth embodiment described an example of a structure for displaying an image based on service candidates to be provided for the user from the facility. According to this structure, the user can in advance know the service (recommended service) provided from the facility before actually using that facility. The contents of the bulletin image are not limited to service candidates and the vehicle apparatus 10 may for example display a bulletin image providing information such as a menu of services available from the facility, a map in the facility, and the hour the facility opens. In this case, it is possible to change the character size, language, color, and similar items for the bulletin image according to information such as the age, nationality, and preferences of the user getting into the vehicle apparatus 10.

### 5-7. Functions

In the vehicle apparatus 10 the control unit 12 that performs S120 for the status bulletin process (FIG. 21) functions as a status detection unit. The control unit 12 that performs S130, functions as a vehicle transmission unit. The control unit 12 that performs S1720 through S1740 in the vehicle bulletin process (FIG. 22) functions as an information output unit.

In the user device 20, the storage unit 24 and the control unit 22 that performs S230 of the user process (FIG. 4) function as a user information storage unit. The control unit 22 that performs S250 functions as a user information transmission unit.

In the facility apparatus 30, the storage unit 34 functions as a facility information storage unit. The control unit 32 that performs S1530 of the information bulletin process (FIG. 19) functions as a special information transmission request unit. The control unit 32 that performs S440 of the information collection process (FIG. 8) functions as a history information registration unit.

In the management apparatus 40, the storage unit 44 functions as a special information storage unit. The control unit 42 that performs S550 through S580 in the service management process (FIG. 9) functions as a special information transmission unit.

### 6. Sixth embodiment

The information communication system 5 according to the sixth embodiment described next. The sixth embodiment uses the overall structure diagram (FIG. 20) for the information communication system 5 according to the fifth embodiment.

### 6-1. Overall structure

The information communication system 5 according to the sixth embodiment is basically the same as that for the information communication system 5 (FIG. 20) according to the fifth embodiment. A differing point is that the user device 20 is capable of radio communication not only with the vehicle apparatus 10 and the facility apparatus 30 but also with the management apparatus 40 as indicated by a broken line in FIG. 20.

In the information communication system 5 according to the sixth embodiment, the vehicle apparatus 10 acquires service information from the management apparatus 40 and outputs it using a communication procedure different from that used for the information communication system 5 according to the fifth embodiment.

In the above-described information communication system 5 according to the fifth embodiment, the vehicle apparatus 10 transmits the status information to the user device 20 (S1630). The user device 20 transmits the status information and the user identification information to the facility apparatus 30 (S250). The facility apparatus 30 transmits a service request to the management apparatus 40 (S1530). The management apparatus 40 transmits the service information to the vehicle apparatus 10 (S580). The vehicle apparatus 10 provides a bulletin based on the service information (S1740).

However, in the information communication system 5 according to the sixth embodiment, the vehicle apparatus 10 transmits the status information to the user device 20. The facility apparatus 30 transmits the facility type information to the user device 20. The user device 20 transmits a service request to the management apparatus 40. The management apparatus 40 transmits the service information to the vehicle apparatus 10. The vehicle apparatus 10 provides a bulletin based on the service information.

The following more specifically describes the structure of the information communication system 5 according to the sixth embodiment. The structures of the vehicle apparatus 10, the facility apparatus 30, and the management apparatus 40 are the same as those for the fifth embodiment, so a description is omitted. As described later on, the contents of the information bulletin process (FIG. 17) and the information collection process (FIG. 14) performed by the control unit 32 of the facility apparatus 30 differ from the contents of the information bulletin process and the information collection process (FIG. 8) of the fifth embodiment. Furthermore, as described later on, the contents of the service management process performed by the control unit 42 of the management apparatus 40 differ from the contents of the service management process of the fifth embodiment.

The structure of the user device 20 is basically the same as that for the fifth embodiment. A difference is that the communication unit 26 is structured to establish radio communication with the vehicle apparatus 10; the facility apparatus 30, and the management apparatus 40. As described later on, the contents of the user process performed by the control unit 22 of the user device 20 differ from the contents of the user process (FIG. 4) of the first embodiment.

### 6-2. Processes on the vehicle apparatus 10

### 6-2-1. Status bulletin process

The status bulletin process performed by the control unit 12 of the vehicle apparatus 10 is the same as the status bulletin process (FIG. 21) according to the fifth embodiment so a description is omitted.

### 6-2-2. Vehicle bulletin process

The vehicle bulletin process performed by the control unit 12 of the vehicle apparatus 10 is the same as the vehicle bulletin process (FIG. 22) according to the fifth embodiment, so a description is omitted.

The vehicle bulletin process specifies information appropriate to both the user visiting the facility and the facility itself, i.e., information about services to be provided to the user from the facility according to the embodiment. The vehicle apparatus 10 displays the contents of the specified information.

### 6-3. Process on the user device 20

The user process performed by the control unit 22 of the user device 20 is basically the same as the user process (FIG. 12) according to the second embodiment. The differences are only in the following points (6a) and (6b).

(6a) At S630, the process allows the storage unit 24 to store the vehicle identification information transmitted along with the status information from the vehicle apparatus 10. The vehicle identification information is stored while linked with the status information. (6b) At S650, the process transmits a service request along with the vehicle identification information stored in the storage unit 24 to the facility apparatus 30. The service request contains the status information.

Other sections are the same as the second embodiment so a description is omitted.

### 6-4. Processes on the facility apparatus 30

### 6-4-1. Information bulletin process

The information bulletin process performed by the control unit 32 of the facility apparatus 30 is the same as the information bulletin process (FIG. 17) according to the third embodiment so a description is omitted.

### 6-4-2. Information collection process

The information collection process performed by the control unit 32 of the facility apparatus 30 is the same as the information collection process (FIG. 14) according to the second embodiment so a description is omitted.

### 6-5. Service management process on the management apparatus 40

The service management process performed by the control unit 42 of the management apparatus 40 is basically the same as the service management process of the fifth embodiment. A difference is that the registration instruction and the service request are received from the user device 20, not the facility apparatus 30. Other sections are the same as the fifth embodiment so a description is omitted.

### 6-6. Effects

The information communication system 5 according to the sixth embodiment is structured as described above. When a user gets into the vehicle 100, the vehicle apparatus 10 periodically transmits the status information indicating the user's driving status to the user device 20. The user device 20 stores the status information. When the user drives the vehicle 100 to visit the facility, the facility apparatus 30 provided in the facility transmits the facility type information indicating the facility type to the user device 20 carried by the user. The user device 20 transmits a service request to the management apparatus 40 requesting transmission of the service information. The management apparatus 40 transmits service information corresponding to that service request to the vehicle apparatus 10. The vehicle apparatus 10 in this way reports services candidates to provide to the user from the facility.

The information communication system 5 according of the sixth embodiment can also provide an effect similar to that of the information communication system 5 of the fifth embodiment.

### 6-7. Functions

Specifically, in the vehicle apparatus 10, the control unit 12 that performs S120 of the status bulletin process (FIG. 21) functions as a status detection unit. The control unit 12 that performs S130 functions as a vehicle transmission unit. The control unit 12 that performs S1720 through S1740 in the vehicle bulletin process (FIG. 22) functions as an information output unit.

In the user device 20, the storage unit 24 and the control unit 22 that performs S630 of the user process (FIG. 12) function as a user information storage unit. The control unit 22 that performs S650 functions as a special information transmission request unit.

In the facility apparatus 30, the storage unit 34 functions as a facility information storage unit. The control unit 32 that performs S1210 of the information bulletin process (FIG. 17) functions as a facility information transmission unit. The control unit 32 that performs S910 of the information collection process (FIG. 14) functions as a history information registration unit.

In the management apparatus 40, the storage unit 44 functions as a special information storage unit. The control unit 42 that performs S550 through S580 in the service management process (FIG. 9) functions as a special information transmission unit.

### 7. Seventh embodiment

An information communication system 7 according to the seventh embodiment is described next.

### 7-1. Overall structure

As shown in FIG. 23, the structure of the information communication system 7 according to the seventh embodiment is basically the same as that of the information communication system 2 (FIG. 11) according to the second embodiment except that no management apparatus 40 is provided. FIG. 23 shows that the user device 20 can communicate with multiple facility apparatus. However, the user device 20 might not be able to always communicate with all the facility apparatus 30. As described above, the user device 20 establishes a communication status with the facility apparatus 30 only in a communication area near the facility apparatus 30.

In the information communication system 7 of the seventh embodiment, the storage unit 24 of the user device 20 stores a service table (information stored in the management apparatus 40 according to the second embodiment). The facility apparatus 30 acquires the service information from the user device 20 and outputs it.

In the above-described information communication system 2 according to the second embodiment, the vehicle apparatus 10 transmits the status information to the user device 20 (S130). The facility apparatus 30 transmits the facility type information indicating the facility type to the user device 20. The user device 20 transmits a service request to the management apparatus 40 (S650). The management apparatus 40 transmits the service information to the facility apparatus 30 (S580). The facility apparatus 30 provides a bulletin based on the service information (S805).

However, in the information communication system 7 according to the seventh embodiment, the vehicle apparatus 10 transmits the status information to the user device 20. The facility apparatus 30 transmits the facility type information indicating the facility type to the user device 20. The user device 20 returns the service information to the facility apparatus 30. The facility apparatus 30 provides a bulletin based on the service information.

The following more specifically describes the structure of the information communication system 7 according to the seventh embodiment. The structures of the vehicle apparatus 10 and the facility apparatus 30 are the same as those for the second embodiment so a description is omitted.

The storage unit 24 of the user device 20 stores the service table only concerning the user having the user device 20. As described later on, the contents of the user process (FIG. 24) performed by the control unit 22 of the user device 20 differ from the contents of the user process (FIG. 12) of the second embodiment.

### 7-2. Process on the vehicle apparatus 10

The status bulletin process performed by the control unit 12 of the vehicle apparatus 10 is the same as the status bulletin process (FIG. 3) according to the second embodiment so a description is omitted.

### 7-3. Process on the user device 20

The user process performed by the control unit 22 of the user device 20 is described next while referring to FIG. 24. The user process is repeatedly performed after the user device 20 starts. The contents of S1910 through S1940, S1980, and S2000 in the user process are the same as those of S61 0 through S640, S670, and S710 in the user process (FIG. 12) according to the second embodiment and so a description of specific process contents is omitted.

When it is determined at S1940 that the received data is the facility type information (yes at S1940), the process specifies one or more appropriate data records corresponding to the received facility type information among the data records registered in the service table (S1950). The data record is specified in the same manner as S560 in the service management process (FIG. 9) according to the first embodiment.

The process generates information, i.e., service information, containing the data record specified at S1950, and then transmits that service information to the facility apparatus 30 (S1970).

After Step S1970, the process returns to Step S1910. When determined in S1980 that the received data is the available service information (yes at S1980), the process updates the service table based on the available service information and then returns to S1910. The service table is updated in the same manner as S530 in the service management process (FIG. 9) according to the first embodiment.

### 7-4. Processes on the facility apparatus 30

### 7-4-1. Information bulletin process

The information bulletin process performed by the control unit 32 of the facility apparatus 30 is the same as the information bulletin process (FIG. 13) according to the second embodiment so a description is omitted.

The information bulletin process specifies information appropriate to both the user visiting the facility and the facility itself, i.e., information about services to be provided for the user from the facility of the embodiment. The facility apparatus 30 displays the contents of the specified information.

### 7-4-2. Information collection process

The information collection process performed by the control unit 32 of the facility apparatus 30 is also the same as the information collection process (FIG. 14) according to the second embodiment, so a description is omitted.

### 7-5. Effects

The information communication system 7 according to the seventh embodiment is structured as described above. When a user gets out of the vehicle 100, the vehicle apparatus 10 transmits the status information indicating the user's driving status to the user device 20. The user device 20 stores the status information. When the user visits the facility, the facility apparatus 30 provided in the facility transmits the facility type information indicating the facility type to the user device 20 carried by the user. The user device 20 transmits service information corresponding to the facility type information and similar items to the facility apparatus 30. As a result, the facility apparatus 30 reports service candidate to provide to the user from the facility.

The information communication system 7 according to the seventh embodiment can also provide an effect similar to that of the information communication system 2 according to the second embodiment. In the information communication system 7, the user device 20 manages the service table only relating to the user having the user device 20. There is therefore no need to provide an additional management apparatus for jointly managing a service table involving multiple users so a simple structure can be achieved.

### 7-6. Functions

In the vehicle apparatus 10, the control unit 12 that performs S110 of the status bulletin process (FIG. 3) functions as a vehicle unloading detection unit. The control unit 12 that performs S120 functions as a status detection unit. The control unit 12 that performs S130 functions as a vehicle transmission unit.

In the user device 20, the storage unit 24 functions as a special information storage unit. The storage unit 24 and the control unit 22 that perform S1930 of the user process (FIG. 24) function as a user information storage unit. The control unit 22 that performs S1950 through S1970 functions as a special information reply unit.

In the facility apparatus 30, the storage unit 34 functions as a facility information storage unit. The control unit 32 that performs S810 through S850 of the information bulletin process (FIG. 13) functions as an information output unit. The control unit 32 that performs S910 of the information collection process (FIG. 14) functions as a history information registration unit.

### 8. Eighth embodiment

An information communication system 8 according to the eighth embodiment is described next.

### 8-1. Overall structure

As shown in FIG. 25, the information communication system 8 of the eighth embodiment is basically the same as that of the information communication system 7 (FIG. 23) of the seventh embodiment. A difference is that the user device 20 is provided with the information bulletin unit 28 for reporting various types of information.

In the information communication system 8 according to the eighth embodiment, the user device 20 performs a bulletin based on the service information. In the information communication system 7 according to the seventh embodiment, the vehicle apparatus 10 transmits the status information to the user device 20 (S130). The facility apparatus 30 transmits the facility type information indicating the facility type to the user device 20 (S810). The user device 20 transmits the service information to the facility apparatus 30 (S1970). The facility apparatus 30 provides a bulletin based on the service information (S850).

However, in the information communication system 8 according to the eighth embodiment, the vehicle apparatus 10 transmits the status information to the user device 20. The facility apparatus 30 transmits the facility type information indicating the facility type to the user device 20. The user device 20 provides a bulletin based on the service information.

The following more specifically describes the structure of the information communication system 8 of the eighth embodiment. The structures of the vehicle apparatus 10 and the facility apparatus 30 are the same as those for the seventh embodiment so a description is omitted. As described later on, the contents of the information bulletin process (FIG. 17) performed by the control unit 32 of the facility apparatus 30 differ from the contents of the information bulletin process (FIG. 13) according to the seventh embodiment.

The structure of the user device 20 is basically the same as that for the seventh embodiment. A differing point is that the user device 20 is provided with the information bulletin unit 28 for reporting various types of information. The information bulletin unit 28 includes a display apparatus that displays various types of information in accordance with an instruction from the control unit 22. According to the eighth embodiment, the user device 20 is structured to use a mobile phone.

As described later on, the contents of the user process (FIG. 26) performed by the control unit 22 of the user device 20 differ from the contents of the user process (FIG. 24) of the seventh embodiment.

### 8-2. Process on the vehicle apparatus 10

The status bulletin process performed by the control unit 12 of the vehicle apparatus 10 is the same as the status bulletin process (FIG. 3) according to the seventh embodiment so a description is omitted.

### 8-3. Process on the user device 20

The user process performed by the control unit 22 of the user device 20 is described next while referring to FIG. 26. The user process is repeatedly performed after the user device 20 starts. The contents of S2110 through S2160, S2200, and S2220 in the user process are the same as those of S1910 through S1960 and S1980 through S2000 in the user process (FIG. 24) according to the seventh embodiment so a description of specific process contents is omitted.

The process generates information, in other words, service information, containing the data record specified at S2150 (S2160). The process then specifies a service candidate to provide to the user based on the service information (S2170). The service candidate is specified in the same manner as S360 of the information bulletin process (FIG. 5) according to the first embodiment.

The process generates a bulletin image based on the service candidate specified at S2170 (S2180). The bulletin image is generated in the same manner as S370 in the information bulletin process (FIG. 5) according to the first embodiment.

The process allows the information bulletin unit 28 to display the bulletin image generated at S2180 (S2190) and then returns to S2110. The user process specifies information appropriate to both the user visiting the facility and the facility itself, i.e., information about services to be provided for the user from the facility according to the embodiment. The user device 20 displays the contents of the specified information.

### 8-4. Processes on the facility apparatus 30

### 8-4-1. Information bulletin process

The information bulletin process performed by the control unit 32 of the facility apparatus 30 is the same as the information bulletin process (FIG. 17) according to the third embodiment so a description is omitted.

### 8-4-2. Information collection process

The information collection process performed by the control unit 32 of the facility apparatus 30 is the same as the information collection process (FIG. 14) according to the seventh embodiment so a description is omitted.

### 8-5. Effects

The information communication system 8 according to the eighth embodiment is structured as described above. When a user gets out of the vehicle 100, the vehicle apparatus 10 transmits the status information indicating the user's driving status to the user device 20. The user device 20 stores the status information. When the user visits the facility, the facility apparatus 30 provided in the facility transmits the facility type information indicating the facility type to the user device 20 carried by the user. The user device 20 can therefore report service candidates to provide to the user from the facility.

The information communication system 8 according to the eighth embodiment can therefore also provide an effect similar to that of the information communication system 3 according to the third embodiment. In the information communication system 8, the user device 20 manages the service table only relating to the user having the user device 20. There is no need to provide an additional management apparatus for jointly managing a service table relation to multiple users so a simple structure can be achieved.

### 8-6. Functions

In the vehicle apparatus 10, the control unit 12 that performs S110 of the status bulletin process (FIG. 3) functions as an unloading detection unit. The control unit 12 that performs S120 functions as a status detection unit. The control unit 12 that performs S130 functions as a vehicle transmission unit.

In the user device 20, the storage unit 24 functions as a special information storage unit. The storage unit 24 and the control unit 22 that perform S2130 of the user process (FIG. 26) function as a user information storage unit. The control unit 22 that performs S2150 through S2190 functions as an information output unit.

In the facility apparatus 30, the storage unit 34 functions as a facility information storage unit. The control unit 32 that performs S1210 of the information bulletin process (FIG. 17) functions as a facility information transmission unit. The control unit 32 that performs S910 of the information collection process (FIG. 14) functions as a history information registration unit.

### 9. Ninth embodiment

An information communication system 9 according to the ninth embodiment is described next.

### 9-1. Overall structure

As shown in FIG. 27, the information communication system 9 according to the ninth embodiment is basically the same as that for the information communication system 7 (FIG. 23) according to the seventh embodiment. A difference is that the vehicle apparatus 10 is provided with the information bulletin unit 18 for reporting various types of information.

In the information communication system 9 according to the ninth embodiment, the vehicle apparatus 10 provides a bulletin based on the service information. In the information communication system 7 according to the seventh embodiment, the vehicle apparatus 10 transmits the status information to the user device 20 (S130). The facility apparatus 30 transmits the facility type information indicating the facility type to the user device 20 (S810). The user device 20 transmits the service information to the facility apparatus 30 (S1970). The facility apparatus 30 provides a bulletin based on the service information (S850).

However in the information communication system 9 according to the ninth embodiment the vehicle apparatus 10 transmits the status information to the user device 20. The facility apparatus 30 transmits the facility type information indicating the facility type to the user device 20. The user device 20 transmits the service information to the vehicle apparatus 10. The vehicle apparatus 10 provides a bulletin based on the service information.

The following more specifically describes the structure of the information communication system 9 according to the ninth embodiment. The structure of the vehicle apparatus 10 is the same as that of the seventh embodiment. A difference is that the vehicle apparatus 10 is provided with the information bulletin unit 18 for reporting various types of information. The information bulletin unit 18 includes a display apparatus that displays various types of information according to an instruction from the control unit 12. As described later on, the contents of the status bulletin process (FIG. 21) performed by the control unit 12 of the vehicle apparatus 10 differ from the contents of the status bulletin process (FIG. 3) according to the seventh embodiment. The control unit 12 of the vehicle apparatus 10 performs the vehicle bulletin process (FIG. 22) described later on.

The structures of the user device 20 and the facility apparatus 30 are the same as those for the seventh embodiment so a description is omitted. As described later on, the contents of the user process performed by the control unit 22 of the user device 20 differ from the contents of the user process (FIG. 24) according to the seventh embodiment. Also as described later on, the contents of the information bulletin process (FIG. 17) performed by the control unit 32 of the facility apparatus 30 differ from the contents of the information bulletin process (FIG. 13) according to the seventh embodiment.

According to the ninth embodiment, similar to the fifth embodiment, the facility apparatus 30 is capable of radio communication with the user device 20 carried by the user before getting out of the vehicle 100.

### 9-2. Processes on the vehicle apparatus 10

### 9-2-1. Status bulletin process

The status bulletin process performed by the control unit 12 of the vehicle apparatus 10 is the same as the status bulletin process (FIG. 21) of the fifth embodiment so a description is omitted.

### 9-2-2. Vehicle bulletin process

The vehicle bulletin process performed by the control unit 12 of the vehicle apparatus 10 is the same as the vehicle bulletin process (FIG. 22) according to the fifth embodiment so a description is omitted.

The vehicle bulletin process specifies information appropriate to both the user visiting the facility and the facility itself, i.e., information about services to be provided for the user from the facility according to the embodiment. The vehicle apparatus 10 displays the contents of the specified information.

### 9-3. Process on the user device 20

The user process performed by the control unit 22 of the user device 20 is basically the same as the user process (FIG. 24) according to the seventh embodiment. The differences are in the following points (9a) and (9b).

(9a) At S1930, the process allows the storage unit 24 to store the vehicle identification information transmitted along with the status information from the vehicle apparatus 10. The vehicle identification information is stored while linked with the status information. (9b) At S1970, the process transmits the service information to the vehicle apparatus 10 corresponding to the vehicle identification information stored in the storage unit 24. Specifically, the user device 20 stores the vehicle identification information and a transmission destination address of the vehicle apparatus 10 while linked with each other. The user device 20 transmits the service information to the transmission destination address corresponding to the vehicle identification information.

Other sections are the same as the seventh embodiment so a description is omitted.

### 9-4. Processes on the facility apparatus 30

### 9-4-1. Information bulletin process

The information bulletin process performed by the control unit 32 of the facility apparatus 30 is the same as the information bulletin process (FIG. 17) according to the third embodiment so a description is omitted.

### 9-4-2. Information collection process

The information collection process performed by the control unit 32 of the facility apparatus 30 is the same as the information collection process (FIG. 14) according to the seventh embodiment so a description is omitted.

### 9-5. Effects

The information communication system 9 according to the ninth embodiment is structured as described above. When a user gets into the vehicle 100, the vehicle apparatus 10 periodically transmits the status information indicating the user's driving status to the user device 20. The user device 20 stores the status information. When the user drives the vehicle 100 to visit the facility, the facility apparatus 30 provided in the facility transmits the facility type information indicating the facility type to the user device 20 carried by the user. The user device 20 transmits service information corresponding to the facility type information to the vehicle apparatus 10. The vehicle apparatus 10 can therefore reports service candidates to provide to the user from the facility.

The information communication system 9 according to the ninth embodiment can therefore also provide an effect similar to that of the information communication system 3 according to the fifth embodiment. In the information communication system 9, the user device 20 manages the service table only relating to the user having the user device 20. There is no need to provide an additional management apparatus for jointly managing a service table relating to multiple users so a simple structure can be obtained.

### 9-6. Functions

In the vehicle apparatus 10, the control unit 12 that performs S120 of the status bulletin process (FIG. 21) functions as a status detection unit. The control unit 12 that performs S130 functions as a vehicle transmission unit. The control unit 12 that performs S1720 through S1740 of the vehicle bulletin process (FIG. 22) functions as an information output unit.

In the user device 20, the storage unit 24 functions as a special information storage unit. The storage unit 24 and the control unit 22 that perform S1930 of the user process (FIG. 24) function as a user information storage unit. The control unit 22 that performs S1950 through S1970 functions as a special information transmission unit.

In the facility apparatus 30, the storage unit 34 functions as a facility information storage unit. The control unit 32 that performs S1210 of the information bulletin process (FIG. 17) functions as a special information transmission request unit. The control unit 32 that performs S91 0 of the information collection process (FIG. 14) functions as a history information registration unit.

### 10. Modifications

While there have been described specific preferred embodiments of the present invention, it is to be distinctly understood that the present invention is not limited thereto but may be otherwise variously embodied within the spirit and scope of the invention.

### 10-1. User device 20

The above embodiments described an example of a user device 20 integrated with an engine key or a mobile phone. However, the user device 20 may be structured integrally with an apparatus carried by a driver other than the engine key or the mobile phone or may be a stand-alone apparatus. To cite a specific example, the user device 20 may be structured as an IC card.

### 10-2. Management apparatus 40

The above embodiments described examples where the facility apparatus 30 and the management apparatus 40 are separate structures. However, the management apparatus 40 may be integrated with any of the facility apparatus 30. Moreover, the management apparatus 40 may be integrated with the vehicle apparatus 10 or the user device 20.

### 10-3. Facility information

Under the condition that a user visits the facility, the above-described embodiments transmit information about the user (status information and user identification information) and information about the facility (facility type information) to the management apparatus 40. The management apparatus 40 verifies the received user information and facility information. Based on verification results, the management apparatus 40 acquires information appropriate to both the user and the facility from the service table. In this way, the facility type information is used as facility information. When the user attempts to use the facility, a service is specified including not only the information specialized in the facility but information about other facilities belonging to the same type of business. Even when the user visits a facility for the first time, a service specially made for the combination of the user and the facility and its type of business can be specified. The facility information is not limited to facility type information and may include the facility identification information specific to each facility.

### 10-4. Communication between apparatus

The above embodiments described examples where radio communication was used for data communication between the respective apparatus. However, the data communication between the apparatus may be achieved by wiring that physically connects the apparatus with each other via connection paths.

### 10-5. Timing for specifying a service

The above-described embodiments immediately report a service applicable to both the user device 20 and the facility apparatus 30 under the condition that a communication status is established between both the user device 20 and the facility apparatus 30, or in other words, non-communication status changes to communication status. However, the present invention is not limited to this method. For example the bulletin, report or notification may be given not only under the condition that communication is established but also that another condition is satisfied. The communication status may be temporary and communication may be disabled during the bulletin, report or notification. For example, a communication area may be provided in the entry to the facility to allow radio communication between the facility apparatus 30 and the user device 20. A report/bulletin can then be made when the user passes through the entry to the facility to enable communication (even just temporary communication).

Also information may be specified not under the condition that communication is established, but under the condition that the user device 20 and the facility apparatus 30 can maintain communication, i.e., a (state allowing continual communication).

Basically, the user device 20 and the facility apparatus 30 establish communication according to their positional relation. Besides this positional relation, for example the communication intensity may determine whether or not to establish communication. Even though the positional relation is unchanged, a large communication signal strength may for example enable communication and a small communication signal strength may disable it. Actions such as turning off the power to the user device 20 may for example set the communication signal strength to zero. When the power of the user device 20 is turned off, there is no communication even if the user enters a communication area capable of short-distance radio communication with the facility apparatus 30. Turning on the power to the user device 20 however enables communication.

### 10-6. Detecting the driver exiting the vehicle

The above embodiments described examples for detecting the driver having exited the vehicle when the engine control apparatus 111 reports that the engine has stopped. However, other methods for detecting the driver has exited may be utilized that function when the other conditions are satisfied.

For example, the vehicle apparatus 10 may utilize various control apparatus or a special sensor to detect the doors opening and closing on the vehicle 100. It may be preferable to decide that the driver has exited the vehicle after the engine control apparatus 111 reports the engine is stopped and then detects that the door was opened and closed once.

### 10-7. Driving status

The above embodiments described the example in which the driving status detected by the vehicle apparatus 10 includes the driving time, driving route, and visited facility. However, the vehicle apparatus 10 may also detect other driving states.

The driving status for example, may include a vehicle speed change during driving or the user's own status detected by a special sensor for the user's facial expression, heart rate, and blood pressure. To detect the user's own status, for example, the vehicle apparatus 10 may be connected to a monitor camera 132 for capturing expressions of a user driving the vehicle 100 or a biometric sensor 134 for detecting the heart rate and blood pressure of a user driving the vehicle 100 connected to allow data communication, and then detecting each of these states (see dotted lines in FIG. 1, etc.).

The following services can be provided for example based on the driving status detected by the vehicle apparatus 10.
- The driving status may contain information about the driving time. This information makes it possible to provide a service of making tea for a user who visited the facility after a long time of nonstop driving so that the user can first take a rest.
- The driving status may contain information indicating whether or not the user is a driver of the vehicle 100. If the user is the driver, then no alcoholic beverages are then recommended to the user/driver.
- The driving status may contain information about a driving route or stopping points. If the user visits a restaurant immediately before the facility, then a light meal can be recommended to the user instead of a heavy one.
- The driving status may contain information about the vehicle speed history. If the user arrives at the facility after driving at high speed, then the driver can be entertained in a relaxing conversation.
- The driving status may contain information about the user's expression. A drowsy-looking user can then for example be provided with coffee.
- The driving status may contain a user's heart rate or blood pressure. A light meal can then be recommended to a user who appears sick, instead of alcoholic beverages.

### 10-8. Status information

The above embodiments detect the driving status of the driver of the vehicle 100 as the status information indicating a real-time status of a user who owns the user device 20. The status information is not limited to the driving status. For example, it may be preferable to detect biometric information (heart rate or blood pressure) about the user (not limited to the driver) on the vehicle 100 as the status information. This status information may be detected not only at the vehicle 100 but also at other places such as restrooms. Further, instead of or in addition to a user's status, it may be preferable to detect the status of the vehicle 100 such as by using the onboard device status as the status information for indicating the real-time status of the vehicle.

### 10-9. Registration information

The user information for specifying a service appropriate to the user is not limited to the user identification information or status information such as the driving status. Utilizing registration information previously registered for the user instead of or in addition to the user identification information or the status information may be preferable. When a user's preference or hobby is registered in advance for example, then a service appropriate to the user's preference or hobby can be provided.

FIG. 28 shows the information communication system 1 of the first embodiment including a registration apparatus 50. The registration apparatus 50 includes: a registration unit 52 that allows an operation for entering registration information; and a communication unit 56 that transmits registration information to the user device 20 via radio communication. The registration apparatus 50 is used to register information about the user in advance. The registration apparatus 50 transmits the registration information to the user device 20. The storage unit 24 of the user device 20 stores the registration information. The registration information can in this way be used as the user information for specifying a service appropriate to the user similar to the driving status according to the above embodiments. The registration apparatus 50 may be structured independently of the vehicle apparatus 10 and the user device 20 or integrally with any of these apparatus such as the user device 20. In the information communication system 1 in FIG. 28, the registration unit 52 functions as a registration information input unit. The communication unit 56 functions as a user information registration unit.

### 10-10. Services according to the user information

The user information specifies various services depending on facility categories as shown in FIGS. 29 through 39.

### 10-10-1. Restaurant

When the facility category is a restaurant such as a Japanese restaurant, Chinese restaurant, fast food shop, or bar, then the following services can be provided according to the user information.

- When the user information contains a user name, then the user can be welcomed by calling the user's name even if the user is a first-time visitor.
- When the user information contains a drinking and eating history, then a drinking and eating menu can be provided according to the user's preference.

- When the user information contains the user's hobbies or tastes, then events can be announced according to those hobby or tastes by electronic mail, direct mail, or flyers, etc.
- When the user information contains the user's smoking habits, then the user can be guided to a smoking area or a non-smoking area.

- When the user information contains the user's favorite music, then that music can be selected as the background music.
- When the user information contains the user's favorite atmosphere, then the user can be guided to a seat according to the user's preference such as a quiet seat, a counter, or a window seat.

- When the user information contains the user's favorite personality, then a service-providing attendant who matches the user's preference can be selected.
- When the user information contains the user's most recent behavior, then a service assumed appropriate for the user at the time can be provided. For example, proposing a menu of heavy meals can be avoided when the user has recently eaten a meal.

- When the user information contains the user's physical condition, then a menu or similar item can be suggested according to that physical condition.
- When the user information contains the user's schedule, then a taxi or the like can be arranged for the time the user leaves the facility.

- When the user information contains the user's purpose for visiting the facility, then a service fulfilling that purpose can be provided. The facility for example can suggest alcoholic drinks according to the user's preference when the user visits the facility for drinking.
- When the user information contains information about the user's family or acquaintance, then a service suitable for the family or the acquaintance, i.e., a service equivalent to that for the user can be provided.

### 10-10-2. Clothing and personal accessories shop

When the facility category is clothing and personal accessories shop including clothing shops, boutiques, and department stores, then the following services can be provided according to the user information.

- When the user information contains the user's name, then the user can be welcomed by calling the user's name even if the user is a first-time visitor.
- When the user information contains the user's buying history, then products can be suggested according to the user's preference.

- When the user information contains the user's hobbies or tastes, then events can be announced according to those hobbies or tastes via electronic mail, direct mail, or circulars, etc.
- When the user information contains the user's history of accessing the Internet, then products can be suggested or events announced, in other words, the most attention-getting items can be utilized.

- When the user information contains the user's purpose for visiting the facility, then a product suitable for that purpose such as a jacket for the user or a shirt for the user's child can be suggested.

- When the user information contains the user's schedule, then services such as valet parking (parking and retrieving the user's vehicle at a facility entrance at the time for leaving the facility) or a vehicle wash while the user is using the facility can be provided.

- When the user information contains information about the user's family or acquaintance, then a service suitable for the family or acquaintance, i.e., a service equivalent to that for the user can be provided.

### 10-10-3. Large-scale retail store

When the facility category is large-scale retail store including electric appliance shop and furniture shop, it is possible to provide the following services in addition to the services equivalent to those for the clothing and personal accessories shop.

- When the user information contains a user's address, then a goods delivery schedule for finding and matching the goods inventory, delivery vehicle, and delivery person schedules can be created without troubling the user.

- When the user information contains the user's schedule, then a goods delivery schedule for finding and matching the goods inventory, delivery vehicle, and delivery person schedules can be created without troubling the user.

- When the user information contains the family's schedule, then a goods delivery schedule for finding and matching the goods inventory, delivery vehicle, and delivery person schedules can be created without troubling the user.

- When the user information contains a floor plan of the house, then goods can be suggested according to the room size or the carry-in route.

### 10-10-4. Automobile-related agency

When the facility category is an automobile-related agency including automobile distributors (dealer), automobile repair shops, and car rental agencies, then the following services can be provided in addition to the services equivalent the clothing and personal accessories shop.

- When the user information contains the user's vehicle repair history, then an appropriate maintenance menu can promptly be created without troubling the user.
- When the user information contains a driving history of the user's vehicle then an appropriate maintenance menu can promptly be created without troubling the user.

- When the user information contains the user's current location, then the user can be informed of the nearest agency by transmitting a map or allow an a representative from the agency to schedule a visit.

### 10-10-5. Education and learning support agency

When the facility category is education and learning support agencies including conversation schools and fitness clubs, then the following services can be provided in addition to services equivalent to those for the clothing and personal accessories shops.

- When the user information contains the user's attendance history, then a program can be suggested according to the user's learning level at the time.
- When the user information contains the user's schedule, then an optimal time schedule can be suggested for matching the schedules for available instructors, classrooms, and tools.

- When the user information contains the user's physical condition, then a program can be suggested according to the user's physical condition at the time.
- When the user information contains the user's personal medical history, then a program can be suggested according to that medical history.

### 10-10-6. Hair dressing and beauty agency

When the facility category is hair dressing and beauty agency, then the following services can be provided in addition to services equivalent to those for the clothing and personal accessories shop.

- When the user information contains the user's regular hairstyle, then the hairstyle can be selected without asking the user.
- When the user information contains the user's favorite cosmetics, then these can be selected without consulting the user.

- When the user information contains the user's favorite makeup, then that makeup can be applied without need of rudely consulting the user.

### 10-10-7. Hospital and healthcare provider

When the facility category is a hospital and healthcare provider, then the following services can be provided according to the user information.

- When the user information contains the user's personal medical history, then a diagnosis and prescription can be provided according to the medical history.
- When the user information contains the user's physical condition, then a diagnosis and prescription can be provided according to the user's physical condition at the time.

- When the user information contains a user's current location, then the user can be informed of the nearest facility by transmitting a map or allowing someone to come to guide the user from the facility.

### 10-10-8. Information and telecommunications industry

When the facility category is a information and telecommunications industry including provider and content distributor, then the following services can be provided according to the user information.

- When the user information contains the user's hobbies or tastes, then events such as a social networking services can be announced according to the user's hobby or tastes.
- When the user information contains the user's history of accessing the Internet, then a high-interest service can be suggested or an event announced, in other words, the most attention-getting at the time utilized.

- When the user information contains the user's physical condition, then a service can be suggested according to the user's physical condition at the time.
- When the user information contains information about the user's family or acquaintance, then a service suitable for the family or the acquaintance, i.e., a service equivalent to that for the user can be provided.

### 10-10-9. Nonprofit organization

When the facility category is nonprofit organization including volunteer groups, then the following services can be provided according to the user information.

- When the user information contains a user's hobby or tastes, then events such as a social networking service can be proposed according to the user's hobbies or tastes.
- When the user information contains the user's schedule, then an event can be announced according to that schedule.

- When the user information contains information about the user's family or acquaintance, then a service suitable for the family or the acquaintance, i.e., a service equivalent to that for the user can be provided.

### 10-10-10. Public institution

When the facility category is a public institution including a school or government office, then the following services can be provided according to the user information.

- When the user information contains the user's attendance history, then a program matching the user's learning level at the time can be proposed.
- When the user information contains the user's schedule, then an optimal time schedule for matching between schedules of available instructors, classrooms, and tools can be suggested.

- When the user information contains the user's hobbies or tastes, then an event can be announced according to the user's hobbies or tastes.
- When the user information contains the user's purpose for visiting the facility, then service guidance can be provided according to that purpose.

- When the user information contains the user's name or address, the necessary document can be automatically created.

### 10-10-11. Personal residence

The facility category also includes personal residences. In this case, the following services can be provided according to the user information.

- When the user information contains the user's drinking and eating history, then a drinking and eating menu can be provided according to the user's preference.
- When the user information contains the user's most recent behavior, then a service assumed appropriate for the user can be provided. For example, preparing a menu with heavy meals can be avoided when the user has recently consumed a meal.

- When the user information contains a user's physical condition, then services matching that physical condition can be provided.
- When the user information contains a user's schedule, then the user can be met at the station at the time of arrival or a taxi scheduled at time to go home.

- When the user information contains a user's current location, then the user can be guided home by transmitting a map or guiding the user from the user's location.
- When the user information contains the user's purpose for visiting home, then services can be prepared according to the purpose. For example, a chessboard can be prepared when the user visits home to play chess.

- When the user information contains information about the user's family or acquaintance, then a service suitable for the family or the acquaintance, i.e., a service appropriate for the user can be provided.

### 10-11. Timing to transmit the status information

In the first embodiment, the user device 20 is structured to transmit the status information at the time of receiving a request from the facility apparatus 30. More specifically, the user device 20 enters into a range capable of receiving the facility apparatus 30, i.e., a communication area capable of short-distance radio communication with the facility apparatus 30. The user device 20 receives the request and transmits the status information. The facility apparatus 30 receives this status information. However, the timing for the user device 20 to transmit the status information is not limited to this method. Periodically transmitting the status information and the user identification information for example may be preferable. When the user device 20 enters into a range capable of receiving the facility apparatus 30, then the facility apparatus 30 can receive the status information. In this case, the facility apparatus 30 may be structured to proceed to S320 by omitting S310 in the information bulletin process in FIG. 5.

### 10-12. Structure without the vehicle apparatus 10

In the above embodiments, the system in the example included the vehicle apparatus 10 but is not limited to including vehicle apparatus 10. The system can be structured to exclude the vehicle apparatus 10. For example, FIG. 40 shows a structure in which the vehicle apparatus 10 is eliminated from the structure of the information communication system 1 according to the first embodiment. The system is basically the same as the above embodiments except that the status information detected by the vehicle 100 cannot be used as user information. The available user information includes the status information or the user identification information detected outside the vehicle 100 and the pre-stored registration information.

### 10-13. Structure capable of direct communication between the user device 20 and the management apparatus 40

The user device 20 and the management apparatus 40 can be structured to directly communicate with each other. In this structure, a facility can notify information such as the holding of an event only to those users who are most likely to use the facility.

Specifically, the control unit 32 of the facility apparatus 30 performs an information bulletin process in FIG. 41. The control unit 42 of the management apparatus 40 performs a bulletin destination selection process in FIG. 42. The information bulletin process performed by the control unit 32 of the facility apparatus 30 is described next while referring to FIG. 41. The information bulletin process is performed at a certain timing to transmit information such as the holding of an event to the user device. The timing may be externally determined by an administrator's operation on the facility apparatus 30 or may be predetermined.

The information bulletin process starts and transmits bulletin information such as the holding of an event along with the facility type of the facility apparatus 30 to the management apparatus 40 (S2310). The bulletin information is to be transmitted to the user device 20. The information bulletin process then terminates. The control unit 32 that performs S2310 functions as a bulletin information transmission unit.

The bulletin destination selection process performed by a control unit 42 of a management apparatus 40 is described next using FIG. 42. The bulletin destination selection process is repeatedly performed after the management apparatus 40 starts.

When the bulletin destination selection process starts, it waits until the bulletin information is received from the facility apparatus 30 (no at S2410). When the bulletin information is received from the facility apparatus 30 (yes at S2410), the process selects a user matching the bulletin (S2420). Specifically, the process extracts a data record containing the same facility type as that received with the bulletin information from the data records registered in the service table. The process then selects only the user identification information contained in the extracted data record.

The process transmits the bulletin information to the user selected at S2420 (S2430) and returns to S2410. Specifically, the management apparatus 40 stores the user identification information while linked with the transmission destination address of the user device 20. The management apparatus 40 transmits the bulletin information to the destination address corresponding to the user identification information selected at S2420. The control unit 42 that performs S2420 and S2430 functions as a selective transmission unit.

According to this process, the facility apparatus 30 transmits the bulletin information to the user device 20 only of the user who used facilities belonging to the same type of business in the past. The facility can narrow the targeted users and efficiently transmit the bulletin information. The user can be provided with information only about interested categories and is free from the task of discarding uninteresting information.

According to the example, the condition for narrowing the targeted users is that the users have utilized facilities in the past belonging to the same type of business, but the invention is not limited to this method. For example, the condition may be use of the facility for a specified number of times or more at the same facility rather than the same type of business. The information for narrowing the targeted users is not limited to information based on the usage history. Taking the pre-stored registration information for example into consideration may be more preferable. Further, the bulletin information is not only transmitted to the user device 20. The bulletin information may for example be transmitted to a terminal provided at the home or office of the user who owns the user device 20.

### 10-14. Bulletin

The above embodiments described an example in which the facility apparatus 30 provided a bulletin by displaying a bulletin screen. Further, the facility apparatus 30 may be structured to provide a bulletin other than by displaying the bulletin screen. The bulletin here signifies providing some information by acting on at least one of the human being's five senses. For example, one possible structure may utilize a speaker to audibly output a message equivalent to the content displayed on the bulletin screen. Another may transmit a message equivalent to the content displayed on the bulletin screen to a specified communication destination such as a telephone number or an electronic mail address.

The above embodiments described an example in which the facility apparatus 30 generates the bulletin image in the form of the image indicating user identification information. However, instead of this information, generating the bulletin image in the form of an image indicating a user name identified by the user identification information may be preferable (FIG. 7(b)).

### 10-15. Processes other than the bulletin

The above embodiments perform the information bulletin process as a process for outputting information about a service to be provided to the user. The process aims at informing system users such as related persons including employees at the facility and customers about the information content. However, the information output process is not limited to this bulletin. When a user visits the facility, for example, automatically creating a membership card printed with the user's name or photo may be preferable instead. This is equivalent to a process for outputting the information as a membership card.

### 10-16. Usage other than specifying services

The information communication system also functions as an information provision system according to the invention and can be used for other purposes than specifying a service to provide to the user. When a facility provides services only to users that satisfy a specified condition (e.g., women aged 20 years or older), then for example, it is possible to construct a system that reports the facility employee about detecting a user who satisfies that condition.

### 10-17. Apparatus making up the information communication system

Needless to say, the information communication system according to the invention can be structured to include apparatus other than the user device, the facility apparatus, the management apparatus, and the vehicle apparatus.

### 10-18. Device configuration and program

Each or any combination of processes, steps, or means explained in the above can be achieved as a software unit (e.g., subroutine) and/or a hardware unit (e.g., circuit or integrated circuit), including or not including a function of a related device; furthermore, the hardware unit can be constructed inside of a microcomputer.
Furthermore, the software unit or any combinations of multiple software units can be included in a software program, which can be contained in a computer-readable storage media or can be downloaded and installed in a computer via a communications network.

Aspects of the subject matter described herein are set out in the following clauses.

According to a first aspect, an information communication system includes a user device possessed by a user and a facility apparatus provided at a facility the user may visit. The user device is capable of communicating with each facility apparatus provided at each of multiple facilities. The information communication system further includes an information output unit. The information output unit establishes the condition that the user device and any of the facility apparatus initiate or maintain a communication status. Under this condition, the information output unit outputs information appropriate to both a user having the communicating user device and a facility provided with the communicating facility apparatus as special information for the user. In a mode where a user carrying the user device uses multiple facilities, the information communication system can output special information for the combination of the user using a facility and the facility for use. Consequently, by utilizing this special information, the system promotes effective use of the facility.

The information appropriate to both the user and the facility as referred to here matches information relating to the user and information relating to the facility. Namely, the information corresponds to both the user and the facility. In other words, the information is identified by a combination of the user and the facility or is specific to the combination. This expression can also apply to the other aspects.

According to a second aspect, the special information output from the information output unit as referred to here, includes information about services to be provided to the user having the user device as the communication destination of the facility apparatus. This type of system outputs special information about services for the combination of the user using a facility and the facility for use. Each of facilities can provide the user with proper services.

According to a third aspect, the information output unit sends information bulletins. Information communication system users (e.g., a user owing the user device and personnel at the facility) can therefore understand the contents of the special information made appropriate to both the user and the facility.

The information communication system according to a fourth aspect is structured so that a facility apparatus establishes communication with a user device possessed by a nearby user who visits the facility possessing the facility apparatus. In other words, among combinations of the multiple users and facilities in this system, the information communication system outputs special information just for the combination of the user visiting a facility and that facility. The system therefore efficiently outputs just the necessary special information.

The information communication system according to a fifth aspect is structured so that the facility apparatus is capable of radio communication with the user device. Special information can therefore be output without the user being aware of it.

The information communication system according to a sixth aspect includes a special information storage unit that can store multiple pieces of special information. The information output unit acquires special information from this special information storage unit and outputs that information. The special information is appropriate to both a user having the communicable user device and a facility with the facility apparatus. This type of information communication system allows the special information storage unit to store detailed special information. Detailed special information can therefore be output for the particular combination of the user using a facility and the facility to be used.

According to a seventh aspect, the special information storage unit stores special information based on the user's facility usage history. Special information can therefore be output that reflects the user's usage history.

According to an eighth aspect, a history information registration unit of the facility apparatus allows the special information storage unit to store special information based on the user's facility usage history corresponding to the facility apparatus. Information can in this way be efficiently stored based on the history.

In the information communication system, the information output unit and the special information storage unit can be provided for the user device, the facility, or other apparatus. More specifically, the system can be structured according to ninth, 12th, 20th, 22nd, 26th, and 34th aspects.

The information communication system according to the ninth aspect includes a management apparatus that can communicate with at least one of the user device and the facility apparatus. The management apparatus includes a special information storage unit. The facility apparatus includes an information output unit. The information output unit acquires from the management apparatus, special information specified based on user information stored in the user device as a communication destination, and facility information stored in the facility information storage unit. In this type of information communication system, the facility apparatus can acquire and output special information specially made for the combination of the facility with the facility apparatus and the user using the facility. The information communication system allows the management apparatus to jointly manage special information about multiple users and facilities. The information can therefore be efficiently managed without needing to store a large amount of information in the user device and elsewhere.

The information communication system according to the ninth aspect can be structured in accordance for example with 10th and 11th aspects. In the information communication system according to the 10th aspect, a user information transmission unit of the user device transmits the user information stored in the user information storage unit to the facility apparatus as a communication destination. A special information reply unit in the management apparatus verifies user information and facility information received from the facility apparatus. Based on a verification result, the special information reply unit acquires special information as information appropriate to both a user corresponding to the received user information and a facility corresponding to the received facility information from a special information storage unit and transmits the special information to the facility apparatus. The information output unit of the facility apparatus can in this way acquire the special information from the management apparatus.

In the information communication system according to an 11th aspect, a special information transmission request unit of the user device receives facility information from the facility apparatus. In this case, the special information transmission request unit transmits the received facility information and user information stored in the user information storage unit to the management apparatus. The special information transmission request unit also allows the management apparatus to transmit specified special information to the facility apparatus as a communication destination of the user device. A special information transmission unit of the management apparatus verifies the user information and facility information received from the user device. Based on a verification result, the special information transmission unit acquires special information as information appropriate to both a user corresponding to the received user information and a facility corresponding to the received facility information from a special information storage unit and transmits the special information to the facility apparatus. The information output unit of the facility apparatus in this way acquires the special information from the management apparatus.

The information communication system according to a 12th aspect includes a management apparatus that communicates with at least one of the user device and the facility apparatus. The management apparatus includes a special information storage unit. The user device includes an information output unit. The information output unit acquires, from the management apparatus, special information specified based on user information stored in the user information storage unit and facility information stored in the facility apparatus as a communication destination. In this type of information communication system, the user device can acquire and output the special information specially made for the combination of the user owing the user device and the facility used by the user. The information communication system allows the management apparatus to jointly manage special information about the multiple users and facilities. This information can be efficiently managed without needing to store a large amount of information in the user device and elsewhere.

The information communication system according to the 12th aspect can be structured for example in accordance with 13th and 14th aspects. In the information communication system according to the 13th aspect, a facility information transmission unit of the facility apparatus transmits the facility information stored in the facility information storage unit to the user device as a communication destination. A special information reply unit of the management apparatus verifies the user information and facility information received from the user device. Based on a verification result, the special information reply unit acquires special information as information appropriate to both a user corresponding to the received user information and a facility corresponding to the received facility information from the special information storage unit and transmits the special information to the user device. As a result, the information output unit of the user device acquires the special information from the management apparatus.

In the information communication system according to the 14th aspect, a special information transmission request unit of the facility apparatus may receive user information from the user device. In this case, the special information transmission request unit transmits the received user information and the facility information stored in the facility information storage unit to the management apparatus. The special information transmission request unit further allows the management apparatus to transmit specified special information to the user device as a communication destination of the facility apparatus. A special information transmission unit of the management apparatus verifies the user information and facility information received from the facility apparatus. Based on a verification result, the special information transmission unit acquires special information as information appropriate to both a user corresponding to the received user information and a facility corresponding to the received facility information from the special information storage unit and transmits the special information to the user device. As a result, the information output unit of the user device acquires the special information from the management apparatus.

In the information communication system according to a 15th aspect, a bulletin information transmission unit of the facility apparatus, transmits bulletin information to the management apparatus, in other words, also to be transmitted to the user. Based on the special information stored in the special information storage unit, a selective transmission unit of the management apparatus selects a user to whom the bulletin information received from the facility apparatus is to be transmitted. The selective transmission unit transmits the bulletin information to a user device of the selected user. This type of information communication system can select a user device as a transmission destination based on the special information and efficiently transmit the bulletin information from the facility apparatus to the user device.

According to a 16th aspect, the user information stored in the user information storage unit includes identification information capable of identifying a user who owns the user device. This type of user information can be used to acquire the special information corresponding to individual users.

According to a 17th aspect, the user information stored in the user information storage unit includes registration information registered for the user who owns the user device. This type of user information can be used to acquire the special information corresponding to the registration information without being limited to information corresponding to individual users. In this case, according to an 18th aspect, information about the user can be easily registered by providing a registration information input unit capable of supplying information about a user; and a user information registration unit for allowing the user information storage unit to store registration information as information supplied by the registration information input unit.

According to a 19th aspect, the user information stored in the user information storage unit includes status information indicating the status of a user who owns the user device. This type of user information can be used to output the special information corresponding to the user's real-time status.

In the information communication system according to a 20th aspect, the user device includes a special information storage unit. The facility device contains an information output unit that acquires special information specified based on facility information stored in the facility information storage unit from the user device as a communication destination. In this type of information communication system, the facility apparatus can acquire and output the special information specially made for the combination of the facility with a facility apparatus and the user using the facility. The information communication system allows the user device to manage special information about multiple facilities. There is no need to separately provide an apparatus (management apparatus) for jointly managing the special information, so the structure of the information communication system can be simplified.

The information communication system according to the 20th aspect can be structured in accordance with a 21st aspect. In the information communication system according to the 21st aspect, an information output unit of the facility apparatus transmits the facility information stored in the facility information storage unit to the user device as a communication destination. Based on the facility information received from the facility apparatus, a special information reply unit of the user device acquires special information as information appropriate to both a user having the user device and a facility corresponding to the received facility information from the special information storage unit, and transmits the special information to the facility apparatus. The information output unit of the facility apparatus can therefore acquire the special information from the user device.

In the information communication system according to the 22nd aspect, the user device includes a special information storage unit. The user device includes an information output unit that acquires special information specified based on facility information stored in the facility apparatus as the communication destination from the special information storage unit. In this type of information communication system, the user device can acquire and output the special information specially made for the combination of the user having the user device and the facility used by the user. The information communication system allows the user device to manage special information about the multiple facilities. There is no need to separately provide an apparatus (management apparatus) for jointly managing the special information, so the structure of the information communication system can be simplified.

The information communication system according to the 22nd aspect can be structured in accordance with a 23rd aspect. In the information communication system according to the 23rd aspect, a facility information transmission unit of the facility apparatus transmits the facility information stored in the facility information storage unit to a user device as the communication destination. Based on facility information received from the facility apparatus, an information output unit of the user device acquires special information as information appropriate to both a user having the user device and a facility corresponding to the received facility information from the special information storage unit.

In the information communication system according to a 24th aspect, the user device includes a user information storage unit that stores status information indicating the status of user having the user device as user information about the user. The information output unit acquires, from the special information storage unit, special information specified based on user information stored in the user device as the communication destination of the facility apparatus. This type of information communication system can output special information corresponding to the user's real-time status.

The information communication system according to a 25th aspect further includes a vehicle apparatus mounted on a vehicle communicable with the user device. In the vehicle apparatus, a status detection unit detects a status of at least one of the user in a vehicle and the vehicle status. A vehicle transmission unit transmits status information indicating a status detected by the status detection unit to the user device. The user information storage unit stores the status information received from the vehicle apparatus as the user information. This type of information communication system can in this way acquire special information corresponding to the status of at least one the user in a vehicle and the vehicle.

The information communication system according to a 26th aspect includes: a vehicle apparatus mounted on a vehicle communicable with a user device; and a management apparatus communicable with at least one of the user device, a facility apparatus, and the vehicle apparatus. The management apparatus includes a special information storage unit. The vehicle apparatus includes an information output unit that acquires from the management apparatus, verification results of user information and facility information made by the management apparatus. In this type of information communication system, the vehicle apparatus can acquire and output the special information specially made for the combination of the user using a facility and the facility used by the user. The information communication system allows the management apparatus to jointly manage special information about multiple users and facilities. Information can therefore be efficiently managed without needing to store a large amount of information in the user device and elsewhere.

The information communication system according to the 26th aspect can be structured according to 27th and 28th aspects. In the information communication system according to the 27th aspect, a user information transmission unit of the user device transmits the user information stored in the user information storage unit to a facility apparatus as the communication destination. A special information transmission request unit of the facility apparatus transmits the user information received from the user device and facility information stored in the facility information storage unit to the management apparatus and allows the management apparatus to transmit specified special information to the vehicle apparatus. The special information transmission unit of the management apparatus verifies the user information and facility information received from the facility apparatus. Based on verification results, the special information transmission unit acquires special information as information appropriate to both a user corresponding to the received user information and a facility corresponding to the received facility information from the special information storage unit and transmits the special information to the vehicle apparatus. The information output unit of the vehicle apparatus in this way acquires the special information from the management apparatus.

In the information communication system according to the 28th aspect, a facility information transmission unit of the facility apparatus transmits the facility information stored in the facility information storage unit to a user device as the communication destination. A special information transmission request unit of the user device transmits the facility information received from the facility apparatus and the user information stored in a user information storage unit to the management apparatus, and allows the management apparatus to transmit specified special information to the vehicle apparatus. A special information transmission unit of the management apparatus verifies the user information and facility information received from the user device. Based on verification results, the special information transmission unit acquires special information as information appropriate to both a user corresponding to the received user information and a facility corresponding to the received facility information from the special information storage unit and transmits the special information to the vehicle apparatus. The information output unit of the vehicle apparatus in this way acquires the special information from the management apparatus.

In the information communication system according to a 29th aspect, a bulletin information transmission unit of the facility apparatus transmits to the management apparatus, the bulletin information to be transmitted to a user. Based on special information stored in the special information storage unit, a selective transmission unit of the management apparatus selects a user to whom the bulletin information received from the facility apparatus is to be transmitted. The selective transmission unit transmits the bulletin information to a user device of the selected user. This type of information communication system can select a user device as a transmission destination based on the special, information and efficiently transmit the bulletin information from the facility apparatus to the user device.

According to a 30th aspect, the user information stored in the user information storage unit includes identification information capable of identifying the user who owns the user device. This type of user information can be used to acquire the special information corresponding to individual users.

According to a 31st aspect, the user information stored in the user information storage unit includes registration information registered for the user who owns the user device. This type of user information can be used to acquire the special information corresponding to the registration information without being limited to information corresponding to individual users. In this case, according to a 32nd aspect, information about the user can be easily registered by providing a registration information input unit capable of supplying information about the user; and a user information registration unit for allowing the user information storage unit to store registration information as information supplied by the registration information input unit.

According to a 33rd aspect, the user information stored in the user information storage unit includes status information indicating a status of the user who owns the user device. This type of user information can be used to output the special information corresponding to the user's real-time status.

The information communication system according to a 34th aspect further includes a vehicle apparatus mounted on a vehicle communicable with the user device. The user device includes a special information storage unit. The vehicle apparatus contains an information output unit that acquires special information specified based on facility information stored in a facility apparatus as the communication destination of the user device from the user device. In this type of information communication system, the vehicle apparatus can acquire and output the special information specially made for the combination of the user using a facility and the facility used by the user. The information communication system allows the user device to manage special information about multiple facilities. There is no need to separately provide an apparatus (management apparatus) for jointly managing the special information so the structure of the information communication system can be simplified.

The information communication system according to the 34th aspect can be structured according to a 35th aspect. In the information communication system according to the 35th aspect, a special information transmission request unit of the facility apparatus transmits the facility information stored in the facility information storage unit to a user device as the communication destination, and allows the user device to transmit specified special information to the vehicle apparatus. Based on the facility information received from the facility apparatus, a special information transmission unit of the user device acquires special information as information appropriate to both a user having the user device and a facility corresponding to the received facility information from the special information storage unit and transmits the special information to the vehicle apparatus. The information output unit of the vehicle apparatus in this way acquires the special information from the user device.

In the information communication system according to a 36th aspect, the user device includes a user information storage unit that stores status information indicating the status of a user having the user device as user information about the user. The information output unit acquires, from the user device, special information specified based on the user information stored in the user device as the communication destination of the facility apparatus, and the facility information stored in the facility apparatus. This type of information communication system can output special information corresponding to the user's real-time status.

In the information communication system according to a 37th aspect, a status detection unit of the vehicle apparatus detects a status of at least one of the user in a vehicle and the vehicle. A vehicle transmission unit transmits the status information indicating a status detected by the status detection unit to the user device. The user information storage unit stores the status information received from the vehicle apparatus as user information. This type of information communication system can acquire special information corresponding to the status of at least one of a user in a vehicle and the vehicle.

According to a 38th aspect, the status detection unit can be structured to detect the status of a user driving a vehicle from among the vehicle occupants. According to a 39th aspect, the status detection unit is structured to detect the driving status as the status of the user driving the vehicle. Special information can therefore be acquired according the driving status.

According to a 40th aspect, the vehicle transmission unit can be structured to transmit status information detected by the status detection unit to the user device at a specified timing. In a preferred structure according to a 41st aspect, an unloading detection unit in the vehicle apparatus detects that the user has left the vehicle based on a vehicle operation status. When the unloading detection unit detects the user has left the vehicle, the vehicle transmitter unit transmits the status information to the user device. The vehicle apparatus can in this way efficiently transmit the status information to the user device.

According to a 42nd aspect, the status information stored in the user information storage unit includes biometric information about the user having the user device. Utilizing this biometric information makes it possible to accurately evaluate the user status. This aspect can therefore acquire special information appropriate to the user's status.

In the information communication system according to a 43rd aspect, the information output unit acquires the special information specified based on user information as special information associated with user information belonging to an approximate range of the user information. This type of information communication system can acquire effective special information even when the special information storage unit does not store special information strictly corresponding to the user information. According to a 44th aspect, it may be preferable to acquire special information so that user information associated with the special information approximates the user information stored in the user information storage unit at a level of a specified threshold value or larger.

In the information communication system according to a 45th aspect, the special information storage unit is structured to be capable of storing special information about multiple facilities belonging to different facility types. Even when a user visits various facilities belonging to different facility types, the information communication system can output special information specially made for the combination of the user and the facility. In other words, the special information can be output independently of the type of business.

According to a 46th aspect, the facility information storage unit may store the facility information as information about the type of facility possessing the facility apparatus. The information output unit can in this way acquire special information corresponding to the facility type. Accordingly, effective special information can be acquired even when the special information storage unit does not store the special information corresponding to the same facility. Special information specially made for the combination of the user and facility can therefore be output even when the user visits the facility for the first time.

An information communication system according to a 47th aspect includes a user device, a facility apparatus, and a management apparatus. The information communication system transmits to the management apparatus, the user information stored in the user device and the facility information stored in the facility apparatus under the condition that the user device and any facility apparatus initiate or maintain communication. The management apparatus verifies the received user information and facility information. Based on the verification results, the management apparatus specifies information appropriate to both a user having a communicating user device and a facility possessing the facility apparatus as special information for the user from the special information storage unit. The facility apparatus outputs the result specified by the management apparatus. This type of information communication system can provide an effect equivalent to the information communication system according to the ninth aspect.

An information communication system according to a 48th aspect includes a user device, a facility apparatus, and a management apparatus. The information communication system transmits the user information stored in the user device and the facility information stored in the facility apparatus to the management apparatus under the condition that the user device and any facility apparatus initiate or maintain communication. The management apparatus verifies the received user information and facility information and, based on the verification results, specifies information appropriate to both a user having the communicating user device and the facility possessing the communicating facility apparatus as special information for the user from the special information storage unit. The user device outputs the result specified by the management apparatus. This type of information communication system can provide an effect equivalent to the information communication system according to the 12th aspect.

An information communication system according to a 49th aspect includes a user device, a facility apparatus, a management apparatus, and a vehicle apparatus. The information communication system transmits the user information (status information detected in a vehicle) stored in the user device and the facility information stored in the facility apparatus to the management apparatus under the condition that the user device and any facility apparatus initiate or maintain communication. The management apparatus verifies the received user information and facility information and, based on verification results, specifies information appropriate to both a user having the communicating user device and a facility possessing the communicating facility apparatus as special information for the user from the special information storage unit. The facility apparatus outputs the result specified by the management apparatus. This type of information communication system can acquire special information corresponding to the status of at least one of the user in a vehicle and the vehicle.

A facility apparatus according to a 50th aspect is used for an information communication system including a user device, a facility apparatus, and a management apparatus. In the information communication system, a user information transmission unit of the user device transmits the user information stored in a user information storage unit to the facility apparatus as the communication destination. A special information reply unit of the management apparatus verifies the user information and facility information received from the facility apparatus. Based on the verification results, the special information reply unit acquires special information as information appropriate to both a user corresponding to the received user information and a facility corresponding to the received facility information from a special information storage unit and transmits the special information to the facility apparatus. In the information communication system, an information output unit of the facility apparatus transmits the user information received from the user device and facility information stored in the facility information storage unit to the management apparatus, acquires the special information from the management apparatus, and outputs it. This type of facility apparatus can establish the above-described information communication system according to the tenth aspect, and provide the above-described effect.

A facility apparatus according to a 51 st aspect is used for an information communication system including a user device, a facility apparatus, and a management apparatus. In the information communication system, a special information transmission unit of the management apparatus verifies the user information and facility information received from the user device. Based on verification results, the special information transmission unit acquires special information as information appropriate to both a user corresponding to the received information and a facility corresponding to the received facility information from a special information storage unit and transmits the special information to the facility apparatus. A special information transmission request unit of the user device transmits the facility information received from the facility apparatus and the user information stored in the user information storage unit to the management apparatus and allows the management apparatus to transmit special information to the facility apparatus from which the facility information was received. In the information communication system, an information output unit in the facility apparatus transmits the facility information stored in the facility information storage unit to the user device as the communication destination, acquires the special information from the management apparatus, and outputs it. This type of facility apparatus can establish the above-described information communication system according to the 11th aspect, and provide the above-described effect.

A facility apparatus according to a 52nd aspect is used for an information communication system including a user device, a facility apparatus, and a management apparatus. In the information communication system, a special information reply unit of the management apparatus verifies the user information and facility information received from the user device. Based on the verification results, the special information reply unit acquires special information as information appropriate to both a user corresponding to the received user information and a facility corresponding to the received facility information from a special information storage unit and transmits the special information to the user device. An information output unit of the user device transmits the facility information received from the facility apparatus and the user information stored in the user information storage unit to the management apparatus, acquires special information from the management apparatus, and outputs it. In the information communication system, a facility information transmission unit of the facility apparatus transmits the facility information stored in the facility information storage unit to the user device as the communication destination. This type of facility apparatus can establish the above-described information communication system according to the 13th aspect and provide the above-described effect.

A facility apparatus according to a 53rd aspect is used for an information communication system including a user device, a facility apparatus, and a management apparatus. In the information communication system, a special information transmission unit of the management apparatus verifies the user information and facility information received from the facility apparatus. Based on the verification results, the special information transmission unit acquires special information as information appropriate to both a user corresponding to the received user information and a facility corresponding to the received facility information from a special information storage unit and transmits the special information to the user device. An information output unit of the user device transmits the user information stored in the user information storage unit to a facility apparatus as the communication destination, acquires special information from a management apparatus, and outputs it. In the information communication system, a special information transmission request unit of the facility apparatus transmits the user information received from the user device and facility information stored in the facility information storage unit to the management apparatus and allows the management apparatus to transmit the special information to the user device. This type of facility apparatus can establish the above-described information communication system according to the 14th aspect and provide the above-described effect.

A facility apparatus according to a 54th aspect is used for an information communication system including a user device and a facility apparatus. In the information communication system, a special information reply unit of the user device, based on facility information received from the facility apparatus, acquires special information as information appropriate to both a user having the user device and a facility corresponding to the received facility information from a special information storage unit and transmits the special information to the facility apparatus. In the information communication system, an information output unit of the facility apparatus transmits the facility information stored in the facility information storage unit to the user device as the communication destination, acquires the special information from the user device, and outputs it. This type of facility apparatus can establish the above-described information communication system according to the 21st aspect and provide the above-described effect.

According to a 55th aspect, the user device includes a user information storage unit that stores status information indicating a status of a user having the user device as user information about the user. The information output unit of the facility apparatus may acquire and output special information specified based on user information stored in the user device as the communication destination. This aspect can output special information corresponding to the user's real-time status.

A facility apparatus according to a 56th aspect is used for an information communication system including a user device and a facility apparatus. In the information communication system, an information output unit of the user device is based on facility information received from the facility apparatus, acquires special information as information appropriate to both a user having the user device and a facility corresponding to the received facility information from a special information storage unit, and outputs the special information. In the information communication system, a facility information transmission unit of the facility apparatus transmits the facility information stored in the facility information storage unit to the user device as the communication destination. This type of facility apparatus can establish the above-described information communication system according to the 23rd aspect and provide the above-described effect.

A facility apparatus according to a 57th aspect is used for an information communication system including a user device, a facility apparatus, a vehicle apparatus, and a management apparatus. In this information communication system, a user information transmission unit of the user device transmits the user information stored in the user information storage unit to a facility apparatus as the communication destination. A special information transmission unit of the management apparatus verifies the user information and facility information received from the facility apparatus. Based on the verification results, the special information transmission unit acquires special information as information appropriate to both a user corresponding to the received user information and a facility corresponding to the received facility information from a special information storage unit and transmits the special information to the vehicle apparatus. An information output unit of the vehicle apparatus acquires special information from a management apparatus and outputs it. In the information communication system, a special information transmission request unit of the facility apparatus transmits the user information received from the user device and facility information stored in the facility information storage unit to the management apparatus and allows the management apparatus to transmit the special information to the vehicle apparatus. This type of facility apparatus can establish the above-described information communication system according to the 27th aspect and provide the above-described effect.

A facility apparatus according to a 58th aspect is used for an information communication system including a user device, a facility apparatus, a vehicle apparatus, and a management apparatus. In this information communication system, a special information transmission unit of the management apparatus verifies the user information and facility information received from the user device. Based on verification results, the special information transmission unit acquires special information as information appropriate to both a user corresponding to the received user information and a facility corresponding to the received facility information from a special information storage unit and transmits the special information to the vehicle apparatus. A special information transmission request unit of the user device transmits the facility information received from the facility apparatus and the user information stored in the user information storage unit to the management apparatus and allows the management apparatus to transmit special information to the vehicle apparatus. An information output unit of the vehicle apparatus acquires the special information from the management apparatus and outputs it. In the information communication system, a facility information transmission unit of the facility apparatus transmits the facility information stored in the facility information storage unit to a user device as the communication destination. This type of facility apparatus can establish the above-described information communication system according to the 28th aspect and provide the above-described effect.

A facility apparatus according to a 59th aspect is used for an information communication system including a user device, a facility apparatus, and a vehicle apparatus. In the information communication system, a special information transmission unit of the user device is based on facility information received from the facility apparatus, acquires special information as information appropriate to both a user having the user device and a facility corresponding to the received facility information from a special information storage unit, and transmits the special information to the vehicle apparatus. An information output unit of the vehicle apparatus acquires special information from the user device and outputs it. In the information communication system, a special information transmission request unit of the facility apparatus transmits the facility information stored in the facility information storage unit to a user device as the communication destination and allows the user device to transmit special information to the vehicle apparatus. This type of facility apparatus can establish the above-described information communication system according to the 35th aspect and provide the above-described effect.

According to a 60th aspect, the special information storage unit stores special information as information based on the user's history of using a facility in the past. Special information can in this way be output that takes the usage history into account. According to a 61st aspect, a history information registration unit allows the special information storage unit to store the special information as information based on a user facility usage history provided with the facility apparatus. Information can in this way be efficiently stored based on the history.

According to a 62nd aspect, the special information storage unit is capable of storing special information about multiple facilities belonging to different facility types. Even when a user visits various facilities belonging to different facility types, special information specially made for the combination of the user and the facility can be output. In other words, the special information can be output independently of the type of business.

According to a 63rd aspect, the facility information storage unit may store the facility information as information about a type of facility possessing the facility apparatus. The information output unit can in this way acquire special information corresponding to the type of facility. Effective special information can therefore be output even when the special information storage unit does not store the special information corresponding to the same facility. Special information specially made for the combination of the user and the facility can therefore be output even when the user visits the facility for the first time.

A user device according to a 64th aspect is used for an information communication system including a user device, a facility apparatus, and a management apparatus. In this information communication system, a special information reply unit of the management apparatus verifies the user information and facility information received from the facility apparatus. Based on the verification results, the special information reply unit acquires special information as information appropriate to both a user corresponding to the received user information and a facility corresponding to the received facility information from a special information storage unit and transmits the special information to the facility apparatus. An information output unit of the facility apparatus transmits the user information received from the user device and facility information stored in the facility information storage unit to the management apparatus, acquires special information from the management apparatus, and outputs it. In the information communication system, a user information transmission unit of the user device transmits the user information stored in the user information storage unit to a facility apparatus as the communication destination. This type of user device can establish the above-described information communication system according to the tenth aspect and provide the above-described effect.

A facility apparatus according to a 65th aspect is used for an information communication system including a user device, a facility apparatus, and a management apparatus. In this information communication system, a special information transmission unit of the management apparatus verifies the user information and facility information received from the user device. Based on verification results, the special information transmission unit acquires special information as information appropriate to both a user corresponding to the received user information and a facility corresponding to the received facility information from a special information storage unit and transmits the special information to the facility apparatus. An information output unit of the facility apparatus transmits the facility information stored in the facility information storage unit to a user device as communication destination, acquires special information from the management apparatus, and outputs it. In this information communication system, a special information transmission request unit of the user device transmits the facility information received from the facility apparatus and the user information stored in the user information storage unit to the management apparatus and allows the management apparatus to transmit special information to the facility apparatus from which the facility information was received. This type of user device can establish the above information communication system according to the 11th aspect and provide the above-described effect.

A user device according to a 66th aspect is used for an information communication system including a user device, a facility apparatus, and a management apparatus. In the information communication system, a facility information transmission unit of the facility apparatus transmits the facility information stored in the facility information storage unit to the user device as the communication destination. A special information reply unit of the management apparatus verifies the user information and facility information received from the user device. Based on verification results, the special information reply unit acquires special information as information appropriate to both a user corresponding to the received user information and a facility corresponding to the received facility information from a special information storage unit and transmits the special information to the user device. In the information communication system, an information output unit of the user device transmits the facility information received from the facility apparatus and the user information stored in the user information storage unit to the management apparatus, acquires the special information from the management apparatus, and outputs it. This type of user device can establish the above-described information communication system according to the 13th aspect and provide the above-described effect.

A user device according to a 67th aspect is used for an information communication system including a user device, a facility apparatus, and a management apparatus. In the information communication system, a special information transmission unit of the management apparatus verifies the user information and facility information received from the facility apparatus. Based on verification results, the special information transmission unit acquires special information as information appropriate to both a user corresponding to the received user information and a facility corresponding to the received facility information from a special information storage unit and transmits the special information to the user device. A special information transmission request unit of the facility apparatus transmits the user information received from the user device and facility information stored in the facility information storage unit to the management apparatus and allows the management apparatus to transmit special information to the user device. In the information communication system, an information output unit of the user device transmits the user information stored in the user information storage unit to a facility apparatus as the communication destination, acquires the special information from the management apparatus, and outputs it. This type of user device can establish the above-described information communication system according to the 14th aspect and provide the above-described effect.

A user device according to a 68th aspect is used for an information communication system including a user device, a facility apparatus, a vehicle apparatus, and a management apparatus. In the information communication system, a special information transmission unit of the management apparatus verifies the user information and facility information received from the facility apparatus. Based on verification results, the special information transmission unit acquires special information as information appropriate to both a user corresponding to the received user information and a facility corresponding to the received facility information from a special information storage unit and transmits the special information to the vehicle apparatus. A special information transmission request unit of the facility apparatus transmits the user information received from the user device and facility information stored in the facility information storage unit to the management apparatus and allows the management apparatus to transmit special information to the vehicle apparatus. An information output unit of the vehicle apparatus acquires special information from a management apparatus and outputs it. In the information communication system, a user information transmission unit of the user device transmits the user information stored in the user information storage unit to a facility apparatus as the communication destination. This type of user device can establish the above-described information communication system according to the 27th aspect and provide the above effect.

A user device according to a 69th aspect is used for an information communication system including a user device, a facility apparatus, a vehicle apparatus, and a management apparatus. In the information communication system, a facility information transmission unit of the facility apparatus transmits the facility information stored in the facility information storage unit to a user device as the communication destination. A special information transmission unit of the management apparatus verifies the user information and the facility information received from the user device. Based on verification results, the special information transmission unit acquires special information as information appropriate to both a user corresponding to the received user information and a facility corresponding to the received facility information from a special information storage unit, and transmits the special information to the vehicle apparatus. An information output unit of the vehicle apparatus acquires special information from a management apparatus and outputs it. In the information communication system, a special information transmission request unit of the user device transmits the facility information received from the facility apparatus and the user information stored in the user information storage unit to the management apparatus and allows the management apparatus to transmit the special information to the vehicle apparatus. This type of user device can establish the above-described information communication system according to the 28th aspect and provide the above effect.

According to a 70th aspect, for example, the user information stored in the user information storage unit includes identification information capable of identifying a user who owns the user device. This type of user information can be used to output the special information corresponding to individual users.

According to a 71st aspect, for example, the user information stored in the user information storage unit includes registration information registered for the user who owns the user device. This type of user information can be used to output the special information corresponding to the registration information without being limited to information corresponding to individual users. In this case, according to a 72nd aspect, the information communication system includes: a registration information input unit that can input information about a user; and a user information registration unit that allows the user information storage unit to store registration information as information supplied by the registration information input unit. This aspect makes it possible to easily register information about the user.

According to a 73rd aspect, for example, the user information stored in the user information storage unit includes status information indicating the status of the user who owns the user device. This type of user information can be used to output special information corresponding to the user's real-time status.

A user device according to a 74th aspect is used for an information communication system including a user device and a facility apparatus. In the information communication system, an information output unit of the facility apparatus transmits the facility information stored in the facility information storage unit to the user device as the communication destination, acquires specified special information from the user device, and outputs it. In the information communication system, a special information reply unit of the user device is based on the facility information received from the facility apparatus, acquires special information as information appropriate to both a user having the user device and a facility corresponding to the received facility information from a special information storage unit, and transmits the special information to the facility apparatus. This type of user device can establish the above-described information communication system according to the 21st aspect and provide the above-described effect.

A user device according to a 75th aspect is used for an information communication system including a user device and a facility apparatus. In the information communication system, a facility information transmission unit of the facility apparatus transmits the facility information stored in the facility information storage unit to the user device as the communication destination. In the information communication system, an information output unit of the user device is based on facility information received from the facility apparatus, acquires special information as information appropriate to both a user having the user device and a facility corresponding to the received facility information from a special information storage unit, and outputs the special information. This type of user device can establish the above-described information communication system according to the 23rd aspect and provide the above-described effect.

A user device according to a 76th aspect is used for an information communication system including a user device, a facility apparatus, and a vehicle apparatus. In the information communication system, a special information transmission request unit of the facility apparatus transmits the facility information stored in the facility information storage unit to the user device as the communication destination and allows the user device to transmit the specified special information to the vehicle apparatus. An information output unit of the vehicle apparatus acquires the special information from the user device and outputs it. In the information communication system, a special information transmission unit of the user device is based on facility information received from the facility apparatus, acquires special information as information appropriate to both a user having the user device and a facility corresponding to the received facility information from a special information storage unit, and transmits the special information to the vehicle apparatus. This type of user device can establish the above-described information communication system according to the 35th aspect and provide the above-described effect.

The user device according to a 77th aspect includes a user information storage unit that stores status information indicating a status of a user having the user device as user information about the user. The information output unit acquires special information specified based on user information stored in the user information storage unit from a special information storage unit and outputs the special information. This type of structure can output the special information corresponding to the user's real-time status.

According to a 78th aspect, for example, the status information stored in the user information storage unit includes biometric information about the user having the user device. Utilizing the biometric information makes it possible to evaluate the user's status with comparatively high accuracy. This aspect makes it possible to output the special information appropriate to the user's status.

According to a 79th aspect, the special information storage unit stores special information as information based on a user's history of using a facility in the past. The special information can therefore be output while taking into account the usage history. According to an 80th aspect, a history information registration unit of the facility apparatus allows the special information storage unit to store the special information as information based on a user facility usage history corresponding to the facility apparatus. Information can therefore be efficiently stored based on the history.

According to an 81st aspect, the special information storage unit is capable of storing special information about multiple facilities belonging to different types of facilities. Even when a user visits various facilities belonging to different types of facilities, special information can be output, specially made for the combination of the user and the facility. In other words, the special information can be output independently of the type of business.

According to an 82nd aspect, the facility information storage unit may store the facility information as information about the type of facility possessing the facility apparatus. The information output unit can in this way acquire special information corresponding to the type of facility. Effective special information can therefore be output even when the special information storage unit does not store special information corresponding to the same facility. This aspect therefore makes it possible to output special information, specially made for the combination of the user and the facility even when the user visits the facility for the first time.

A management apparatus according to an 83rd aspect is used for an information communication system including a user device, a facility apparatus, and a management apparatus. In the information communication system, a user information transmission unit of the user device transmits the user information stored in the user information storage unit to a facility apparatus as the communication destination. An information output unit of the facility apparatus transmits the user information received from the user device and facility information stored in the facility information storage unit to the management apparatus and acquires specified special information from the management apparatus and outputs it. In the information communication system, a special information reply unit of the management apparatus verifies the user information and facility information received from the facility apparatus. Based on the verification results, the special information reply unit acquires special information as information appropriate to both a user corresponding to the received user information and a facility corresponding to the received facility information from a special information storage unit and transmits that special information to the facility apparatus. This type of management apparatus can establish the above-described information communication system according to the tenth aspect and provide the above effect.

A management apparatus according to an 84th aspect is used for an information communication system including a user device, a facility apparatus, and a management apparatus. In the information communication system, a special information transmission request unit of the user device transmits the facility information received from the facility apparatus and the user information stored in a user information storage unit to the management apparatus and allows the management apparatus to transmit specified special information to the facility apparatus from which the facility information was received. An information output unit of the facility apparatus transmits the facility information stored in a facility information storage unit to the user device as the communication destination and acquires special information from the management apparatus and outputs it. In the information communication system, a special information transmission unit of the management apparatus verifies the received user information and facility information. Based on verification results, the special information transmission unit acquires special information as information appropriate to both a user corresponding to the received user information and a facility corresponding to the received facility information from a special information storage unit and transmits the special information to the facility apparatus. This type of management apparatus establishes the above-described information communication system according to the 11th aspect and provides the above-described effect.

A management apparatus according to an 85th aspect is used for an information communication system including a user device, a facility apparatus, and a management apparatus. In the information communication system, a facility information transmission unit of the facility apparatus transmits the facility information stored in a facility information storage unit to the user device as the communication destination. An information output unit of the user device transmits the facility information received from the facility apparatus and the user information stored in a user information storage unit to the management apparatus, acquires specified special information from the management apparatus, and outputs it. In the information communication system, a special information reply unit of the management apparatus verifies the user information and facility information received from the user device. Based on verification results, the special information reply unit acquires special information as information appropriate to both a user corresponding to the received user information and a facility corresponding to the received facility information from a special information storage unit and transmits the special information to the user device. This type of management apparatus can establish the above-described information communication system according to the 13th aspect and provide the above-described effect.

A management apparatus according to an 86th aspect is used for an information communication system including a user device, a facility apparatus, and a management apparatus. In the information communication system, a special information transmission request unit of the facility apparatus transmits the user information received from the user device and the facility information stored in a facility information storage unit to the management apparatus and allows the management apparatus to transmit specified special information to the user device. An information output unit of the user device transmits the user information stored in a user information storage unit to the facility apparatus as the communication destination, acquires the special information from the management apparatus, and outputs it. In the information communication system, a special information transmission unit of the management apparatus verifies the received user information and facility information. Based on the verification results, the special information transmission unit acquires special information as information appropriate to both a user corresponding to the received user information and a facility corresponding to the received facility information from a special information storage unit and transmits the special information to the user device. This type of management apparatus can establish the above-described information communication system according to the 14th aspect and provide the above-described effect.

A management apparatus according to an 87th aspect is used for an information communication system including a user device, a facility apparatus, a vehicle apparatus, and a management apparatus. In the information communication system, a user information transmission unit of the user device transmits the facility information stored in a user information storage unit to the user device as the communication destination. A special information transmission request unit of the facility apparatus transmits the user information received from the user device and facility information stored in a facility information storage unit to the management apparatus and allows the management apparatus to transmit the specified special information to the vehicle apparatus. An information output unit of the vehicle apparatus acquires the special information from the management apparatus and outputs it. In the information communication system, a special information transmission unit of the management apparatus verifies the received user information and the facility information. Based on verification results, the special information transmission unit acquires special information as information appropriate to both a user corresponding to the received user information and a facility corresponding to the received facility information from a special information storage unit and transmits the special information to the vehicle apparatus. This type of management apparatus can establish the above-described information communication system according to the 27th aspect and provide the above-described effect.

A management apparatus according to an 88th aspect is used for an information communication system including a user device, a facility apparatus, a vehicle apparatus, and a management apparatus. In the information communication system, a facility information transmission unit of the facility apparatus transmits the facility information stored in a facility information storage unit to the user device as the communication destination. A special information transmission request unit of the user device transmits the facility information received from the facility apparatus and the user information stored in a user information storage unit to the management apparatus and allows the management apparatus to transmit specified special information to the vehicle apparatus. An information output unit of the vehicle apparatus acquires the special information from the management apparatus and outputs it. In the information communication system, a special information transmission unit of the management apparatus verifies the received user information and the facility information. Based on verification results, the special information transmission unit acquires special information as information appropriate to both a user corresponding to the received user information and a facility corresponding to the received facility information from a special information storage unit and transmits the special information to the vehicle apparatus. This type of management apparatus can establish the above-described information communication system according to the 28th aspect and provide the above-described effect.

According to an 89th aspect, the special information storage unit stores special information as information based on a user's history of using a facility in the past. In this manner, it is possible to output the special information in consideration for a usage history. According to a 90th aspect, a history information registration unit of the facility apparatus allows the special information storage unit to store the special information as information based on a user facility usage history provided with the facility apparatus. Information can therefore be efficiently stored based on the history.

According to a 91st aspect, the special information storage unit is capable of storing special information about multiple facilities belonging to different types of facilities. Even when a user visits various facilities with different types of facilities, special information specially made for the combination of the user and the facility can be output. In other words, the special information can be output independently of the type of business.

According to a 92nd aspect, the facility information storage unit may store the facility information as information about the type of facility possessing the facility apparatus. The information output unit can in this way acquire special information corresponding to the type of facility. Effective special information can therefore be output even when the special information storage unit does not store the special information corresponding to the same facility. Special information specially made for the combination of the user and the facility can therefore be output even when the user visits the facility for the first time.

A vehicle apparatus according to a 93rd aspect is used for an information communication system including a user device, a facility apparatus, and a vehicle apparatus. The information communication system includes an information output unit for outputting special information, namely information specified based on user information stored in the user device and appropriate to the facility possessing the facility apparatus under the condition that the user device and any facility apparatus initiate or maintain communication. In the information communication system, the user device includes a user information storage unit that stores status information received from the vehicle apparatus as user information about a user. In the information communication system, a status detection unit of the vehicle apparatus detects the status of at least one of a user in a vehicle and the vehicle. A vehicle transmission unit transmits status information indicating a status detected by the status detection unit to the user device. The information communication system structured using this type of vehicle apparatus can output special information corresponding to the user status in the vehicle as special information specially made for the combination of the user using a facility and the facility to be used.

According to a 94th aspect, for example, the status detection unit can detect the status of the user driving a vehicle among the vehicle occupants. According to a 95th aspect, the status detection unit can detect the status of the user driving the vehicle as the driving status, then the special information can be output according to the driving status.

According to a 96th aspect, the vehicle status includes the onboard device status. In a preferred structure according to a 97th aspect, an unloading detection unit can detect that the user has left the vehicle based on a vehicle operation status. When the unloading detection unit detects the user has left the vehicle, a vehicle transmission unit can transmit status information to the user device. In this aspect, the vehicle apparatus can efficiently transmit the status information to the user device.

According to a 98th aspect, the status information stored in the user information storage unit includes biometric information about a user. Utilizing this biometric information makes it possible to evaluate the user's status with relatively high accuracy, and to output the special information appropriate to the user's status.

A vehicle apparatus according to a 99th aspect is used for an information communication system including a user device, a facility apparatus, a vehicle apparatus, and a management apparatus. In the information communication system, a user information transmission unit of the user device transmits the user information stored in a user information storage unit to the facility apparatus as the communication destination. A special information transmission unit of the management apparatus verifies the user information and the facility information received from the facility apparatus. Based on verification results, the special information transmission unit acquires special information as information appropriate to both a user corresponding to the received user information and a facility corresponding to the received facility information from a special information storage unit and transmits the special information to the vehicle apparatus. A special information transmission request unit of the facility apparatus transmits the user information received from the user device and the facility information stored in a facility information storage unit to the management apparatus and allows the management apparatus to transmit special information to the vehicle apparatus. In the information communication system, an information output unit of the vehicle apparatus acquires special information from the management apparatus and outputs it. This type of vehicle apparatus can establish the above-described information communication system according to the 27th aspect and provide the above-described effect.

A vehicle apparatus according to a 100th aspect is used for an information communication system including a user device, a facility apparatus, a vehicle apparatus, and a management apparatus. In the information communication system, a facility information transmission unit of the facility apparatus transmits the facility information stored in a facility information storage unit to the user device as the communication destination. A special information transmission unit of the management apparatus verifies the user information and facility information received from the user device. Based on verification results, the special information transmission unit acquires special information as information appropriate to both a user corresponding to the received user information and a facility corresponding to the received facility information from a special information storage unit and transmits the special information to the vehicle apparatus. A special information transmission request unit of the user device transmits the facility information received from the facility apparatus and the user information stored in a user information storage unit to the management apparatus and allows the management apparatus to transmit special information to the vehicle apparatus. In the information communication system, an information output unit of the vehicle apparatus acquires special information from the management apparatus and outputs it. This type of vehicle apparatus can establish the above-described information communication system according to the 28th aspect and provide the above-described effect.

A vehicle apparatus according to a 101 st aspect is used for an information communication system including a user device, a facility apparatus, and a vehicle apparatus. In the information communication system, a special information transmission unit of the user device is based on the facility information received from the facility apparatus, acquires special information as information appropriate to both a user having the user device and a facility corresponding to the received facility information from a special information storage unit, and transmits the special information to the vehicle apparatus. A special information transmission request unit of the facility apparatus transmits the facility information stored in a facility information storage unit to the user device as the communication destination and allows the user device to transmit the special information to the vehicle apparatus. In the information communication system, an information output unit of the vehicle apparatus acquires the special information from the user device and outputs it. This type of vehicle apparatus can establish the above-described information communication system according to the 35th aspect and provide the above-described effect.

According to a 102nd aspect, for example, the special information storage unit stores the special information as information based on a user's past history of facility use. The special information in this way can be output by taking the usage history into account. According to a 103rd aspect for example, the history information registration unit of the facility apparatus allows the special information storage unit to store the special information as information based on a user facility usage history provided with the facility apparatus. Information can therefore be efficiently stored based on this history.

According to a 104th aspect, the special information storage unit is capable of storing special information about multiple facilities belonging to different types of facilities. Even when a user visits various facilities of different types, special information specially made for the combination of the user and the facility can be output. In other words, the special information can be output independently of the type of business.

According to a 105th aspect, the facility information storage unit may store the facility information as information about the type of facility possessing the facility apparatus. The information output unit can in this way acquire special information corresponding to the type of facility. Effective special information can therefore be output even when the special information storage unit does not store the special information corresponding to the same facility. Consequently, special information specially made for the combination of the user and the facility can be output even when the user visits the facility for the first time.

A facility program according to a 106th aspect allows a computer to function as a facility apparatus used for an information communication system including a user device, a facility apparatus, and a management apparatus. Specifically, the facility program allows the computer to function as a facility information storage unit and an information output unit. In the information communication system, a user information transmission unit of the user device transmits the user information stored in a user information storage unit to the facility apparatus as the communication destination. A special information reply unit of the management apparatus verifies the user information and the facility information received from the facility apparatus. Based on verification results, the special information reply unit acquires special information as information appropriate to both a user corresponding to the received user information and a facility corresponding to the received facility information from a special information storage unit, and transmits that special information to the facility apparatus. An information output unit of the facility apparatus transmits the user information received from the user device and the facility information stored in a facility information storage unit to the management apparatus, acquires special information from the management apparatus, and outputs it. This type of facility program can allow a computer to function as the facility apparatus according to the 50th aspect and provide the above-described effect.

A facility program according to a 107th aspect allows a computer to function as a facility apparatus used for an information communication system including a user device, a facility apparatus, and a management apparatus. Specifically, the facility program allows the computer to function as a facility information storage unit and as an information output unit. In the information communication system, a special information transmission unit of the management apparatus verifies the user information and the facility information received from the user device. Based on verification results, the special information transmission unit acquires the special information as information appropriate to both a user corresponding to the received user information and a facility corresponding to the received facility information from a special information storage unit, and transmits the special information to the facility apparatus. A special information transmission request unit of the user device transmits the facility information received from the facility apparatus and the user information stored in the user information storage unit to the management apparatus and allows the management apparatus to transmit the special information to the facility apparatus from which the facility information was received. An information output unit of the facility apparatus transmits the facility information stored in a facility information storage unit to the user device as the communication destination, acquires special information from the management apparatus, and outputs it. This type of facility program can allow a computer to function as the facility apparatus according to the 51 st aspect and provide the above-described effect.

A facility program according to a 108th aspect allows a computer to function as a facility apparatus used for an information communication system including a user device and a facility apparatus. Specifically, the facility program allows the computer to function as a facility information storage unit and an information output unit. In the information communication system, a special information reply unit of the user device is based on the facility information received from the facility apparatus, acquires special information as information appropriate to both a user having the user device and a facility corresponding to the received facility information from a special information storage unit, and transmits the special information to the facility apparatus. An information output unit of the facility apparatus transmits the facility information stored in a facility information storage unit to the user device as the communication destination, acquires special information from the user device, and outputs it. This type of facility program can allow a computer to function as the facility apparatus according to the 54th aspect and provide the above-described effect.

A user program according to a 109th aspect allows a computer to function as a user device used for an information communication system including a user device, a facility apparatus, and a management apparatus. Specifically, the user program allows the computer to function as a user information storage unit and a user information transmission unit. In the information communication system, a user information transmission unit of the user device transmits the user information stored in a user information storage unit to the facility apparatus as the communication destination. A special information reply unit of the management apparatus verifies the user information and the facility information received from the facility apparatus. Based on verification results, the special information reply unit acquires special information as information appropriate to both a user corresponding to the received user information and a facility corresponding to the received facility information from a special information storage unit and transmits the special information to the facility apparatus. An information output unit of the facility apparatus transmits the user information received from the user device and facility information stored in a facility information storage unit to the management apparatus, acquires special information from the management apparatus, and outputs it. This type of user program can allow a computer to function as the user device according to the 64th aspect and provide the above-described effect.

A user program according to a 110th aspect allows a computer to function as a user device used for an information communication system including a user device, a facility apparatus, and a management apparatus. Specifically, the user program allows the computer to function as a user information storage unit and a special information transmission request unit. In the information communication system, a special information transmission request unit in the user device transmits the facility information received from the facility apparatus and the user information stored in the user information storage unit to the management apparatus and allows the management apparatus to transmit the special information to the facility apparatus from which the facility information was received. A special information transmission unit of the management apparatus verifies the user information and the facility information received from the user device. Based on verification results, the special information transmission unit acquires special information as information appropriate to both a user corresponding to the received user information and a facility corresponding to the received facility information from a special information storage unit and transmits the special information to the facility apparatus. An information output unit of the facility apparatus transmits the facility information stored in a facility information storage unit to the user device as the communication destination, acquires special information from the management apparatus, and outputs it. This type of user program can allow a computer to function as the user device according to the 65th aspect and provide the above-described effect.

A user program according to a 111th aspect allows a computer to function as a user device used for an information communication system including a user device and a facility apparatus. Specifically, the user program allows the computer to function as a special information storage unit and a special information reply unit. In the information communication system, an information output unit of the facility apparatus transmits the facility information stored in a facility information storage unit to the user device as the communication destination, acquires specified special information from the user device, and outputs it. A special information reply unit of the user device is based on facility information received from the facility apparatus, acquires special information as information appropriate to both a user having the user device and a facility corresponding to the received facility information from a special information storage unit, and transmits the special information to the facility apparatus. This type of user program can allow a computer to function as the user device according to the 74th aspect and provide the above-described effect.

A management program according to a 112th aspect allows a computer to function as a management apparatus used for an information communication system including a user device, a facility apparatus, and a management apparatus. Specifically, the management program allows the computer to function as a special information storage unit and a special information reply unit. In the information communication system, a user information transmission unit of the user device transmits the user information stored in a user information storage unit to the facility apparatus as the communication destination. An information output unit of the facility apparatus transmits the user information received from the user device and the facility information stored in a facility information storage unit to the management apparatus, acquires specified special information from the management apparatus, and outputs it. A special information reply unit of the management apparatus verifies the user information and the facility information received from the facility apparatus. Based on verification results, the special information reply unit acquires the special information as information appropriate to both a user corresponding to the received user information and a facility corresponding to the received facility information from a special information storage unit and transmits the special information to the facility apparatus. This type of management program can allow a computer to function as the management apparatus according to the 83rd aspect and provide the above-described effect.

A management program according to a 113th aspect allows a computer to function as a management apparatus used for an information communication system including a user device, a facility apparatus, and a management apparatus. Specifically, the management program allows the computer to function as a special information storage unit and a special information transmission unit. In the information communication system, a special information transmission request unit of the user device transmits the facility information received from the facility apparatus and the user information stored in a user information storage unit to the management apparatus and allows the management apparatus to transmit the specified special information to the facility apparatus from which the facility information was received. An information output unit of the facility apparatus transmits the facility information stored in a facility information storage unit to the user device as the communication destination, acquires special information from the management apparatus, and outputs it. A special information transmission unit of the management apparatus verifies the user information and facility information received from the user device. Based on verification results, the special information transmission unit acquires special information as information appropriate to both a user corresponding to the received user information and a facility corresponding to the received facility information from a special information storage unit and transmits the special information to the facility apparatus. This type of management program can allow a computer to function as the user device according to the 84th aspect and provide the above-described effect.

A vehicle program according to a 114th aspect allows a computer to function as a vehicle apparatus used for an information communication system including a user device, a facility apparatus, and a vehicle apparatus. Specifically, the vehicle program allows the computer to function as a status detection unit and a vehicle transmission unit. The information communication system includes an information output unit for outputting special information. In other words, the special information is specified based on user information stored in the user device under the condition that the user device and any facility apparatus initiate or maintain communication. The special information is appropriate to the facility possessing the facility apparatus. In the information communication system, the user device includes a user information storage unit that stores status information received from the vehicle apparatus as user information about a user. In the vehicle apparatus, the status detection unit detects the status of at least one of the user in a vehicle and the vehicle. The vehicle transmission unit transmits status information indicating the status detected by the status detection unit to the user device. This type of vehicle program can allow a computer to function as the vehicle apparatus according to the 93rd aspect and provide the above-described effect.

Although particular embodiments of the invention have been described, it should be understood that these are not intended to limit the invention to the particular form disclosed, but on the contrary, the invention covers all modifications, equivalents, and alternatives falling within the scope of the present invention as defined by the appended claims.

## Claims

1. An information communication system (1, 2, 3, 5, 7, 8, 9) comprising:
a user device (20) possessed by a user; and
a facility apparatus (30) provided at a facility a user is able to visit, wherein:
the user device (20) is structured to be capable of communicating with each facility apparatus (30) provided at each of a plurality of facilities; and
an information output unit (22, 32, 12) is provided for outputting, under a condition that the user device (20) and the facility apparatus (30) initiate or maintain communication, information appropriate to both a user having the communicating user device (20) and a facility possessing the communicating facility apparatus (30) as special information for the user.

2. The information communication system of claim 1, wherein
the special information output from the information output unit (22, 32, 12) refers to information about services to be provided to a user having the user device (20) as a communication destination of the facility apparatus (30).

3. The information communication system of claim 1 or 2, wherein
the information output unit (22, 32, 12) outputs special information appropriate to both a user having the communicable user device (20) and a facility possessing the facility apparatus (30).

4. The information communication system of any one of claims 1 through 3, wherein
the facility apparatus (30) is structured to communicate with the user device (20) possessed by a nearby user who visits a facility possessing the facility apparatus (30).

5. The information communication system of claim 4, wherein
the facility apparatus (30) is capable of radio communication with the user device (20).

6. The information communication system of any one of claims 1 through 5, comprising:
a special information storage unit (24, 44) that is capable of storing a plurality of pieces of special information, wherein:
the information output unit (22, 32, 12) acquires, from the special information storage unit (24, 44), special information appropriate to both a user owing the communicable user device (20) and a facility possessing the facility apparatus (30) and outputs that information.

7. The information communication system of claim 6, wherein
the special information storage unit (24, 44) stores the special information based on a user's facility usage history.

8. The information communication system of claim 6 or 7, wherein
the facility apparatus (30) includes a history information registration unit (32) that allows the special information storage unit (24, 44) to store the special information based on a user's history of using a facility possessing the facility apparatus (30).

9. The information communication system of any one of claims 6 through 8, comprising:
a management apparatus (40) capable of communicating with at least one of the user device (20) and the facility apparatus (30), wherein:
the special information storage unit (44) is provided for the management apparatus (40) and is structured to be capable of storing special information about a plurality of users in association with a plurality of facilities;
the user device (20) includes a user information storage unit (22, 24) for storing user information about a user;
the facility apparatus (30) includes a facility information storage unit (34) for storing facility information about a facility; and
the information output unit (32) is provided for the facility apparatus (30) and acquires from the management apparatus (40), special information specified based on user information stored in the user device (20) as a communication destination, and facility information stored in the facility information storage unit (34).

10. The information communication system of claim 9, wherein:
the user device (20) includes a user information transmission unit (22) that transmits user information stored in the user information storage unit (22, 24) to a facility apparatus (30) as a communication destination; and
the management apparatus (40) includes a special information reply unit (42) that verifies user information and facility information received from the facility apparatus (30), based on a verification result, acquires special information appropriate to both a user corresponding to the received user information and a facility corresponding to the received facility information from a plurality of pieces of special information stored in the special information storage unit (44), and transmits the special information to the facility apparatus (30).

11. The information communication system of claim 9, wherein:
the user device (20) includes a special information transmission request unit (22) that transmits facility information received from the facility apparatus (30), and user information stored in the user information storage unit (22, 24) to the management apparatus (40), and allows the management apparatus (40) to transmit specified special information to a facility apparatus (30) as a communication destination of the user device (20); and
the management apparatus (40) includes a special information transmission unit (42) that verifies user information and facility information received from the user device (20), based on a verification result, acquires special information appropriate to both a user corresponding to the received user information and a facility corresponding to the received facility information from a plurality of pieces of special information stored in the special information storage unit (44), and transmits the special information to the facility apparatus (30).

12. The information communication system of any one of claims 6 through 8, comprising
a management apparatus (40) capable of communicating with at least one of the user device (20) and the facility apparatus (30), wherein:
the special information storage unit (44) is provided for the management apparatus (40) and is structured to be capable of storing special information about a plurality of users in association with a plurality of facilities;
the user device (20) includes a user information storage unit (22, 24) for storing user information about a user;
the facility apparatus (30) includes a facility information storage unit (34) for storing facility information about a facility; and
the information output unit (22) is provided for the user device (20) and acquires, from the management apparatus (40), special information specified based on user information stored in the user information storage unit (22, 24) and facility information stored in the facility apparatus (30) as a communication destination.

13. The information communication system of claim 12, wherein:
the facility apparatus (30) includes a facility information transmission unit (32) that transmits facility information stored in the facility information storage unit (34) to a user device (20) as a communication destination; and
the management apparatus (40) includes a special information reply unit (42) that verifies user information and facility information received from the user device (20), based on a verification result, acquires special information appropriate to both a user corresponding to the received user information and a facility corresponding to the received facility information from a plurality of pieces of special information stored in the special information storage unit (44), and transmits the special information to the user device (20).

14. The information communication system of claim 12, wherein:
the facility apparatus (30) includes a special information transmission request unit (32) that transmits user information received from the user device (20) and facility information stored in the facility information storage unit (34) to the management apparatus (40), and allows the management apparatus (40) to transmit specified special information to the user device (20) as a communication destination of the facility apparatus (30); and
the management apparatus (40) includes a special information transmission unit (42) that verifies user information and facility information received from the facility apparatus (30), based on a verification result, acquires special information appropriate to both a user corresponding to the received user information and a facility corresponding to the received facility information from a plurality of pieces of special information stored in the special information storage unit (44), and transmits the special information to the user device (20).

15. The information communication system of any one of claims 9 through 14, wherein:
the facility apparatus (30) includes a bulletin information transmission unit (32) that transmits bulletin information to the management apparatus (40), in other words, also to be transmitted to a user; and
the management apparatus (40) includes a selective transmission unit (42) that receives the bulletin information from the facility apparatus (30), based on special information stored in the special information storage unit (44), selects a user to whom the received bulletin information is to be transmitted, and transmits the bulletin information to a user device (20) of the selected user.

16. The information communication system of any one of claims 9 through 15, wherein
the user information storage unit (22, 24) stores the user information, in other words, information capable of identifying a user who owns the user device (20).

17. The information communication system of any one of claims 9 through 16, wherein
the user information storage unit (22, 24) stores the user information, in other words, registration information registered for a user who owns the user device (20).

18. The information communication system of claim 17, further comprising:
a registration information input unit (52) capable of inputting information about a user; and
a user information registration unit (56) that allows the user information storage unit (22, 24) to store registration information as information supplied by the registration information input unit (52).

19. The information communication system of any one of claims 9 through 18, wherein
the user information storage unit (22, 24) stores, as the user information, status information indicating status of a user who owns the user device (20).

20. The information communication system of any one of claims 6 through 8, wherein:
the special information storage unit (24) is provided for the user device (20) and is structured to be capable of storing special information about a user having the user device (20) in association with a plurality of facilities;
the facility apparatus (30) includes a facility information storage unit (34) for storing facility information about a facility; and
the information output unit (32) is provided for the facility apparatus (30) and acquires from a user device (20) as a communication destination, special information specified based on facility information stored in the facility information storage unit (34).

21. The information communication system of claim 20, wherein:
the user device (20) includes a special information reply unit (22) that receives the facility information from the facility apparatus (30), based on the received facility information, acquires special information as information appropriate to both a user having the user device (20) and a facility corresponding to the received facility information from a plurality of pieces of special information stored in the special information storage unit (24) and transmits the special information to the facility apparatus (30); and
the information output unit (32) transmits facility information stored in the facility information storage unit (34) to a user device (20) as a communication destination and acquires the special information from the user device (20).

22. The information communication system of any one of claims 6 through 8, wherein:
the special information storage unit (24) is provided for the user device (20) and is structured to be capable of storing special information about a user having the user device (20) in association with a plurality of facilities;
the facility apparatus (30) includes a facility information storage unit (34) for storing facility information about a facility; and
the information output unit (22) is provided for the user device (20) and acquires special information specified based on facility information stored in a facility apparatus (30) as a communication destination from a plurality of pieces of special information stored in the special information storage unit (24, 44).

23. The information communication system of claim 22, wherein:
the facility apparatus (30) includes a facility information transmission unit (32) that transmits facility information stored in the facility information storage unit (34) to a user device (20) as a communication destination; and
the information output unit (22), based on facility information received from the facility apparatus (30), acquires special information as information appropriate to both a user having the user device (20) and a facility corresponding to the received facility information from a plurality of pieces of special information stored in the special information storage unit (24).

24. The information communication system of any one of claims 20 through 23, wherein:
the user device includes a user information storage unit (22, 24) that stores status information indicating status of a user having the user device (20) as user information about the user; and
the information output unit (22, 32) acquires special information specified based on user information stored in a user device (20) as a communication destination of the facility apparatus (30) from a plurality of pieces of special information stored in the special information storage unit (24).

25. The information communication system of claim 19 or 24, further comprising a vehicle apparatus (10) mounted on a vehicle communicable with the user device (20),
the vehicle apparatus (10) including:
a status detection unit (12) for detecting a status of at least one of a user in a vehicle and the vehicle; and
a vehicle transmission unit (12) for transmitting status information indicating a status detected by the status detection unit (12) to the user device (20), wherein
the user information storage unit (22, 24) stores status information received from the vehicle apparatus (10) as the user information.

26. The information communication system of any one of claims 6 through 8, comprising:
a vehicle apparatus (10) mounted on a vehicle communicable with the user device (20); and
a management apparatus (40) communicable with at least one of the user device (20), the facility apparatus (30), and the vehicle apparatus (10), wherein:
the special information storage unit (44) is provided for the management apparatus (40) and is structured to be capable of storing special information about a plurality of users in association with a plurality of facilities;
the user device (20) includes a user information storage unit (22, 24) for storing user information about a user;
the facility apparatus (30) includes a facility information storage unit (34) for storing facility information about a facility; and
the information output unit (12) is provided for the vehicle apparatus (10) and acquires from the management apparatus (40), a result of verification between user information and facility information made by the management apparatus (40).

27. The information communication system of claim 26, wherein:
the user device (20) includes a user information transmission unit (22) that transmits user information stored in the user information storage unit (22, 24) to a facility apparatus (30) as a communication destination;
the facility apparatus (30) includes a special information transmission request unit (32) that transmits user information received from the user device (20) and facility information stored in the facility information storage unit (34) to the management apparatus (40) and allows the management apparatus (40) to transmit specified special information to the vehicle apparatus (10);
the management apparatus (40) includes a special information transmission unit (42) that verifies the user information and the facility information received from the facility apparatus (30), based on a verification result, acquires special information as information appropriate to both a user corresponding to the received user information and a facility corresponding to the received facility information from a plurality of pieces of special information stored in the special information storage unit (44), and transmits the special information to the vehicle apparatus (10); and
the information output unit (12) acquires the special information from the management apparatus (40).

28. The information communication system of claim 26, wherein:
the facility apparatus (30) includes a facility information transmission unit (32) that transmits facility information stored in the facility information storage unit (34) to a user device (20) as a communication destination;
the user device (20) includes a special information transmission request unit (22) that transmits facility information received from the facility apparatus (30) and user information stored in the user information storage unit (22, 24) to the management apparatus (40) and allows the management apparatus (40) to transmit specified special information to the vehicle apparatus (10);
the management apparatus (40) includes a special information transmission unit (42) that verifies the user information and the facility information received from the user device (20), based on a verification result, acquires special information as information appropriate to both a user corresponding to the received user information and a facility corresponding to the received facility information from a plurality of pieces of special information stored in the special information storage unit (44), and transmits the special information to the vehicle apparatus (10); and
the information output unit (12) acquires the special information from the management apparatus (40).

29. The information communication system of any one of claims 26 through 28, wherein:
the facility apparatus (30) includes a bulletin information transmission unit (32) that sends to the management apparatus (40), bulletin information to be transmitted to a user; and
the management apparatus (40) includes a selective transmission unit (42) that, based on special information stored in the special information storage unit (44), selects a user to whom the bulletin information received from the facility apparatus (30) is to be transmitted, and transmits the bulletin information to a user device (20) of the selected user.

30. The information communication system of any one of claims 26 through 29, wherein
the user information storage unit (22, 24) stores the user information equivalent to information capable of identifying a user who owns the user device (20).

31. The information communication system of any one of claims 26 through 30, wherein
the user information storage unit (22, 24) stores the user information equivalent to registration information registered for a user who owns the user device (20).

32. The information communication system of claim 31, further comprising:
a registration information input unit (52) for supplying information about a user; and
a user information registration unit (56) that allows the user information storage unit (22, 24) to store information supplied by the registration information input unit (52) as registration information.

33. The information communication system of any one of claims 26 through 32, wherein
the user information storage unit (22, 24) stores the user information equivalent to status information indicating a status of a user who owns the user device (20).

34. The information communication system of any one of claims 6 through 8, further comprising a vehicle apparatus (10) mounted on a vehicle communicable with the user device (20), wherein:
the special information storage unit (24) is provided for the user device (20) and is structured to be capable of storing special information about a user having the user device (20) in association with a plurality of facilities;
the facility apparatus (30) includes a facility information storage unit (34) for storing facility information about a facility; and
the information output unit (12) is provided for the vehicle apparatus (10) and acquires from the user device (20), special information specified based on facility information stored in a facility apparatus (30) as a communication destination of the user device (20).

35. The information communication system of claim 34, wherein:
the facility apparatus (30) includes a special information transmission request unit (32) that transmits facility information stored in the facility information storage unit (34) to a user device (20) as a communication destination and allows the user device (20) to transmit specified special information to the vehicle apparatus (10);
the user device (20) includes a special information transmission unit (22) that, based on the facility information received from the facility apparatus (30), acquires special information as information appropriate to both a user having the user device (20) and a facility corresponding to the received facility information from a plurality of pieces of special information stored in the special information storage unit (24) and transmits the special information to the vehicle apparatus (10); and
the information output unit (12) acquires the special information from the user device (20).

36. The information communication system of claim 34 or 35, wherein:
the user device (20) includes a user information storage unit (22, 24) that stores status information indicating a status of a user having the user device (20) as user information about the user; and
the information output unit (12) acquires, from the user device (20), special information specified based on user information stored in a user device (20) as a communication destination of the facility apparatus (30), and facility information stored in the facility apparatus (30).

37. The information communication system of claim 33 or 36,
the vehicle apparatus (10) including:
a status detection unit (12) for detecting a status of at least one of a user in a vehicle and the vehicle; and
a vehicle transmission unit (12) for transmitting status information indicating a status detected by the status detection unit (12) to the user device (20), wherein
the user information storage unit (22, 24) stores status information received from the vehicle apparatus (10) as the user information.

38. The information communication system of claim 25 or 37, wherein
the status detection unit (12) detects a status of a user driving a vehicle.

39. The information communication system of claim 38, wherein
the status detection unit (12) detects a driving status as a status of a user driving a vehicle.

40. The information communication system of any one of claims 25 and 37 through 39, wherein
the vehicle transmission unit (12) transmits status information detected by the status detection unit (12) to the user device (20) at a specified timing.

41. The information communication system of claim 40, wherein:
the vehicle apparatus (10) includes an unloading detection unit (12) for detecting that a user has left a vehicle based on a vehicle operation status; and
the vehicle transmission unit (12) transmits status information detected by the status detection unit (12) to the user device (20) when the unloading detection unit detects (12) a user has left the vehicle.

42. The information communication system of any one of claims 19, 24, 25, 33, and 36 through 41, wherein
the user information storage unit (22, 24) stores the status information equivalent to biometric information about a user having the user device (20).

43. The information communication system of any one of claims 17 through 19, 24, 25, 31 through 33, and 36 through 42, wherein
the information output unit (22, 32, 12) acquires, as special information specified based on the user information, special information associated with user information belonging to an approximate range of the user information.

44. The information communication system of claim 43, wherein
the information output unit (22, 32, 12) acquires special information from a plurality of pieces of special information stored in the special information storage unit (24, 44) so that user information associated with the special information approximates the user information stored in the user information storage unit (22, 24) at a level of a specified threshold value or larger.

45. The information communication system of any one of claims 9 through 44, wherein
the special information storage unit (24, 44) is structured to be capable of storing special information about a plurality of facilities belonging to different facility types.

46. The information communication system of claim 45, wherein
the facility information storage unit (34) stores the facility information as information about a type of a facility possessing the facility apparatus (30).

47. An information communication system (1, 2) comprising:
a user device (20) possessed by a user;
a facility apparatus (30) provided at a facility a user is able to visit; and
a management apparatus (40) capable of communicating with at least one of the user device (20) and the facility apparatus (30), wherein:
the user device (20) is structured to be capable of communicating with each facility apparatus (30) provided at each of a plurality of facilities and includes a user information storage unit (22, 24) for storing user information about a user;
the facility apparatus (30) includes a facility information storage unit (34) for storing facility information about a facility;
the management apparatus (40) includes a special information storage unit (44) capable of storing special information about a plurality of users associated with a plurality of facilities;
the facility apparatus (30) includes an information output unit (32) for outputting a result specified by the management apparatus (40);
the user information and the facility information are transmitted to the management apparatus (40) under a condition that the user device (20) and any facility apparatus (30) initiate or maintain communication; and
the management apparatus (40) verifies the received user information and facility information and, based on a verification result, specifies information appropriate to both a user having the communicating user device (20) and a facility possessing the communicating facility apparatus (30) as special information for the user from a plurality of pieces of special information stored in the special information storage unit (44).

48. An information communication system (3) comprising:
a user device (20) possessed by a user;
a facility apparatus (30) provided at a facility a user is able to visit; and
a management apparatus (40) capable of communicating with at least one of the user device (20) and the facility apparatus (30), wherein:
the user device (20) is structured to be capable of communicating with each facility apparatus (30) provided at each of a plurality of facilities and includes a user information storage unit (22, 24) for storing user information about a user;
the facility apparatus (30) includes a facility information storage unit (34) for storing facility information about a facility;
the management apparatus (40) includes a special information storage unit (44) capable of storing special information about a plurality of users associated with a plurality of facilities;
the user device (20) includes an information output unit (22) for outputting a result specified by the management apparatus (40);
the user information and the facility information are transmitted to the management apparatus (40) under a condition that the user device (20) and any facility apparatus (30) initiate or maintain communication; and
the management apparatus (40) verifies the received user information and facility information and, based on a verification result, specifies information appropriate to both a user having the communicating user device (20) and a facility possessing the communicating facility apparatus (30) as special information about the user from a plurality of pieces of special information stored in the special information storage unit (44).

49. An information communication system (1, 2) comprising:
a user device (20) possessed by a user;
a facility apparatus (30) provided at a facility a user is able to visit;
a management apparatus (40) capable of communicating with at least one of the user device (20) and the facility apparatus (30); and
a vehicle apparatus (10) mounted on a vehicle communicable with the user device (20), wherein:
the vehicle apparatus (10) includes a status detection unit (12) and a vehicle transmission unit (12), the status detection unit (12) being for detecting a status of at least one of a user in a vehicle and the vehicle, the vehicle transmission unit (12) being for transmitting status information indicating a status detected by the status detection unit (12) to the user device (20);
the user device (20) is structured to be capable of communicating with each facility apparatus (30) provided at each of a plurality of facilities and includes a user information storage unit (22, 24) for storing status information received from the vehicle apparatus (10) as user information indicating a user status;
the facility apparatus (30) includes a facility information storage unit (34) for storing facility information about a facility;
the management apparatus (40) includes a special information storage unit (44) capable of storing special information about a plurality of users associated with a plurality of facilities;
the facility apparatus (30) includes an information output unit (32) for outputting a result specified by the management apparatus (40);
the user information and the facility information are transmitted to the management apparatus (40) under a condition that the user device (20) and any facility apparatus (30) initiate or maintain communication; and
the management apparatus (40) verifies the received user information and facility information and, based on a verification result, specifies information appropriate to both a user having the communicating user device (20) and a facility possessing the communicating facility apparatus (30) as special information about the user from a plurality of pieces of special information stored in the special information storage unit (44).

50. A facility apparatus (30) used for an information communication system (1),
the information communication system (1) including:
the facility apparatus (30) provided at a facility a user is able to visit;
a user device (20) possessed by a user, structured to be capable of communicating with each facility apparatus (30) provided at each of a plurality of facilities, and including a user information storage unit (22, 24) and a user information transmission unit (22), the user information storage unit (22, 24) being for storing user information about a user, the user information transmission unit (22) being for transmitting user information stored in the user information storage unit (22, 24) to the facility apparatus (30) as a communication destination; and
a management apparatus (40) that is capable of communicating with at least one of the user device (20) and the facility apparatus (30) and includes a special information storage unit (44) and a special information reply unit (42), the special information storage unit (44) being capable of storing special information about a plurality of users associated with a plurality of facilities, the special information reply unit (42) being for verifying user information and facility information received from the facility apparatus (30), based on a verification result, acquiring special information as information appropriate to both a user corresponding to the received user information and a facility corresponding to the received facility information from a plurality of pieces of special information stored in the special information storage unit (44), and transmitting the special information to the facility apparatus (30),
the facility apparatus (30) comprising:
a facility information storage unit (34) for storing facility information about a facility; and
an information output unit (32) that transmits user information received from the user device (20) and facility information stored in the facility information storage unit (34) to the management apparatus (40) and allows the management apparatus (40) to acquire and output the special information.

51. A facility apparatus (30) used for an information communication system (2),
the information communication system (2) including:
the facility apparatus (30) provided at a facility a user is able to visit;
a user device (20) possessed by a user, structured to be capable of communicating with each facility apparatus (30) provided at each of a plurality of facilities, and including a user information storage unit (22, 24) and a special information transmission request unit (22), the user information storage unit (22, 24) being for storing user information about a user, the special information transmission request unit (22) being for transmitting facility information received from the facility apparatus (30) and user information stored in the user information storage unit (22, 24) to the management apparatus (40) and allowing the management apparatus (40) to transmit specified special information to the facility apparatus (30) used for the reception; and
a management apparatus (40) that is capable of communicating with at least one of the user device (20) and the facility apparatus (30) and includes a special information storage unit (44) and a special information transmission unit (42), the special information storage unit (44) being capable of storing special information about a plurality of users associated with a plurality of facilities, the special information transmission unit (42) being for verifying the user information and the facility information received from the user device (20), based on a verification result, acquiring, as special information, information appropriate to both a user corresponding to the received user information and a facility corresponding to the received facility information and transmitting the special information to the facility apparatus (30),
the facility apparatus (30) comprising:
a facility information storage unit (34) for storing facility information about a facility; and
a special information output unit (32) for transmitting facility information stored in the facility information storage unit (34) to a user device (20) as a communication destination, acquiring the special information from the management apparatus (40), and outputting the acquired special information.

52. A facility apparatus (30) used for an information communication system (3),
the information communication system (3) including:
the facility apparatus (30) provided at a facility a user is able to visit;
a user device (20) possessed by a user, structured to be capable of communicating with each facility apparatus (30) provided at each of a plurality of facilities, and including a user information storage unit (22, 24) and an information output unit (22), the user information storage unit (22, 24) being for storing user information about a user, the information output unit (22) being for transmitting facility information received from the facility apparatus (30) and user information stored in the user information storage unit (22, 24) to a management apparatus (40), acquiring specified special information from the management apparatus (40), and outputting the special information; and
a management apparatus (40) that is capable of communicating with at least one of the user device (20) and the facility apparatus (30) and includes a special information storage unit (44) and a special information reply unit (42), the special information storage unit (44) being capable of storing special information about a plurality of users associated with a plurality of facilities, the special information transmission unit (42) being for verifying the user information and the facility information when received from the user device (20), based on a verification result, acquiring special information as information appropriate to both a user corresponding to the received user information and a facility corresponding to the received facility information from a plurality of pieces of special information stored in the special information storage unit (44), and transmitting the special information to the user device (20),
the facility apparatus (30) comprising:
a facility information storage unit (34) for storing facility information about a facility; and
a facility information transmission unit (32) for transmitting facility information stored in the facility information storage unit (34) to a user device (20) as a communication destination.

53. A facility apparatus (30) used for an information communication system (3),
the information communication system (3) including:
the facility apparatus (30) provided at a facility a user is able to visit;
a user device (20) possessed by a user, structured to be capable of communicating with each facility apparatus (30) provided at each of a plurality of facilities, and including a user information storage unit (22, 24) and an information output unit (22), the user information storage unit (22, 24) being for storing user information about a user, the information output unit (22) being for transmitting user information stored in the user information storage unit (22, 24) to a facility apparatus (30) as a communication destination, acquiring specified special information from the management apparatus (40), and outputting the special information; and
a management apparatus (40) that is capable of communicating with at least one of the user device (20) and the facility apparatus (30) and includes a special information storage unit (44) and a special information transmission unit (42), the special information storage unit (44) being capable of storing special information about a plurality of users associated with a plurality of facilities, the special information transmission unit (42) being for verifying user information and facility information received from the facility apparatus (30), based on a verification result, acquiring special information as information appropriate to both a user corresponding to the received user information and a facility corresponding to the received facility information from a plurality of pieces of special information stored in the special information storage unit (44), and transmitting the special information to the user device (20),
the facility apparatus (30) comprising:
a facility information storage unit (34) for storing facility information about a facility; and
a special information transmission request unit (32) for transmitting the user information received from the user device (20) and facility information stored in the facility information storage unit (34) to the management apparatus (40), and allowing the management apparatus (40) to transmit the special information to the user device (20).

54. A facility apparatus (30) used for an information communication system (7),
the information communication system (7) including:
the facility apparatus (30) provided at a facility a user is able to visit; and
a user device (20) possessed by a user, structured to be capable of communicating with each facility apparatus (30) provided at each of a plurality of facilities, and including a special information storage unit (24) and a special information reply unit (22), the special information storage unit (24) being capable of storing special information about a user having the user device (20) associated with a plurality of facilities, the special information reply unit (22), based on facility information received from the facility apparatus (30), being for acquiring special information as information appropriate to both a user having the user device (20) and a facility corresponding to the received facility information from a plurality of pieces of special information stored in the special information storage unit (24) and transmitting the special information to the facility apparatus (30),
the facility apparatus (30) comprising:
a facility information storage unit (34) for storing facility information about a facility; and
an information output unit (32) for transmitting facility information stored in the facility information storage unit (34) to a user device (20) as a communication destination, acquiring the special information from the user device (20), and outputting the special information.

55. The facility apparatus (30) of claim 54, wherein:
the user device (20) includes a user information storage unit (22, 24) that stores status information indicating a status of a user having the user device (20) as user information about the user; and
the information output unit (32) acquires, from a user device (20) as a communication destination, special information specified based on user information stored in the user device (20) and facility information stored in the facility information storage unit (34).

56. A facility apparatus (30) used for an information communication system (8),
the information communication system (8) including:
the facility apparatus (30) provided at a facility a user is able to visit; and
a user device (20) possessed by a user, structured to be capable of communicating with each facility apparatus (30) provided at each of a plurality of facilities, and including a special information storage unit (24) and an information output unit (22), the special information storage unit (24) being capable of storing special information about a user having the user device (20) associated with a plurality of facilities, the information output unit (22), based on facility information received from the facility apparatus (30), being for acquiring special information as information appropriate to both a user having the user device (20) and a facility corresponding to the received facility information from a plurality of pieces of special information stored in the special information storage unit (24) and outputting the special information,
the facility apparatus (30) comprising:
a facility information storage unit (34) for storing facility information about a facility; and
a facility information transmission unit (32) for transmitting facility information stored in the facility information storage unit (34) to a user device (20) as a communication destination.

57. A facility apparatus (30) used for an information communication system (5),
the information communication system (5) including:
the facility apparatus (30) provided at a facility a user is able to visit;
a user device (20) possessed by a user, structured to be capable of communicating with each facility apparatus (30) provided at each of a plurality of facilities, and including a user information storage unit (22, 24) and a user information transmission unit (22), the user information storage unit (22, 24) being for storing user information about a user, the user information transmission unit (22) being for transmitting user information stored in the user information storage unit (22, 24) to a facility apparatus (30) for a communication destination;
a vehicle apparatus (10) mounted on a vehicle communicable with the user device (20) and including an information output unit (12) for acquiring specified special information from a management apparatus (40) and outputting the acquired specified special information; and
the management apparatus (40) that is capable of communicating with at least one of the user device (20), the facility apparatus (30), and the vehicle apparatus (10) and includes a special information storage unit (44) and a special information transmission unit (42), the special information storage unit (44) being capable of storing special information about a plurality of users associated with a plurality of facilities, the special information transmission unit (42) being for verifying user information and facility information received from the facility apparatus (30), based on a verification result, acquiring special information as information appropriate to both a user corresponding to the received user information and a facility corresponding to the received facility information from a plurality of pieces of special information stored in the special information storage unit (44), and transmitting the special information to the vehicle apparatus (10),
the facility apparatus (30) comprising:
a facility information storage unit (34) for storing facility information about a facility; and
a special information transmission request unit (32) that transmits the user information received from the user device (20) and facility information stored in the facility information storage unit (34) to the management apparatus (40) and allows the management apparatus (40) to transmit the special information to the vehicle apparatus (10).

58. A facility apparatus (30) used for an information communication system (5),
the information communication system (5) including:
the facility apparatus (30) provided at a facility a user is able to visit;
a user device (20) possessed by a user, structured to be capable of communicating with each facility apparatus (30) provided at each of a plurality of facilities, and including a user information storage unit (22, 24) and a special information transmission request unit (22), the user information storage unit (22, 24) being for storing user information about a user, the special information transmission request unit (22) being for transmitting facility information received from the facility apparatus (30) and user information stored in the user information storage unit (22, 24) to a management apparatus (40) and allowing the management apparatus (40) to transmit specified special information to a vehicle apparatus (10);
the vehicle apparatus (10) mounted on a vehicle communicable with the user device (20), including an information output unit (12) for acquiring the special information from the management apparatus (40) and outputting the special information; and
the management apparatus (40) communicable with at least one of the user device (20), the facility apparatus (30), and the vehicle apparatus (10), including a special information storage unit (44) and a special information transmission unit (42), the special information storage unit (44) being capable of storing special information about a plurality of users in association with a plurality of facilities, the special information transmission unit (42) being for verifying user information and facility information received from the user device (20), based on a verification result, acquiring special information as information appropriate to both a user corresponding to the received user information and a facility corresponding to the received facility information from a plurality of pieces of special information stored in the special information storage unit (44), and transmitting the special information to the vehicle apparatus (10),
the facility apparatus (30) comprising:
a facility information storage unit (34) for storing facility information about a facility; and
a facility information transmission unit (32) for transmitting facility information stored in the facility information storage unit (34) to a user device (20) as a communication destination.

59. A facility apparatus (30) used for an information communication system (9),
the information communication system (9) including:
the facility apparatus (30) provided at a facility a user is able to visit;
a user device (20) possessed by a user, structured to be capable of communicating with each facility apparatus (30) provided at each of a plurality of facilities, and including a special information storage unit (24) and a special information transmission unit (22), the special information storage unit (24) being capable of storing special information about a user having the user device (20) associated with a plurality of facilities, the special information transmission unit (22), based on facility information received from the facility apparatus (30), being for acquiring special information as information appropriate to both a user having the user device (20) and a facility corresponding to the received facility information from a plurality of pieces of special information stored in the special information storage unit (24) and transmitting the special information to the vehicle apparatus (10); and
a vehicle apparatus (10) mounted on a vehicle communicable with the user device (20), including an information output unit (12) for acquiring the special information from the user device (20) and outputting the special information,
the facility apparatus (30) comprising:
a facility information storage unit (34) for storing facility information about a facility; and
a special information transmission request unit (32) for transmitting facility information stored in the facility information storage unit (34) to a user device (20) as a communication destination and allowing the user device (20) to transmit specified special information to the vehicle apparatus (10).

60. The facility apparatus (30) of any one of claims 50 through 59, wherein
the special information storage unit (24, 44) stores special information as information based on a user's history of using a facility in the past.

61. The facility apparatus (30) of claim 60, comprising:
a history information registration unit (32) that allows the special information storage unit (24, 44) to store the special information as information based on a user's history of using a facility possessing the facility apparatus (30).

62. The facility apparatus (30) of any one of claims 50 through 61, wherein
the special information storage unit (24, 44) is capable of storing special information about a plurality of facilities belonging to different facility types.

63. The facility apparatus (30) of claim 62, wherein
the facility information storage unit (34) stores the facility information as information about a type of a facility possessing the facility apparatus (30).

64. A user device (20) used for an information communication system (1) and structured to be capable of communicating with each facility apparatus (30) provided at each of a plurality of facilities,
the information communication system (1) including:
the user device (20) possessed by a user;
the facility apparatus (30) provided at a facility a user is able to visit, and including a facility information storage unit (34) and an information output unit (32), the facility information storage unit (34) being for storing facility information about a facility, the information output unit (32) being for transmitting user information received from the user device (20) and facility information stored in the facility information storage unit (34) to a management apparatus (40), acquiring specified special information from the management apparatus (40), and outputting the special information; and
the management apparatus (40) capable of communicating with at least one of the user device (20) and the facility apparatus (30), and including a special information storage unit (44) and a special information reply unit (42), the special information storage unit (44) being capable of storing special information about a plurality of users associated with a plurality of facilities, the special information reply unit (42) being for verifying the user information and the facility information received from the facility apparatus (30), based on a verification result, acquiring special information as information appropriate to both a user corresponding to the received user information and a facility corresponding to the received facility information from a plurality of pieces of special information stored in the special information storage unit (44), and transmitting the special information to the facility apparatus (30),
the user device (20) comprising:
a user information storage unit (22, 24) for storing user information about a user; and
a user information transmission unit (22) for transmitting user information stored in the user information storage unit (22, 24) to a facility apparatus (30) as a communication destination.

65. A user device (20) used for an information communication system (2) and structured to be capable of communicating with each facility apparatus (30) provided at each of a plurality of facilities,
the information communication system (2) including:
the user device (20) possessed by a user;
the facility apparatus (30) provided at a facility a user is able to visit, including a facility information storage unit (34) and a information output unit (32), the facility information storage unit (34) being for storing facility information about a facility, the information output unit (32) being for transmitting facility information stored in the facility information storage unit (34) to a user device (20) as a communication destination, acquiring specified special information from a management apparatus (40), and outputting the special information; and
the management apparatus (40) capable of communicating with at least one of the user device (20) and the facility apparatus (30), and including a special information storage unit (44) and a special information transmission unit (42), the special information storage unit (44) being capable of storing special information about a plurality of users in association with a plurality of facilities, the special information transmission unit (42) being for verifying user information and facility information received from the user device (20), based on a verification result, acquiring special information as information appropriate to both a user corresponding to the received user information and a facility corresponding to the received facility information from a plurality of pieces of special information stored in the special information storage unit (44), and transmitting the special information to the facility apparatus (30),
the user device (20) comprising:
a user information storage unit (22, 24) for storing user information about a user; and
a special information transmission request unit (22) for transmitting the facility information received from the facility apparatus (30) and user information stored in the user information storage unit (22, 24) to the management apparatus (40) and allowing the management apparatus (40) to transmit the special information to the facility apparatus (30) used for the reception.

66. A user device (20) used for an information communication system (3) and structured to be capable of communicating with each facility apparatus (30) provided at each of a plurality of facilities,
the information communication system (3) including:
the user device (20) possessed by a user;
the facility apparatus (30) provided at a facility a user is able to visit, and including a facility information storage unit (34) and an information output unit (32), the facility information storage unit (34) being for storing facility information about a facility, the information output unit (32) being for transmitting facility information stored in the facility information storage unit (34) to a user device (20) as a communication destination; and
the management apparatus (40) capable of communicating with at least one of the user device (20) and the facility apparatus (30), and including a special information storage unit (44) and a special information reply unit (42), the special information storage unit (44) being capable of storing special information about a plurality of users in association with a plurality of facilities, the special information reply unit (42) being for verifying user information and the facility information received from the user device (20), based on a verification result, acquiring special information as information appropriate to both a user corresponding to the received user information and a facility corresponding to the received facility information from a plurality of pieces of special information stored in the special information storage unit (44), and transmitting the special information to the user device (20),
the user device (20) comprising:
a user information storage unit (22, 24) for storing user information about a user; and
an information output unit (22) for transmitting facility information received from the facility apparatus (30) and user information stored in the user information storage unit (22, 24) to the management apparatus (40), acquiring the specified special information from the management apparatus (40), and outputting the special information.

67. A user device (20) used for an information communication system (3) and structured to be capable of communicating with each facility apparatus (30) provided at each of a plurality of facilities,
the information communication system (3) including:
the user device (20) possessed by a user;
the facility apparatus (30) provided at a facility a user is able to visit, and including a facility information storage unit (34) and a special information transmission request unit (32), the facility information storage unit (34) being for storing facility information about a facility, the special information transmission request unit (32) being for transmitting user information received from the user device (20) and facility information stored in the facility information storage unit (34) to a management apparatus (40) and allowing the management apparatus (40) to transmit specified special information to the user device (20); and
the management apparatus (40) capable of communicating with at least one of the user device (20) and the facility apparatus (30), and including a special information storage unit (44) and a special information transmission unit (42), the special information storage unit (44) being capable of storing special information about a plurality of users associated with a plurality of facilities, the special information transmission unit (42) being for verifying the user information and the facility information received from the facility apparatus (30), based on a verification result, acquiring special information as information appropriate to both a user corresponding to the received user information and a facility corresponding to the received facility information from a plurality of pieces of special information stored in the special information storage unit (44), and transmitting the special information to the user device (20),
the user device (20) comprising:
a user information storage unit (22, 24) for storing user information about a user; and
an information output unit (22) for transmitting user information stored in the user information storage unit (22, 24) to the facility apparatus (30) as a communication destination, acquiring the special information from the management apparatus (40), and outputting the special information.

68. A user device (20) used for an information communication system (5) and structured to be capable of communicating with each facility apparatus (30) provided at each of a plurality of facilities,
the information communication system (5) including:
the user device (20) possessed by a user;
a vehicle apparatus (10) mounted on a vehicle communicable with the user device (20), including an information output unit (12) for acquiring specified special information from a management apparatus (40) and outputting the special information;
the facility apparatus (30) provided at a facility a user is able to visit, and including a facility information storage unit (34) and a special information transmission request unit (32), the facility information storage unit (34) being for storing facility information about a facility, the special information transmission request unit (32) being for transmitting user information received from the user device (20) and facility information stored in the facility information storage unit (34) to the management apparatus (40) and allowing the management apparatus (40) to transmit specified special information to the vehicle apparatus (10); and
the management apparatus (40) communicable with at least one of the user device (20), the facility apparatus (30), and the vehicle apparatus (10), including a special information storage unit (44) and a special information transmission unit (42), the special information storage unit (44) being capable of storing special information about a plurality of users in association with a plurality of facilities, the special information transmission unit (42) being for verifying the user information and the facility information received from the facility apparatus (30), based on a verification result, acquiring special information as information appropriate to both a user corresponding to the received user information and a facility corresponding to the received facility information from a plurality of pieces of special information stored in the special information storage unit (44), and transmitting the special information to the vehicle apparatus (10),
the user device (20) comprising:
a user information storage unit (22, 24) for storing user information about a user; and
a user information transmission unit (22) for transmitting user information stored in the user information storage unit (22, 24) to a facility apparatus (30) as a communication destination.

69. A user device (20) used for an information communication system (5) and structured to be capable of communicating with each facility apparatus (30) provided at each of a plurality of facilities,
the information communication system (5) including:
the user device (20) possessed by a user;
a vehicle apparatus (10) that includes an information output unit (12) for acquiring specified special information from a management apparatus (40) and outputting the acquired specified special information and is mounted on a vehicle communicable with the user device (20);
the facility apparatus (30) provided at a facility a user is able to visit and including a facility information storage unit (34) and a facility information transmission unit (32), the facility information storage unit (34) being for storing facility information about a facility, the facility information transmission unit (32) being for transmitting facility information stored in the facility information storage unit (34) to a user device (20) as a communication destination; and
the management apparatus (40) that is capable of communicating with at least one of the user device (20), the facility apparatus (30), and the vehicle apparatus (10) and includes a special information storage unit (44) and a special information transmission unit (42), the special information storage unit (44) being capable of storing special information about a plurality of users associated with a plurality of facilities, the special information transmission unit (42) being for verifying the user information and the facility information received from the user device (20), based on a verification result, acquiring special information as information appropriate to both a user corresponding to the received user information and a facility corresponding to the received facility information from a plurality of pieces of special information stored in the special information storage unit (44), and transmitting the special information to the vehicle apparatus (10),
the user device (20) comprising:
a user information storage unit (22, 24) for storing user information about a user; and
a special information transmission request unit (22) that transmits facility information received from the facility apparatus (30) and user information stored in the user information storage unit (22, 24) to the management apparatus (40) and allows the management apparatus (40) to transmit the special information to the vehicle apparatus (10).

70. The user device (20) of any one of claims 64 through 69, wherein
the user information storage unit (22, 24) stores the user information equivalent to information capable of identifying a user who owns the user device (20).

71. The user device (20) of any one of claims 64 through 70, wherein
the user information storage unit (22, 24) stores the user information equivalent to registration information registered for a user who owns the user device (20).

72. The user device (20) of claim 71, wherein
the information communication system includes:
a registration information input unit (52) for supplying information about a user; and
a user information registration unit (56) that allows the user information storage unit (22, 24) to store information supplied by the registration information input unit (52) as registration information.

73. The user device (20) of any one of claims 64 through 72, wherein
the user information storage unit (22, 24) stores the user information equivalent to status information indicating a status of a user who owns the user device (20).

74. A user device (20) used for an information communication system (7) and structured to be capable of communicating with each facility apparatus (30) provided at each of a plurality of facilities,
the information communication system (7) including:
the user device (20) possessed by a user; and
the facility apparatus (30) provided at a facility a user is able to visit, and including a facility information storage unit (34) and an information output unit (32), the facility information storage unit (34) being for storing facility information about a facility, the information output unit (32) being for transmitting facility information stored in the facility information storage unit (34) to a user device (20) as a communication destination, acquiring specified special information from the user device (20), and outputting the special information,
the user device (20) comprising:
a special information storage unit (24) capable of storing special information about a user having the user device (20) associated with a plurality of facilities; and
a special information reply unit (22), based on the facility information received from the facility apparatus (30), for acquiring special information as information appropriate to both a user having the user device (20) and a facility corresponding to the received facility information from a plurality of pieces of special information stored in the special information storage unit (24) and outputting the special information to the facility apparatus (30).

75. A user device (20) used for an information communication system (8) and structured to be capable of communicating with each facility apparatus (30) provided at each of a plurality of facilities,
the information communication system (8) including:
the user device (20) possessed by a user; and
the facility apparatus (30) provided at a facility a user is able to visit, and including a facility information storage unit (34) and a facility information transmission unit (32), the facility information storage unit (34) being for storing facility information about a facility, the facility information transmission unit (32) being for transmitting facility information stored in the facility information storage unit (34) to a user device (20) as a communication destination,
the user device (20) comprising:
a special information storage unit (24) capable of storing special information about a user having the user device (20) associated with a plurality of facilities; and
an information output unit (22), based on facility information received from the facility apparatus (30), being for acquiring special information as information appropriate to both a user having the user device (20) and a facility corresponding to the received facility information from a plurality of pieces of special information stored in the special information storage unit (24) and outputting the special information.

76. A user device (20) used for an information communication system (9) and structured to be capable of communicating with each facility apparatus (30) provided at each of a plurality of facilities,
the information communication system (9) including:
the user device (20) possessed by a user;
the facility apparatus (30) provided at a facility a user is able to visit, and including a facility information storage unit (34) and a special information transmission request unit (32), the facility information storage unit (34) being for storing facility information about a facility, the special information transmission request unit (32) being for transmitting facility information stored in the facility information storage unit (34) to a user device (20) as a communication destination and allowing the user device (20) to transmit specified special information to a vehicle apparatus (10); and
the vehicle apparatus (10) mounted on a vehicle communicable with the user device (20), including an information output unit (12) for acquiring the special information from the user device (20) and outputting the special information,
the user device (20) comprising:
a special information storage unit (24) capable storing special information about a user having the user device (20) associated with a plurality of facilities; and
a special information transmission unit (22), based on the facility information received from the facility apparatus (30), for acquiring special information as information appropriate to both a user having the user device (20) and a facility corresponding to the received facility information from a plurality of pieces of special information stored in the special information storage unit (24) and transmitting the special information to the vehicle apparatus (10).

77. The user device (20) of any one of claims 74 through 76, comprising:
a user information storage unit (22, 24) that stores status information indicating a status of a user having the user device (20) as user information about the user, wherein
the information output unit (22, 32, 12) acquires special information specified based on user information stored in the user information storage unit (22, 24) from a plurality of pieces of special information stored in the special information storage unit (24).

78. The user device (20) of claim 73 or 77, wherein
the user information storage unit (22, 24) stores biometric information about a user having the user device (20) as the status information.

79. The user device (20) of any one of claims 64 through 78, wherein
the special information storage unit (22, 24) stores the special information as information based on a user's history of using a facility in the past.

80. The user device (20) of claim 79, wherein
the facility apparatus (30) includes a history information registration unit (32) that allows the special information storage unit (24, 44) to store the special information as information based on a user's history of using a facility possessing the facility apparatus (30).

81. The user device (20) of any one of claims 64 through 80, wherein
the special information storage unit (24, 44) is structured to be capable of storing special information about a plurality of facilities belonging to different facility types.

82. The user device (20) of claim 81, wherein
the facility information storage unit (34) stores the facility information as information about a type of a facility possessing the facility apparatus (30).

83. A management apparatus (40) used for an information communication system (1),
the information communication system (1) including:
a facility apparatus (30) provided at a facility a user is able to visit, including a facility information storage unit (34) and an information output unit (32), the facility information storage unit (34) being for storing facility information about a facility, the information output unit (32) being for transmitting user information received from a user device (20) and facility information stored in the facility information storage unit (34) to the management apparatus (40), acquiring specified special information from the management apparatus (40), and outputting the special information;
the user device (20) possessed by a user, structured to be capable of communicating with each facility apparatus (30) provided at each of a plurality of facilities, and including a user information storage unit (22, 24) and a user information transmission unit (22), the user information storage unit (22, 24) being for storing user information about a user, the user information transmission unit (22) being for transmitting user information stored in the user information storage unit (22, 24) to a facility apparatus (30) as a communication destination; and
the management apparatus (40) communicable with at least one of the user device (20) and the facility apparatus (30),
the management apparatus (40) comprising:
a special information storage unit (44) capable of storing special information about a plurality of users in association with a plurality of facilities; and
a special information reply unit (42) for verifying the user information and the facility information received from the facility apparatus (30), based on a verification result, acquiring special information as information appropriate to both a user corresponding to the received user information and a facility corresponding to the received facility information from a plurality of pieces of special information stored in the special information storage unit (44), and transmitting the special information to the facility apparatus (30).

84. A management apparatus (40) used for an information communication system (2),
the information communication system (2) including:
a facility apparatus (30) provided at a facility a user is able to visit, including a facility information storage unit (34) and an information output unit (32), the facility information storage unit (34) being for storing facility information about a facility, the information output unit (32) being for transmitting facility information stored in the facility information storage unit (34) to a user device (20) as a communication destination, acquiring specified special information from the management apparatus (40), and outputting the special information;
the user device (20) possessed by a user, structured to be capable of communicating with each facility apparatus (30) provided at each of a plurality of facilities, and including a user information storage unit (22, 24) and a special information transmission request unit (22), the user information storage unit (22, 24) being for storing user information about a user, the special information transmission request unit (22) being for transmitting facility information received from the facility apparatus (30) and user information stored in the user information storage unit (22, 24) to the management apparatus (40) and allowing the management apparatus (40) to transmit the special information to the facility apparatus (30) used for the reception; and
the management apparatus (40) communicable with at least one of the user device (20) and the facility apparatus (30),
the management apparatus (40) comprising:
a special information storage unit (44) capable of storing special information about a plurality of users in association with a plurality of facilities; and
a special information transmission unit (42) for verifying the user information and the facility information when from the user device (20), based on a verification result, acquiring special information as information appropriate to both a user corresponding to the received user information and a facility corresponding to the received facility information from a plurality of pieces of special information stored in the special information storage unit (44), and transmitting the special information to the facility apparatus (30).

85. A management apparatus (40) used for an information communication system (3),
the information communication system (3) including:
a facility apparatus (30) provided at a facility a user is able to visit, including a facility information storage unit (34) and a facility information transmission unit (32), the facility information storage unit (34) being for storing facility information about a facility, the facility information transmission unit (32) being for transmitting facility information stored in the facility information storage unit (34) to a user device (20) as a communication destination;
the user device (20) possessed by a user, structured to be capable of communicating with each facility apparatus (30) provided at each of a plurality of facilities, and including a user information storage unit (22, 24) and an information output unit (22), the user information storage unit (22, 24) being for storing user information about a user, the information output unit (22) being for transmitting facility information received from the facility apparatus (30) and user information stored in the user information storage unit (22, 24) to the management apparatus (40), acquiring specified special information from the management apparatus (40), and outputting the special information; and
the management apparatus (40) capable of communicating with at least one of the user device (20) and the facility apparatus (30),
the management apparatus (40) comprising:
a special information storage unit (44) capable of storing special information about a plurality of users associated with a plurality of facilities; and
a special information reply unit (42) for verifying the user information and the facility information received from the user device (20), based on a verification result, acquiring special information as information appropriate to both a user corresponding to the received user information and a facility corresponding to the received facility information from a plurality of pieces of special information stored in the special information storage unit (44), and transmitting the special information to the user device (20).

86. A management apparatus (40) used for an information communication system (3),
the information communication system (3) including:
a facility apparatus (30) provided at a facility a user is able to visit, including a facility information storage unit (34) and a special information transmission request unit (32), the facility information storage unit (34) being for storing facility information about a facility, the special information transmission request unit (32) being for transmitting user information received from the user device (20) and facility information stored in the facility information storage unit (34) to the management apparatus (40) and allowing the management apparatus (40) to transmit specified special information to the user device (20);
the user device (20) possessed by a user, structured to be capable of communicating with each facility apparatus (30) provided at each of a plurality of facilities, and including a user information storage unit (22, 24) and an information output unit (22), the user information storage unit (22, 24) being for storing user information about a user, the information output unit (22) being for transmitting user information stored in the user information storage unit (22, 24) to a facility apparatus (30) as a communication destination, acquiring specified special information from the management apparatus (40), and outputting the special information; and
the management apparatus (40) capable of communicating with at least one of the user device (20) and the facility apparatus (30),
the management apparatus (40) comprising:
a special information storage unit (44) capable of storing special information about a plurality of users associated with a plurality of facilities; and
a special information transmission unit (42) for verifying the user information and the facility information received from the facility apparatus (30), based on a verification result, acquiring special information as information appropriate to both a user corresponding to the received user information and a facility corresponding to the received facility information from a plurality of pieces of special information stored in the special information storage unit (44), and transmitting the special information to the user device (20).

87. A management apparatus (40) used for an information communication system (5),
the information communication system (5) including:
a facility apparatus (30) provided at a facility a user is able to visit and including a facility information storage unit (34) and a special information transmission request unit (32), the facility information storage unit (34) being for storing facility information about a facility, the special information transmission request unit (32) being for transmitting user information received from a user device (20) and facility information stored in the facility information storage unit (34) to the management apparatus (40) and allowing the management apparatus (40) to transmit specified special information to a vehicle apparatus (10);
the user device (20) possessed by a user, structured to be capable of communication with each facility apparatus (30) provided at each of a plurality of facilities, and including a user information storage unit (22, 24) and a user information transmission unit (22), the user information storage unit (22, 24) being for storing user information about a user, the user information transmission unit (22) being for transmitting user information stored in the user information storage unit (22, 24) to a facility apparatus (30) as a communication destination;
the vehicle apparatus (10) mounted on a vehicle communicable with the user device (20) and including an information output unit (12) for acquiring the special information from the management apparatus (40) and outputting the acquired special information; and
the management apparatus (40) capable of communicating with at least one of the user device (20), the facility apparatus (30), and the vehicle apparatus (10),
the management apparatus (40) comprising:
a special information storage unit (44) capable of storing special information about a plurality of users associated with a plurality of facilities; and
a special information transmission unit (42) that verifies the user information and the facility information received from the facility apparatus (30), based on a verification result, acquires special information as information appropriate to both a user corresponding to the received user information and a facility corresponding to the received facility information from a plurality of pieces of special information stored in the special information storage unit (44) , and transmits the special information to the vehicle apparatus (10).

88. A management apparatus (40) used for an information communication system (5),
the information communication system (5) including:
a facility apparatus (30) provided at a facility a user is able to visit, including a facility information storage unit (34) and a facility information transmission unit (32), the facility information storage unit (34) being for storing facility information about a facility, the facility information transmission unit (32) being for transmitting facility information stored in the facility information storage unit (34) to a user device (20) as a communication destination;
the user device (20) possessed by a user, structured to be capable of communicating with each facility apparatus (30) provided at each of a plurality of facilities, and including a user information storage unit (22, 24) and a special information transmission request unit (22), the user information storage unit (22, 24) being for storing user information about a user, the special information transmission request unit (22) being for transmitting facility information received from the facility apparatus (30) and user information stored in the user information storage unit (22, 24) to the management apparatus (40) and allowing the management apparatus (40) to transmit specified special information to a vehicle apparatus (10);
the vehicle apparatus (10) mounted on a vehicle communicable with the user device (20), including an information output unit (12) for acquiring the special information from the management apparatus (40) and outputting the special information; and
the management apparatus (40) communicable with at least one of the user device (20), the facility apparatus (30), and the vehicle apparatus (10),
the management apparatus (40) comprising:
a special information storage unit (44) capable of storing special information about a plurality of users associated with a plurality of facilities; and
a special information transmission unit (42) for verifying the user information and the facility information received from the user device (20), based on a verification result, acquiring special information as information appropriate to both a user corresponding to the received user information and a facility corresponding to the received facility information from a plurality of pieces of special information stored in the special information storage unit (44), and transmitting the special information to the vehicle apparatus (10).

89. The management apparatus (40) of any one of claims 83 through 88,
wherein
the special information storage unit (44) stores the special information as information based on a user's history of using a facility in the past.

90. The management apparatus (40) of claim 89, wherein
the facility apparatus (30) includes a history information registration unit (32) that allows the special information storage unit (44) to store the special information as information based on a user's history of using a facility possessing the facility apparatus (30).

91. The management apparatus (40) of any one of claims 83 through 90, wherein
the special information storage unit (44) is structured to be capable of storing special information about a plurality of facilities belonging to different facility types.

92. The management apparatus (40) of claim 91, wherein
the facility information storage unit (34) stores the facility information as information about a type of a facility possessing the facility apparatus (30).

93. A vehicle apparatus (10) used for a information communication system (8),
the information communication system (8) including:
a user device (20) possessed by a user;
a facility apparatus (30) provided at a facility a user is able to visit; and
the vehicle apparatus (10) mounted on a vehicle communicable with the user device (20), wherein:
the user device (20) is structured to be capable of communicating with each facility apparatus (30) provided at each of a plurality of facilities and includes a user information storage unit (22, 24) and an information output unit (22), the user information storage unit (22, 24) being for storing status information received from the vehicle apparatus (10) as user information about a user, the information output unit (22) being for outputting special information, namely information specified based on user information stored in the user device (20) and appropriate to a facility possessing the facility apparatus (30) under a condition that the user device (20) and any facility apparatus (30) initiate or maintain communication; and
the vehicle apparatus (10) comprises a status detection unit (12) and a vehicle transmission unit (12), the status detection unit (12) being for detecting a status of at least one of a user in a vehicle and the vehicle, the vehicle transmission unit (12) being for transmitting status information indicating a status detected by the status detection unit (12) to the user device (20).

94. The vehicle apparatus (10) of claim 93, wherein
the status detection unit (12) detects a status of a user driving a vehicle.

95. The vehicle apparatus (10) of claim 94, wherein
the status detection unit (12) detects a driving status as a status of a user driving a vehicle.

96. The vehicle apparatus (10) of any one of claims 93 through 95, wherein
the status detection unit (12) detects an onboard device status as a vehicle status.

97. The vehicle apparatus (10) of any one of claims 93 through 96, comprising:
an unloading detection unit (12) for detecting that a user has left a vehicle based on a vehicle operation status, wherein
the vehicle transmission unit (12) transmits status information detected by the status detection unit (12) to the user device (20) when the unloading detection unit detects (12) a user has left the vehicle.

98. The vehicle apparatus (10) of any one of claims 93 through 97, wherein
the status detection unit (12) detects user's biometric information as a user status.

99. A vehicle apparatus (10) used for an information communication system (5),
the information communication system (5) including:
a facility apparatus (30) provided at a facility a user is able to visit and including a facility information storage unit (34) and a special information transmission request unit (32), the facility information storage unit (34) being for storing facility information about a facility, the special information transmission request unit (32) being for transmitting user information received from a user device (20) and facility information stored in the facility information storage unit (34) to a management apparatus (40) and allowing the management apparatus (40) to transmit specified special information to a vehicle apparatus (10);
the user device (20) possessed by a user, structured to be capable of communicating with each facility apparatus (30) provided at each of a plurality of facilities, and including a user information storage unit (22, 24) and a user information transmission unit (22), the user information storage unit (22, 24) being for storing user information about a user, the user information transmission unit (22) being for transmitting user information stored in the user information storage unit (22, 24) to the facility apparatus (30) as a communication destination;
the vehicle apparatus (10) mounted on a vehicle communicable with the user device (20); and
the management apparatus (40) capable of communicating with at least one of the user device (20), the facility apparatus (30), and the vehicle apparatus (10) and including a special information storage unit (44) and a special information transmission unit (42), the special information storage unit (44) being capable of storing special information about a plurality of users associated with a plurality of facilities, the special information transmission unit (42) being for verifying user information and facility information received from the facility apparatus (30), based on a verification result, acquiring special information as information appropriate to both a user corresponding to the received user information and a facility corresponding to the received facility information from a plurality of pieces of special information stored in the special information storage unit (44), and transmitting the special information to the vehicle apparatus (10),
the vehicle apparatus (10) comprising:
an information output unit (12) for acquiring the special information from the management apparatus (40) and outputting the acquired special information.

100. A vehicle apparatus (10) used for an information communication system (5),
the information communication system (5) including:
a facility apparatus (30) provided at a facility a user is able to visit, and including a facility information storage unit (34) and an facility information transmission unit (32), the facility information storage unit (34) being for storing facility information about a facility, the facility information transmission unit (32) being for transmitting facility information stored in the facility information storage unit (34) to a user device (20) as a communication destination;
the user device (20) possessed by a user that is structured to be capable of communicating with each facility apparatus (30) provided at each of a plurality of facilities and includes a user information storage unit (22, 24) and a special information transmission request unit (22), the user information storage unit (22, 24) being for storing user information about a user, the special information transmission request unit (22) being for transmitting facility information received from the facility apparatus (30) and user information stored in the user information storage unit (22, 24) to a management apparatus (40) and allowing the management apparatus (40) to transmit specified special information to the vehicle apparatus (10);
the vehicle apparatus (10) mounted on a vehicle communicable with the user device (20); and
the management apparatus (40) capable of communicating with at least one of the user device (20), the facility apparatus (30), and the vehicle apparatus (10), and including a special information storage unit (44) and a special information transmission unit (42), the special information storage unit (44) being capable of storing special information about a plurality of users associated with a plurality of facilities, the special information transmission unit (42) being for verifying the user information and the facility information received from the user device (20), based on a verification result, acquiring special information as information appropriate to both a user corresponding to the received user information and a facility corresponding to the received facility information from a plurality of pieces of special information stored in the special information storage unit (44), and transmitting the special information to the vehicle apparatus (10),
the vehicle apparatus (10) comprising:
an information output unit (12) for acquiring the special information from the management apparatus (40) and outputting the special information.

101. A vehicle apparatus (10) used for an information communication system (9),
the information communication system (9) including:
a facility apparatus (30) provided at a facility a user is able to visit, and including a facility information storage unit (34) and a special information transmission request unit (32), the facility information storage unit (34) being for storing facility information about a facility, the special information transmission request unit (32) being for transmitting facility information stored in the facility information storage unit (34) to a user device (20) as a communication destination and allowing the user device (20) to transmit specified special information to the vehicle apparatus (10);
the user device (20) possessed by a user, structured to be capable of communicating with each facility apparatus (30) provided at each of a plurality of facilities, and including a user information storage unit (24) and a special information transmission unit (22), the special information storage unit (24) being capable of storing special information about a user having the user device (20) associated with a plurality of facilities, the special information transmission unit (22), based on facility information received from the facility apparatus (30), being for acquiring special information as information appropriate to both a user having the user device (20) and a facility corresponding to the received facility information from a plurality of pieces of special information stored in the special information storage unit (24), and transmitting the special information to the vehicle apparatus (10); and
the vehicle apparatus (10) mounted on a vehicle communicable with the user device (20),
the vehicle apparatus (10) comprising:
an information output unit (12) for acquiring the special information from the user device (20) and outputting the special information.

102. The vehicle apparatus (10) of any one of claims 99 through 101, wherein
the special information storage unit (22, 24) stores the special information as information based on a user's history of using a facility in the past.

103. The vehicle apparatus (10) of claim 102, wherein
the facility apparatus (30) includes a history information registration unit (32) that allows the special information storage unit (22, 24) to store the special information as information based on a user's history of using a facility possessing the facility apparatus (30).

104. The vehicle apparatus (10) of any one of claims 99 through 103, wherein
the special information storage unit (24, 44) is structured to be capable of storing special information about a plurality of facilities belonging to different facility types.

105. The vehicle apparatus (10) of claim 104, wherein
the facility information storage unit (34) stores the facility information as information about a type of a facility possessing the facility apparatus (30).

106. A facility program for allowing a computer to function as a facility apparatus (30) used for an information communication system (1),
the information communication system (1) including:
the facility apparatus (30) provided at a facility a user is able to visit;
a user device (20) possessed by a user, structured to be capable of communicating with each facility apparatus (30) provided at each of a plurality of facilities, and including a user information storage unit (22, 24) and a user information transmission unit (22), the user information storage unit (22, 24) being for storing user information about a user, the user information transmission unit (22) being for transmitting user information stored in the user information storage unit (22, 24) to the facility apparatus (30) as a communication destination; and
a management apparatus (40) capable of communicating with at least one of the user device (20) and the facility apparatus (30), and including a special information storage unit (44) and a special information transmission unit (42), the special information storage unit (44) capable of storing special information about a plurality of users associated with a plurality of facilities, the special information transmission unit (42) being for verifying user information and facility information received from the facility apparatus (30), based on a verification result, acquiring special information as information appropriate to both a user corresponding to the received user information and a facility corresponding to the received facility information from a plurality of pieces of special information stored in the special information storage unit (44), and transmitting the special information to the facility apparatus (30), wherein
the facility program allows a computer to function as:
a facility information storage unit (34) for storing facility information about a facility; and
an information output unit (32) for transmitting user information received from the user device (20) and facility information stored in the facility information storage unit (34) to the management apparatus (40), acquiring the special information from the management apparatus (40), and outputting the acquired special information.

107. A facility program for allowing a computer to function as a facility apparatus (30) used for an information communication system (2),
the information communication system (2) including:
a facility apparatus (30) provided at a facility a user is able to visit;
a user device (20) possessed by a user that is structured to be capable of communicating with each facility apparatus (30) provided at each of a plurality of facilities and includes a user information storage unit (22, 24) and a special information transmission request unit (22), the user information storage unit (22, 24) being for storing user information about a user, the special information transmission request unit (22) being for transmitting facility information received from the facility apparatus (30) and user information stored in the user information storage unit (22, 24) to a management apparatus (40) and allowing the management apparatus (40) to transmit specified special information to the facility apparatus (30) used for the reception; and
a management apparatus (40) that is capable of communicating with at least one of the user device (20) and the facility apparatus (30) and includes a special information storage unit (44) and a special information transmission unit (42), the special information storage unit (44) being capable of storing special information about a plurality of users associated with a plurality of facilities, the special information transmission unit (42) being for verifying the user information and the facility information received from the user device (20), based on a verification result, acquiring special information as information appropriate to both a user corresponding to the received user information and a facility corresponding to the received facility information from a plurality of pieces of special information stored in the special information storage unit (44) , and transmitting the special information to the facility apparatus (30), wherein
the facility program allows a computer to function as a facility information storage unit (34) and an information output unit (32), the facility information storage unit (34) being for storing facility information about a facility, the information output unit (32) being for transmitting facility information stored in the facility information storage unit (34) to a user device (20) as a communication destination, acquiring the special information from the management apparatus (40), and outputting the special information.

108. A facility program for allowing a computer to function as a facility apparatus (30) used for an information communication system (7),
the information communication system (7) including:
a facility apparatus (30) provided at a facility a user is able to visit; and
a user device (20) possessed by a user, structured to be capable of communicating with each facility apparatus (30) provided at each of a plurality of facilities and including a special information storage unit (24) and a special information reply unit (22), the special information storage unit (24) being capable of storing special information about a user having the user device (20) associated with a plurality of facilities, the special information reply unit (22), based on facility information received from the facility apparatus (30), being for acquiring special information as information appropriate to both a user having the user device (20) and a facility corresponding to the received facility information from a plurality of pieces of special information stored in the special information storage unit (24), and transmitting the special information to the facility apparatus (30), wherein
the facility program allows a computer to function as a facility information storage unit (34) and an information output unit (32), the facility information storage unit (34) being for storing facility information about a facility, the information output unit (32) being for transmitting facility information stored in the facility information storage unit (34) to a the user device (20) as a communication destination, acquiring the special information from the user device (20), and outputting the special information.

109. A user program for allowing a computer to function as a user device (20) used for an information communication system (1) and structured to be capable of communicating with each facility apparatus (30) provided at each of a plurality of facilities,
the information communication system (1) including:
the user device (20) possessed by a user;
the facility apparatus (30) provided at a facility a user is able to visit and including a facility information storage unit (34) and a special information output unit (32), the facility information storage unit (34) being for storing facility information about a facility, the special information output unit (32) being for transmitting user information received from the user device (20) and facility information stored in the facility information storage unit (34) to a management apparatus (40), acquiring specified special information from the management apparatus (40), and outputting the acquired specified special information; and
the management apparatus (40) capable of communicating with at least one of the user device (20) and the facility apparatus (30), and including a special information storage unit (44) and a special information reply unit (42), the special information storage unit (44) capable of storing special information about a plurality of users associated with a plurality of facilities, the special information reply unit (42) being for verifying user information and facility information received from the facility apparatus (30), based on a verification result, acquiring special information as information appropriate to both a user corresponding to the received user information and a facility corresponding to the received facility information from a plurality of pieces of special information stored in the special information storage unit (44), and transmitting the special information to the facility apparatus (30),
wherein the user program allows a computer to function as:
a user information storage unit (22, 24) for storing user information about a user; and
a user information transmission unit (22) for transmitting user information stored in the user information storage unit (22, 24) to a facility apparatus (30) as a communication destination.

110. A user program for allowing a computer to function as a user device (20) that is used for an information communication system (2) and is structured to be capable of communicating with each facility apparatus (30) provided at each of a plurality of facilities,
the information communication system (2) including:
the user device (20) possessed by a user;
the facility apparatus (30) provided at a facility a user is able to visit, and including a facility information storage unit (34) and an information output unit (32), the facility information storage unit (34) being for storing facility information about a facility, the information output unit (32) being for transmitting facility information stored in the facility information storage unit (34) to a user device (20) as a communication destination, acquiring specified special information from a management apparatus (40), and outputting the special information;
the management apparatus (40) that is capable of communicating with at least one of the user device (20) and the facility apparatus (30) and includes a special information storage unit (44) and a special information transmission unit (42), the special information storage unit (44) being capable of storing special information about a plurality of users associated with a plurality of facilities, the special information transmission unit (42) being for verifying user information and the facility information received from the user device (20), based on a verification result, acquiring special information as information appropriate to both a user corresponding to the received user information and a facility corresponding to the received facility information from a plurality of pieces of special information stored in the special information storage unit (44) , and transmitting the special information to the facility apparatus (30), wherein
the facility program allows a computer to function as a user information storage unit (22, 24) and a special information transmission request unit (22), the user information storage unit (22, 24) being for storing user information about a user, the special information transmission request unit (22) being for transmitting the facility information received from the facility apparatus (30) and user information stored in the user information storage unit (22, 24) to the management apparatus (40) and allowing the management apparatus (40) to transmit the special information to the facility apparatus (30) used for the reception.

111. A user program for allowing a computer to function as a user device (20) that is used for an information communication system (7) and is structured to be capable of communicating with each facility apparatus (30) provided at each of a plurality of facilities,
the information communication system (7) including:
the user device (20) possessed by a user; and
the facility apparatus (30) provided at a facility a user is able to visit, and including a facility information storage unit (34) and an information output unit (32), the facility information storage unit (34) being for storing facility information about a facility, the information output unit (32) being for transmitting facility information stored in the facility information storage unit (34) to a user device (20) as a communication destination, acquiring specified special information from the user device (20), and outputting the special information, wherein
the user program allows a computer to function as a special information storage unit (24) and a special information reply unit (22), the special information storage unit (44) being capable of storing special information about a user having the user device (20) associated with a plurality of facilities, the special information reply unit (22), based on the facility information received from the facility apparatus (30), being for acquiring special information as information appropriate to both a user having the user device (20) and a facility corresponding to the received facility information from a plurality of pieces of special information stored in the special information storage unit (24) and transmitting the special information to the facility apparatus (30).

112. A management program for allowing a computer to function as a management apparatus (40) used for an information communication system (1),
the information communication system including:
a facility apparatus (30) provided at a facility a user is able to visit and including a facility information storage unit (34) and a special information output unit (32), the facility information storage unit (34) being for storing facility information about a facility, the special information output unit (32) being for transmitting user information received from a user device (20) and facility information stored in the facility information storage unit (34) to a management apparatus (40), acquiring specified special information from the management apparatus (40), and outputting the acquired special information;
the user device (20) possessed by a user, structured to be capable of communicating with each facility apparatus (30) provided at each of a plurality of facilities, and including a user information storage unit (22, 24) and a user information transmission unit (22), the user information storage unit (22, 24) being for storing user information about a user, the user information transmission unit (22) being for transmitting user information stored in the user information storage unit (22, 24) to a facility apparatus (30) for a communication destination; and
the management apparatus (40) capable of communicating with at least one of the user device (20) and the facility apparatus (30), wherein
the management program allows a computer to function as:
a special information storage unit (44) capable of storing special information about a plurality of users associated with a plurality of facilities; and
a special information reply unit (42) that verifies user information and facility information received from the facility apparatus (30), based on a verification result, acquires special information as information appropriate to both a user corresponding to the received user information and a facility corresponding to the received facility information from a plurality of pieces of special information stored in the special information storage unit (44), and transmits the acquired special information to the facility apparatus (30).

113. A management program for allowing a computer to function as a management apparatus (40) used for an information communication system (2),
the information communication system (2) including:
a facility apparatus (30) provided at a facility a user is able to visit, and including a facility information storage unit (34) and an information output unit (32), the facility information storage unit (34) being for storing facility information about a facility, the information output unit (32) being for transmitting facility information stored in the facility information storage unit (34) to a user device (20) as a communication destination, acquiring specified special information from a management apparatus (40), and outputting the special information;
the user device (20) possessed by a user, structured to be capable of communicating with each facility apparatus (30) provided at each of a plurality of facilities and including a special information storage unit (22, 24) and a special information transmission request unit (22), the special information storage unit (22, 24) being for storing user information about a user, the special information transmission request unit (22) being for transmitting facility information received from the facility apparatus (30) and user information stored in the user information storage unit (22, 24) to the management apparatus (40) and allowing the management apparatus (40) to transmit specified special information to the facility apparatus (30) used for the reception; and
the management apparatus (40) capable of communicating with at least one of the user device (20) and the facility apparatus (30), wherein
the management program allows a computer to function as a special information storage unit (44) and a special information transmission unit (42), the special information storage unit (44) being capable of storing special information about a user having the user device (20) associated with a plurality of facilities, the special information transmission unit (42) being for verifying the user information and the facility information received from the user device (20), based on a verification result, acquiring special information as information appropriate to both a user corresponding to the received user information and a facility corresponding to the received facility information from a plurality of pieces of special information stored in the special information storage unit (44), and transmitting the special information to the facility apparatus (30).

114. A vehicle program for allowing a computer to function as a vehicle apparatus (10) used for an information communication system (8),
the information communication system (8) including:
a user device (20) possessed by a user;
a facility apparatus (30) provided at a facility a user is able to visit; and
the vehicle apparatus (10) mounted on a vehicle communicable with the user device (20), wherein the user device (20) is structured to be capable of communicating with each facility apparatus (30) provided at each of a plurality of facilities and includes a user information storage unit (22, 24) for storing status information received from the vehicle apparatus (10) as user information indicating a user status; and
an information output unit (22) that outputs special information appropriate to a facility possessing the facility apparatus (30) among special information specified based on user information stored in the user device (20) under a condition that the user device (20) and any facility apparatus (30) initiate or maintain communication ; and
the vehicle program allows a computer to function as:
a status detection unit (12) for detecting a status of at least one of a user in a vehicle and the vehicle; and
a vehicle transmission unit (12) for transmitting status information indicating a status detected by the status detection unit (12) to the user device (20).
